# FASCICULE DE BREVET EUROPEEN

(11) **EP 1 907 876 B1**
(45) Date de publication et mention de la délivrance du brevet: **03.11.2010**
(21) Numéro de dépôt: 06764252.0
(22) Date de dépôt: 21.07.2006
(51) Int. Cl.: G01S 1/68, G01S 1/00, G01S 5/14

(54) **EQUIPEMENT MOBILE, PROCEDE ET SYSTEME DE POSITIONNEMENT D'UN EQUIPEMENT MOBILE**
MOBILGERÄTE, VERFAHREN UND SYSTEM ZUR POSITIONSBESTIMMUNG EINES MOBILGERÄTS
MOBILE EQUIPMENT, METHOD AND SYSTEM FOR POSITIONING A MOBILE EQUIPMENT

(30) Priorité: 22.07.2005 FR 0507823
(43) Date de publication de la demande: 09.04.2008
(73) Titulaire: Pole Star, 31100 Toulouse (FR)
(72) Inventeur: PONCELET, Michèle, F-31470 Fonsorbes (FR); CARLE, Christian, F-31840 Seilh (FR)
(74) Mandataire: Ilgart, Jean-Christophe
(86) Numéro de dépôt international: PCT/EP2006/064542
(87) Numéro de publication internationale: WO 2007/010048

(56) Documents cités:
- EP-B- 0 903 589
- US-A- 6 031 487
- US-A- 6 138 074
- US-B1- 6 449 558
- US-B1- 6 813 500

## Description

La présente invention concerne un équipement mobile, un procédé et un système de positionnement d'un équipement mobile visant à augmenter la couverture et les performances d'un service de positionnement, ledit service étant fourni par une infrastructure, dite système de positionnement, extérieure à l'invention et comprenant une pluralité de sources émettrices de signaux de télémétrie, aussi appelés signaux de positionnement, générés à partir d'horloges stables ou de sources auto synchronisées. En particulier, l'invention s'applique aux domaines d'utilisation des systèmes globaux de radio navigation par satellites, sans que cela soit une limite de l'invention.

On connaît différents systèmes de télémétrie basés sur des mesures de temps de propagation, et utilisant la constance de la vitesse de la lumière pour passer du domaine temporel au domaine spatial. Ils utilisent des marqueurs temporels, sous forme d'un code de télémétrie, qui sont émis dans le canal de propagation et peuvent être reconnus en réception après un trajet simple, ou double si un réflecteur ou transpondeur est utilisé. Les datations sur une même échelle de temps local des instants d'émission et de réception de ces marqueurs permettent d'atteindre la distance séparant l'émetteur du récepteur, ou le double de la distance émetteur-récepteur et réflecteur. La précision de la distance obtenue grâce à ces systèmes dépend en particulier de la raideur impulsionnelle du marqueur temporel dans le code de télémétrie, donc de la largeur de bande utilisée tout au long de la chaîne de transmission, de l'émetteur au récepteur en passant par le canal de propagation. L'intégrité de la télémétrie dépend de la qualité de ligne directe du canal de propagation, en visibilité géométrique plutôt que multi trajet, réfraction ou diffraction et de l'absence d'erreur dans la reconnaissance du code de télémétrie. La disponibilité de la télémétrie dépend de l'absence de masquage, d'atténuation ou d'absorption totale du signal sur le chemin géométrique.

On connaît également différents systèmes de positionnement et/ou de navigation qui utilisent des opérations de trilatération ou triangulation à partir d'une pluralité de mesures de télémétrie émanant d'une pluralité de sources bien réparties dans l'espace géométrique à considérer. La précision du positionnement obtenu grâce à ces systèmes de positionnement dépend de la diversité géométrique des sources, de la précision de télémétrie de chacune des mesures à partir de ces sources, et finalement de la précision de positionnement des sources elles mêmes. L'intégrité du positionnement obtenu au final par l'utilisateur du système dépend de l'intégrité de chacune des mesures de télémétrie et de leur redondance dans l'observabilité spatiale (ou géométrique). La disponibilité du positionnement, pour l'utilisateur, dépend évidemment de la disponibilité d'une pluralité de sources de télémétrie bien réparties géométriquement, en tout point de la couverture du lieu où l'utilisateur a à se positionner, et de la disponibilité de leurs signaux, en visibilité directe et avec une puissance suffisante à la réception.

Parmi ces systèmes de positionnement, on retient à titre d'exemples préférentiels les plus globaux et les plus restreints d'entre eux en terme de couverture, à savoir les systèmes globaux de navigation par satellites (acronyme GNSS) d'une part pour une couverture mondiale, et les réseaux d'émetteurs récepteurs ultra large bande, d'autre part, typiquement utilisés pour la couverture d'un bâtiment.

D'autres systèmes et en particulier les systèmes et réseaux cellulaires de téléphonie, ou autres réseaux de télécommunication, Wi-Fi, Bluetooth offrent aussi un potentiel pour le positionnement télémétrique du fait du nombre de sources émettrices et de la largeur de bande de leurs signaux. Cependant, la fonction de télémétrie n'est pas leur fonction principale, et leurs signaux utilisent le potentiel de cette ressource fréquentielle pour passer un débit de données informatives qui va à l'encontre de la précision de télémétrie. Dans ces conditions ils n'offrent pas les performances optimales en positionnement à puissance de signal équivalente.

La couverture mondiale des systèmes de positionnement à précision métrique est obtenue grâce aux systèmes globaux de navigation par satellites, dits GNSS, comme GPS (, acronyme de Global Positioning System pour système global de positionnement), GLONASS, et les futurs systèmes comme Galileo, Beidou, Compass , QZSS Ils offrent une pluralité redondante de sources de mesures télémétriques en orbite autour de la terre, apportant ainsi, pour le besoin de positionnement, une diversité géométrique favorable sur l'ensemble du globe. La qualité de leurs modèles orbitaux, la stabilité de leurs horloges, et la raideur impulsionnelle des marqueurs temporels de leurs signaux télémétriques, émis spécifiquement par leurs satellites, dit signaux de navigation, en font des systèmes majeurs dans la résolution du problème de positionnement géographique sur la terre, base du problème antique de la navigation ou encore du problème actuel de la mobilité. Les performances de précision et de disponibilité de positionnement obtenues grâce à ces systèmes sont de l'ordre de 5 à 10 m en 3 dimensions à 99% partout dans le monde en ciel ouvert. La simplicité d'utilisation de ces signaux, pour un utilisateur muni d'un simple récepteur GNSS de ces signaux, a autorisé un déploiement phénoménal des applications basées sur l'utilisation de ces sources de télémétries, que ce soit pour le positionnement et la localisation d'équipements ou d'êtres humains dans un même référentiel spatiotemporel, de la navigation et du guidage de véhicules, de la synchronisation d'équipements distants, de la détermination d'attitude d'engins, du géo référencement précis de toute sorte de phénomènes ou infrastructures, et d'autres applications encore.

Cependant, les systèmes GNSS émettent des signaux de faibles puissances lorsqu'ils atteignent la terre, et du fait de l'étalement du spectre utilisé, ils sont noyés dans le bruit. La technique de désétalement du spectre, par corrélation avec une réplique du code de télémétrie, dans le traitement de signal du récepteur, apporte un gain de traitement, dit gain d'étalement, qui permet de ramener un rapport signal sur bruit favorable à la reconnaissance des fronts de modulation du signal, ces derniers étant à l'origine de la lecture du temps d'émission. Mais il existe peu de marge entre le gain d'étalement disponible et celui qui est nécessaire, si bien que ces systèmes sont peu disponibles dans des environnements difficiles tels que les canyons urbains ou à l'intérieur de bâtiments où les signaux utilisés, d'une vingtaine de MHz en bande L ou C, sont très atténués par l'environnement du récepteur. De plus, la présence dans ces lieux des multi trajets, liés aux phénomènes de réflexion et de diffraction, que subissent séparément les signaux satellites, altère la précision et l'intégrité du positionnement.

Ces défauts réduisent nettement les performances du positionnement GNSS en regard des performances obtenues en ciel clair, que ce soit en terme de précision, de disponibilité, d'intégrité ou de continuité de service, et en conséquence complexifie largement les méthodes à mettre en oeuvre dans le grand nombre d'applications qui veulent offrir leurs services en tout environnement, de l'environnement rural, à l'environnement souterrain, en passant par le centre d'une vieille ville, ou un bâtiment quelconque.

Le document US 6,054,950 décrit un système de positionnement local, de grande précision, basé sur la trilatération de signaux télémétriques à partir d'une pluralité de sources fixes émettant des signaux de télémétrie pulsés en ultra large bande vers un récepteur capable de la résolution de position. Ce document annonce une couverture de plusieurs kilomètres et peut fonctionner dans des zones construites compte tenu des propriétés de propagation des signaux ultra large bande utilisés. Le système décrit ne nécessite pas d'horloges stables mais utilise un signal pulsé de synchronisation émis par l'une des sources, pouvant servir à synchroniser les autres sources et/ou servir de pivot sur des calculs de différences de temps d'arrivée.

Le document US 6,707,424 décrit un système qui intègre les deux systèmes de positionnement et de navigation dans une seule unité qui peut être utilisée en ciel clair ou hors de la visibilité des satellites. Dans ce document, le récepteur GNSS est intégré à un récepteur TM-UWB (acronyme de Time Modulated Ultra Wide Band pour Ultra Large Bande modulée en temps) qui travaille avec une pluralité de balises fixes de position connues. Le document décrit une méthode et une logique de passage d'un des systèmes de positionnement à l'autre.

Ces deux méthodes permettent des positionnements dans des zones mal couvertes par GNSS et la deuxième permet d'atteindre une augmentation de la couverture des GNSS vers des zones couvertes, mais demande une infrastructure conséquente, avec la nécessité de déployer au moins quatre balises pour couvrir n'importe quelle zone, un grand nombre de nouveaux signaux et n'offre pas une transparence adéquate entre les deux systèmes.

D'autres méthodes sont citées rapidement, qui tentent d'augmenter la couverture et la disponibilité de la fonction de positionnement par satellite. On parle en premier lieu des pseudolites. Ce sont des générateurs de signaux de même type que les satellites, en ce sens qu'ils ont une source horloge de très haute qualité, synchronisée au temps système GNSS, et une structure de signal équivalente en porteuse code et données, respectant les mêmes proportionnalités. Ils apportent de nouvelles sources de mesures et ont l'avantage de ne pas nécessiter de modifications (ou peu) au niveau du récepteur. Mais, ils demandent une infrastructure chère, en particulier à cause du besoin d'horloge, ne sont pas adaptés pour résoudre le besoin d'une ville ou d'un bâtiment sauf à en multiplier leur nombre, et surtout ils causent des problèmes d'effets « proche-lointain » dans la réception qui causent aux récepteurs GNSS de nouveaux problèmes de réception pour les signaux satellites directs. Pour réduire ces effets « proche-lointain » au niveau du récepteur, ils sont rendus pulsés, mais en conservant la mise en forme code porteuse, de telle sorte que la propagation n'en est pas réellement améliorée.

On parle en deuxième lieu des relais de signaux GNSS. Dans ce cas, les signaux satellites passent par un système transparent, c'est-à-dire sont reçus et amplifiés directement pour être retransmis, sans analyse des signaux. Ces systèmes ne posent pas le problème d'effet « proche lointain » s'ils sont placés dans un lieu confiné, dans la mesure où tous les signaux de satellites sont retransmis en même temps. Mais ils ne permettent pas la transition avec un ou plusieurs satellites reçus directement, donc n'offrent pas la transparence de la transition d'un système direct à un système relayé.

On classe dans une troisième catégorie tous les systèmes dits GNSS assistés (par exemple décrits dans les documents WO 9733382, ou WO2004/008170), qui supposent un transfert de données liées aux systèmes GNSS et qui, liés à une très nette augmentation des ressources de calcul intégrables dans le récepteur, permettent une très nette amélioration de la sensibilité du récepteur GNSS, jusqu'à un gain de presque 30 dB. Ces techniques sont basées sur l'utilisation d'un moyen de télécommunications numériques. Les techniques dérivées sont très nombreuses et ne sont pas déclinées ici. L'augmentation de sensibilité du récepteur améliore la disponibilité en ville et dans les bâtiments, réduisant en particulier les temps d'acquisition, mais ne traite pas les problèmes de multi trajets donc de précision et d'intégrité. Leurs défauts tiennent aussi à la dépendance d'un réseau de communications numériques, et le plus souvent à un lien personnalisé entre le réseau et l'utilisateur, donc un lien saturable, gourmand en débit de données, et qui peut être trop latent pour un grand nombre d'utilisateurs mobiles de dynamique moyenne à forte.

Enfin dans un autre registre, on connaît les applications GNSS qui utilisent l'hybridation des mesures des satellites en visibilité directe avec des mesures provenant d'autres systèmes radio (LORAN, TV..), ou inertielles ou altimétriques dans des algorithmes plus ou moins complexes d'hybridation. Le défaut de ces solutions est de ramener autant de défauts inconnus de senseurs que de mesures et, sauf à utiliser des capteurs de très haute qualité donc très chers, ils augmentent le rang du système d'inconnues à résoudre. En effet les mesures combinées ne sont pas homogènes (mesures radio non synchronisées, mesures de vitesse et cap au lieu de mesures de distances, ou encore mesures barométriques) et ne répondent pas au même type de propagations d'erreurs, ce qui complexifie nettement la problématique. De plus, toutes ces solutions posent des problèmes d'installation et de maintenance, et quelque fois de sérieux sauts de positions entre le positionnement pur GNSS et le positionnement hybride.

La présente invention vise à remédier à ces inconvénients.

Les inconvénients, que la présente invention permet de pallier, concernent plus généralement les défauts de disponibilité, de précision et d'intégrité d'une solution de positionnement, basée sur des signaux de positionnement provenant d'une pluralité de sources, dans un environnement où des atténuations, masquages et multi trajets peuvent intervenir sur les chemins géométriques.

A cet effet, selon un premier aspect, la présente invention vise un équipement mobile, qui comporte :
- un moyen de réception de signaux de positionnement provenant directement d'une pluralité de sources de tels signaux,
- un moyen de réception de signaux de positionnement relayés provenant d'équipements mobiles homologues,
- un moyen de traitement adapté à traiter au moins une partie des signaux reçus par les moyens de réception, pour fournir une position dudit équipement mobile,
- un moyen de génération d'au moins un signal de positionnement relayé, et
- un moyen d'émission de chaque signal de positionnement relayé généré par le moyen de génération.

Grâce à ces dispositions, l'équipement mobile peut étendre la zone de couverture du service de positionnement qu'il utilise lui-même pour se positionner, et ses performances en disponibilité de positionnement à des équipements mobiles homologues, également utilisateurs du service, dans des zones où les sources ne sont pas en visibilité directe, ou dans des zones où les signaux sont trop atténués.

Selon des caractéristiques particulières, l'équipement mobile reçoit directement les signaux de positionnement d'au moins une source de signal de positionnement appartenant à au moins un système global de navigation par satellites.

Grâce à ces dispositions, l'équipement mobile peut se positionner dans un repère géo référencé, utiliser un système à couverture mondiale et bénéficier d'un temps précis référencé au temps universel coordonnée et en étendre les performances en disponibilité à des équipements mobiles homologues qui ne sont pas en visibilité directe d'un nombre de satellites suffisant au positionnement.

Selon un deuxième aspect, la présente invention vise un procédé de positionnement d'un équipement mobile, qui comporte :
- une étape de réception de signaux de positionnement provenant directement d'une pluralité de sources de tels signaux,
- une étape de réception de signaux de positionnement relayés provenant d'équipements mobiles homologues,
- une étape de traitement d'au moins une partie des signaux reçus par les moyens de réception, pour fournir une position dudit équipement mobile,
- une étape de génération d'au moins un signal de positionnement relayé, et
- une étape d'émission de chaque signal de positionnement relayé généré.

Les avantages, buts et caractéristiques de ce procédé étant similaires à ceux de l'équipement mobile tel que succinctement exposé ci-dessus, ils ne sont pas rappelés ici.

Selon des caractéristiques particulières, lesdits signaux de positionnement relayés sont des signaux pulsés.

Grâce à ces dispositions, l'équipement mobile émet une puissance réduite, peu interférente avec la réception directe des signaux de positionnement.

Selon des caractéristiques particulières, lesdits signaux de positionnement relayés sont des signaux multi-source.

Grâce à ces dispositions, un seul équipement mobile étend la zone couverture de plusieurs sources dans un même signal, pour des zones où les sources sont masquées.

Selon des caractéristiques particulières, lesdits signaux de positionnement relayés sont des signaux multi synchrones.

Grâce à ces dispositions, les signaux relayés transportent les informations essentielles du positionnement, à savoir l'échelle de temps d'une source, information non atteignables par d'autres moyens, à la différence des messages d'informations qu'elles portent sur leur position par exemple, et qui peuvent être relayés par des moyens de communication.

Selon des caractéristiques particulières, lesdits signaux de positionnement relayés portent des messages d'informations sur le positionnement ou la synchronisation des sources.

Grâce à ces dispositions, un seul signal relayé porte l'information complète nécessaire à l'utilisation du service de positionnement

Selon des caractéristiques particulières, lesdits signaux de positionnement relayés portent des informations de corrections spatiotemporelles à appliquer aux signaux de positionnement reçus directement par les sources.

Grâce à ces dispositions, des améliorations de performance de précision du service de positionnement sont accessibles aux équipements mobiles homologues.

Selon des caractéristiques particulières, les signaux de positionnement relayés contiennent des informations sur l'intégrité des performances des signaux de positionnement émis par lesdites sources.

Grâce à ces dispositions, des améliorations de performance d'intégrité du service de positionnement sont accessibles aux équipements mobiles homologues.

Selon des caractéristiques particulières, les signaux de positionnement relayés portent des informations sur l'intégrité de la réception locale d'au moins un signal de positionnement émis par au moins une source, calculées au niveau dudit équipement mobile et /ou au niveau d'un équipement mobile homologue.

Grâce à ces dispositions, des améliorations de performance d'intégrité du service de positionnement sont accessibles aux équipements mobiles homologues.

Selon des caractéristiques particulières, les signaux de positionnement relayés portent des informations sur l'intégrité locale du service de positionnement fourni par un ensemble cohérent de sources, calculées au niveau dudit équipement mobile et /ou au niveau d'un équipement mobile homologue.

Grâce à ces dispositions, des améliorations de performance d'intégrité du service de positionnement sont accessibles aux équipements mobiles homologues.

Selon des caractéristiques particulières, les informations sur l'intégrité locale correspondent à un indice de confiance négocié entre équipements mobiles homologues.

Grâce à ces dispositions, le système est adaptable aux besoins des équipements mobiles homologues en terme de performance d'intégrité.

Selon des caractéristiques particulières, ladite étape de traitement réalise une estimation de la vitesse dudit équipement mobile.

Grâce à ces dispositions, un service de surveillance de vitesse ou de guidage à distance ou encore de déplacements en formation peut être initialisé entre équipements mobiles homologues.

Selon des caractéristiques particulières, ladite étape de traitement réalise une estimation d'une horloge virtuelle composite calculée grâce à au moins une partie des informations traitées sur les signaux de positionnement reçus de sources appartenant à un réseau cohérent de sources, qu'ils soient reçus directement des sources ou relayés par des équipements mobiles homologues.

Grâce à ces dispositions, un service de dissémination du temps peut être initialisé entre équipements mobiles homologues.

Selon des caractéristiques particulières, ladite étape de traitement réalise un positionnement hybride grâce à tous les signaux de positionnement reçus, qu'ils soient reçus directement des sources ou relayés par des équipements mobiles homologues.

Grâce à ces dispositions, des améliorations de performance et de disponibilité du service de positionnement sont accessibles aux équipements mobiles homologues.

Selon des caractéristiques particulières, ladite étape de traitement réalise une estimation hybride de la vitesse grâce à tous les signaux de positionnement reçus, qu'ils soient reçus directement des sources ou relayés par des équipements mobiles homologues.

Grâce à ces dispositions, un service de surveillance de vitesse ou de guidage à distance ou encore de déplacements en formation peut être initialisé entre équipements mobiles homologues.

Selon des caractéristiques particulières, les signaux de positionnement relayés portent les informations de position et/ou vitesse et/ou horloge virtuelle composite dudit équipement mobile, calculées par ladite étape de traitement.

Grâce à ces dispositions, un service de surveillance de vitesse ou de guidage à distance ou encore de déplacements en formation peut être initialisé entre équipements mobiles homologues.

Selon des caractéristiques particulières, ladite étape de traitement évalue la performance en précision et intégrité de sa propre estimation de position et/ou de vitesse et/ou d'horloge virtuelle composite calculées, ladite évaluation de performance étant établie selon un indice de confiance négocié entre équipements mobiles homologues.

Grâce à ces dispositions, des améliorations de performance d'intégrité du service de positionnement sont accessibles aux équipements mobiles homologues.

Selon des caractéristiques particulières, les signaux de positionnement relayés portent les informations de position et/ou vitesse et/ou horloge virtuelle composite dudit équipement mobile, calculées par ladite étape de traitement, seulement lorsque ladite évaluation de performance est au dessus d'un seuil négocié avec les équipements mobiles homologues.

Grâce à ces dispositions, des améliorations de performance d'intégrité et de disponibilité du service de positionnement sont accessibles aux équipements mobiles homologues.

Selon des caractéristiques particulières, ladite étape de traitement réalise une estimation des positions et/ou vitesses des équipements mobiles homologues sur réception des signaux de positionnement relayés que lesdits équipements mobiles homologues émettent.

Grâce à ces dispositions, des améliorations de performance d'intégrité et de disponibilité du service de positionnement sont accessibles aux équipements mobiles homologues.

Selon des caractéristiques particulières, les signaux de positionnement relayés portent les informations de position des équipements mobiles homologues, calculées par ladite étape de traitement.

Grâce à ces dispositions, des améliorations de performance d'intégrité et de disponibilité du service de positionnement sont accessibles aux équipements mobiles homologues.

Selon des caractéristiques particulières, ladite étape de traitement évalue la performance en précision et intégrité des positions et/ou vitesses des équipements mobiles homologues qu'elle estime, ladite évaluation de performance étant établie selon un indice de confiance négocié entre équipements mobiles homologues.

Grâce à ces dispositions, des améliorations de performance d'intégrité et de disponibilité du service de positionnement sont accessibles aux équipements mobiles homologues.

Selon des caractéristiques particulières, les signaux de positionnement relayés portent les informations de position des équipements mobiles homologues, calculées par ladite étape de traitement, seulement lorsque ladite évaluation de performance est au dessus d'un seuil négocié avec les équipements mobiles homologues.

Grâce à ces dispositions, des améliorations de performance d'intégrité et de disponibilité du service de positionnement sont accessibles aux équipements mobiles homologues.

Selon des caractéristiques particulières, l'étape d'émission comprend l'émission de la position et/ou de la vitesse calculées lors de l'étape de traitement vers un moyen de stockage et d'analyse de données distant.

Grâce à ces dispositions, un service de surveillance de vitesse ou de guidage à distance ou encore de déplacements en formation peut être initialisé entre équipements mobiles homologues.

Selon des caractéristiques particulières, l'étape d'émission utilise la technique Ultra Large bande comme moyen d'émission du signal de positionnement relayé.

Grâce à ces dispositions, la résolution temporelle des signaux de positionnement relayés est très bonne et autorise le discernement des multi-trajets.

Selon des caractéristiques particulières, l'étape d'émission utilise une bande de fréquence très large, typiquement 100 MHz dans des bandes réglementairement allouées aux services de radionavigation par satellite, services de radionavigation aéronautiques ou bien de radiolocalisation comme moyen d'émission du signal de positionnement relayé.

Grâce à ces dispositions, la transmission utilise des bandes assez larges pour la résolution temporelle et protégée pour des services liés à la sécurité de la vie.

Selon un troisième aspect, la présente invention vise un système comportant au moins deux équipements mobiles homologues tels que succinctement exposés ci-dessus mettant en oeuvre un procédé tel que succinctement exposé ci-dessus.

Grâce à ces dispositions, des réseaux d'équipements mobiles peuvent être formés.

Les avantages, buts et caractéristiques de ce système étant similaires à ceux de l'équipement mobile et du procédé succinctement exposés ci-dessus, ils ne sont pas rappelés ici.

D'autres avantages, buts et caractéristiques de la présente invention ressortiront de la description qui va suivre, faite, dans un but explicatif et nullement limitatif, en regard des dessins annexés dans lesquels :
- la figure 1 représente, schématiquement et dans une vue globale, l'ensemble des modes de réalisations particuliers des procédés et des dispositifs mis en jeu selon l'invention,
- la figure 2 représente, schématiquement, des éléments mis en oeuvre dans un mode de réalisation particulier des équipements mobiles positionnés en réseau ad hoc,
- la figure 3 représente, schématiquement, les interfaces et les étapes du procédé relais pulsé multi synchrone multi-source ,
- la figure 4 est une alternative de la figure 3 et représente, schématiquement, les interfaces et les étapes du procédé relais avec intégration de données externes,
- la figure 5 représente, schématiquement, sous forme de chronogramme, la génération d'une pulsation canal, dans un mode particulier de réalisation,
- la figure 6 détaille, schématiquement, les fonctions d'un canal dans l'étape de traitement multicanaux et dans un mode de réalisation particulier, avec cohérence code porteuse,
- la figure 7 illustre, schématiquement, la surimpression du message de navigation sur la génération de pulsation canal,
- la figure 8 illustre, schématiquement, la surimpression d'un motif de synchronisation pour une meilleure détection et synchronisation au niveau du destinataire,
- la figure 9 illustre, schématiquement, la surimpression d'un identificateur de source,
- la figure 10 montre le cas de surimpression d'un compteur d'époque qui peut faciliter la restitution d'un TOA ou TDOA au niveau du destinataire,
- la figure 11 illustre, schématiquement, la surimpression du message de navigation et/ou d'autres données externes,
- la figure 12 illustre le traitement parallèle multi source ou multi aérien,
- la figure 13 illustre le traitement multiplexé des canaux multi source ou multi aérien,
- la figure 14 identifie, schématiquement, les dispositifs de localisation à distance d'un relais pulsé multi synchrone et multi-source et/ou de détermination d'attitude,
- la figure 15 représente, schématiquement, les interfaces et les moyens du dispositif de localisation à distance d'un relais pulsé multi synchrone et multi-source,
- la figure 16 détaille la progression des étapes mises en oeuvre dans le procédé de localisation à distance d'un relais pulsé multi synchrone et multi-source,
- la figure 17 représente un exemple de système mis en oeuvre pour une gestion de flotte étendue d'un ensemble d'équipements à localiser,
- les figures 18 et 19 représentent des exemples d'utilisation opérationnelle du dispositif de positionnement hybride aidé par le relais pulsé multi synchrone multi-source, la figure 18 pour une utilisation à l'intérieur d'un bâtiment, la figure 19 en milieu urbain,
- la figure 20 représente schématiquement les moyens mis en oeuvre dans l'utilisation d'un dispositif de positionnement hybride aidé par relais pulsé multi synchrone multi-source,
- la figure 21 représente schématiquement les étapes mises en oeuvre par le procédé de positionnement hybride aidé par relais pulsé multi synchrone multi-source,
- la figure 22 représente schématiquement un mode de réalisation particulier des étapes de traitement hybride multicanaux et d'identification et positionnement des sources,
- la figure 23 détaille un mode de réalisation particulier d'hybridation serrée dans l'étape de traitement hybride multicanaux, pour le cas des sources communes
- la figure 24 représente les moyens mis en oeuvre dans le dispositif de positionnement en réseau ad hoc et
- la figure 25 représente schématiquement les étapes mises en oeuvre dans le procédé de positionnement en réseau ad hoc.

Dans la suite du présent document, on parle des « signaux de positionnement », ce terme étant préféré à celui de « signal de navigation » comme habituellement utilisé dans le domaine GNSS ou à celui de signal de télémétrie, dans la mesure où le positionnement est notre but final, plutôt que la seule distance entre deux points, ou la navigation d'un point à un autre.

Le « service de positionnement » est obtenu grâce à l'émission, par lesdites « sources », de signaux de positionnement. Dans le cas de GNSS, les sources sont évidemment les charges utiles des satellites. Une source GNSS peut combiner l'émission de plusieurs signaux GNSS, sur une même porteuse ou sur plusieurs porteuses, générés par une même horloge et émis au même centre de phase antenne. Certains de ces signaux de positionnement portent en plus de la modulation temporelle du code de télémétrie, une information, dite « message » ou « message de navigation » dans la présente invention, qui permet, entre autres informations, d'informer l'utilisateur des paramètres du modèle à utiliser pour synchroniser l'horloge génératrice d'un signal avec l'horloge virtuelle composite du système, et également des paramètres du modèle orbital qui permet de localiser les satellites, en l'occurrence les sources, et en particulier de calculer précisément leur position à un instant d'émission donné. Certains de ces messages portent aussi une information d'intégrité du signal de positionnement.

Chaque signal élémentaire émis par un satellite appartenant aux constellations GNSS répond à cette définition des signaux de positionnement. Le service de positionnement est, par exemple dans le cas de Galileo le service dit « Safety of Life » ou dans le cas de GPS (, acronyme de Global Positioning system pour système global de positionnement), le service SPS (acronyme de Standard Positioning Service). Dans ce dernier exemple, le signal de positionnement est ainsi le signal dit C/A fréquence L1 à 1575,42 MHz (acronyme de Coarse Acquisition pour acquisition préliminaire). Chaque signal élémentaire de Galileo répond également à cette définition, pareillement pour GLONASS, BEIDOU, (et leurs augmentations EGNOS (acronyme de European Global Navigation Overlay System pour système européen de recouvrement de la navigation globale), WAAS (acronyme de Wide Area Augmentation System pour système d'augmentation à large échelle), MTSAT (acronyme de multi Transport satellite pour satellite multi transports), pseudolites.

Un système fournissant une télémétrie optique est également applicable à l'invention dans la mesure où des structures de signal de télémétrie numériques équivalentes en bande de base sont utilisées et où la principale différence entre transmission radio et optique tiendrait aux ressources fréquentielles utilisées pour le canal de transmission, et à la nature de l'émetteur et du récepteur. De ce fait, dans la suite du document, et en particulier dans les revendications, on nomme globalement « moyen d'émission », ou « émetteur » et « émission », l'ensemble des éléments de la chaîne d'émission et des procédés qui, partant d'un signal numérique donné en bande de base, l'amènent jusqu'au canal de propagation dans la chaîne d'émission, y compris antenne ou laser, ou tout autre moyen adéquat à faire propager l'information. On nomme globalement « capteur de réception » ou « récepteur » et « réception », l'ensemble des éléments de la chaîne de réception et leurs procédés qui, partant d'un signal ayant terminé sa propagation dans le canal, est reçu, typiquement par une antenne ou une cellule optique dit « capteur » dans ce document, est prétraité en amplification et filtrage, converti en bande de base et finalement numérisé pour un futur traitement numérique du signal. Ce traitement numérique, dit traitement « canal » chaque fois qu'il ne traite que du signal émis, à l'origine, que par une seule source d'une constellation de sources reçues dans un unique canal de transmission, a pour rôle de réaliser la « détection » du signal visant à récupérer son énergie au-delà de l'énergie du bruit ambiant dans lequel il est reçu, à en extraire la « synchronisation » pour une minimisation des interférences inter bribes de code ou inter symbole et/ou une « datation » dans l'échelle locale de temps et finalement la « démodulation » visant à retrouver une information, la valeur du compteur transmis par exemple.

On appelle « signal numérique en bande de base », un signal qui possède une occupation spectrale élémentaire définie, grâce à une « mise en forme temporelle », correspondant à une caractéristique de combinaison front montant ou descendant, et une structure informative définie à la fois par une donnée en binaire et un codage élémentaire pour le 0 et pour le 1. On suppose que le service de télémétrie est basé sur une séquence binaire pseudo-aléatoire, nommé dans le document «code de télémétrie » connue de l'émetteur et du récepteur et reconnaissable par le récepteur pour une « datation » précise de sa réception dans une échelle de temps locale. On appelle « échelle de temps » un axe ordonné marqué d'une origine et d'un vecteur unitaire, ou « unité d'horloge », sur lequel on peut mesurer les durées entre deux événements, ou entre l'origine et un événement. On étend cette notion mathématique à une notion propre au monde de la mesure des temps où l'origine absolue a peu d'importance et où le vecteur unitaire est aussi variable que la fréquence de l'oscillateur, dit « horloge » qui permet de le matérialiser. On dit qu'une horloge est stable si, dans la durée moyenne de l'expérimentation considérée, le vecteur unitaire peut être considéré comme constant, à la tolérance de précision près de la mesure. On parle d'horloge virtuelle composite, pour une échelle de temps, presque mathématique, générée à partir d'un filtrage de plusieurs mesures unitaires provenant de plusieurs horloges afin d'en moyenner les instabilités. On parle de « sources cohérentes » lorsqu'elles appartiennent à une même « constellation », c'est-à-dire qu'elles sont telles que l'utilisateur de ces sources peut atteindre, de façon physique (horloges synchronisées) ou bien après correction mathématique des mesures (horloges GNSS), une échelle de temps virtuelle composite stable. Les constellations GNSS sont de ce type puisque le temps système GNSS correspond à cette échelle de temps virtuelle composite, par rapport auquel toutes les instabilités d'horloges satellites sont calibrées, puis transférées à l'utilisateur sous la forme d'un modèle de correction modulé dans le signal de positionnement. La restitution physique par un récepteur GNSS de cette unité de temps virtuelle composite est appelée dans le document TMP ( acronyme de Time Mark Pulse pour marqueur de temps pulsé).

Les transitions du code de télémétrie à l'émission, qu'on appelle aussi dans ce document les « marqueurs temporels » du signal, sont dits représentatifs de l'unité de temps, ou de l'horloge de la source, nom donné à l'oscillateur qui à travers divers facteurs multiplicatifs ou diviseurs a participé à la génération du code de télémétrie. Comme dans le cas de certains systèmes GNSS, cette séquence pseudo aléatoire a pu en même temps être utilisée pour la technique d'accès multiple, qui permet aux sources de partager un même canal de transmission, dans un multiplexage des sources radio à répartition de codes, à répartition de fréquence, ou encore de temps. A l'inverse, tout système utilisant cette technique autorise une télémétrie, bien que souvent imprécise ou non cohérente. Dans ce document, on parle d'accès multiple pour cette fonction spécifique. Au contraire, on utilise respectivement les termes de multiplexage et démultiplexage chaque fois qu'il s'agit des opérations de télémétrie, spécifiques à l'invention, qui vont permettre respectivement de combiner temporellement plusieurs échelles de temps, signaux télémétriques, chaque échelle de temps représentant respectivement les événements unités d'une source, pour une émission unique dans le même canal de transmission, et de séparer les différentes échelles de temps à la réception.

Lesdites sources sont déployées dans une diversité géométrique, réputée suffisante pour que ledit système de positionnement offre un service de positionnement avec une dilution de précision faible donc des performances satisfaisantes dans sa zone de couverture, dès lors que les visibilités directes sont possibles entre sources émettrices et réceptrices. Le besoin en terme de diversité géométrique dépend essentiellement de la mobilité de l'utilisateur final du positionnement et en particulier du nombre de ses degrés de liberté. On distingue, à cet effet, les degrés de liberté du positionnement du centre de gravité d'un solide, des degrés de liberté du positionnement d'un point quelconque du solide. Dans le premier cas, le besoin en diversité géométrique dépend du besoin en résolution, ou nombre d'états inconnus ou variables du système dans le domaine position : 1D+T (1 dimension + le temps) pour un véhicule assujetti à une ligne, un train par exemple, 2D+T pour un véhicule assujetti à un plan, un bateau, par exemple, 3D+T pour un véhicule non assujetti, un avion par exemple. Dans le second cas, le nombre de degrés de liberté va dépendre du nombre d'axes de rotations possibles, et le besoin en diversité géométrique doit correspondre au nombre d'angles d'Euler, états du système à définir dans la détermination d'attitude. Ce dernier nombre est lié également au nombre de capteurs nécessaires : deux capteurs pour un seul axe de rotation (par exemple le cap pour une automobile, ou une péniche sur un canal), trois capteurs pour deux axes de rotation, et quatre capteurs pour trois axes de rotation (un avion par exemple).

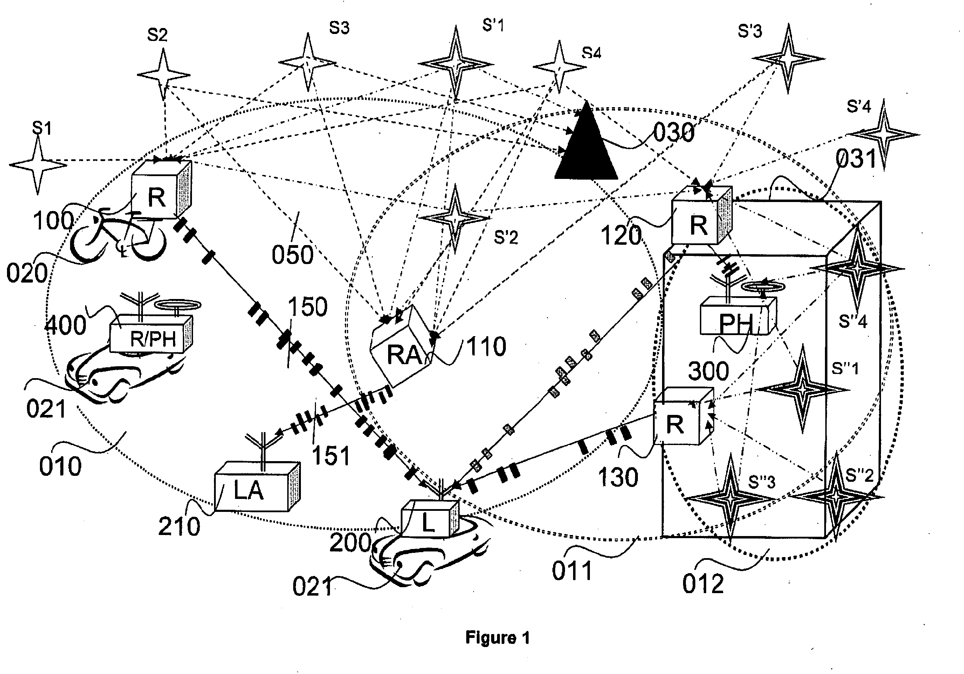

La figure 1 donne une vue d'ensemble des modes de réalisations particuliers des procédés et des dispositifs mis en jeu selon l'invention. La présente invention concerne l'ensemble des dispositifs 100, 200, 300, 400 et des variantes, à savoir 110, 120, 130, selon une variante du 100, et 210 selon une variante du 200. Ils ont pour point commun que chacun de ces dispositifs, selon sa nature, émet et/ou reçoit un signal relais, qui transmet une partie des informations transmises par les signaux de positionnement émis depuis différentes sources de positionnement Si qui appartiennent à l'environnement des émetteurs, ledit signal relais est nommé dans l'invention un signal pulsé multi synchrone multi-source 150. Les dispositifs 100, 110, 120 et 130 émettent le signal relais, les dispositifs 200, 210 et 300 reçoivent les signaux relais, et le dispositif 400 émet et reçoit le signal relais selon l'environnement dans lequel il se trouve. Selon une variante dans l'invention, si la réception des signaux de positionnement a lieu sur plusieurs capteurs, comme c'est le cas du dispositif 110, à destination du dispositif 210, ledit signal relais est nommé signal pulsé multi synchrone multi-source multi-capteur 151.

On observe, en figure 1, les conditions de mise en oeuvre de l'invention à savoir la présence d'au moins un système de positionnement, ledit système de positionnement mettant en oeuvre une pluralité cohérente de sources émettrices de signaux de positionnement. Dans la pratique, cette condition est réalisée en tout point du monde grâce aux systèmes globaux de navigation par satellites, dit GNSS (acronyme de Global Navigation Satellite system).

La figure 1 montre l'exemple de la présence de trois systèmes de positionnement.

Le premier comprend les sources S1, S2, S3, S4 et a pour zone de couverture la zone délimitée en 010, où il fournit effectivement un service de positionnement en résolution 3D+T. A titre d'exemple, ce premier système est un système global de navigation par satellite, par exemple GPS ou, dans le futur, Galileo. Le service de positionnement est obtenu grâce à l'émission par les sources des signaux de positionnement 050. Ces signaux de positionnement sont générés chacun à partir d'une horloge de source, et sont d'une résolution spatiotemporelle réputée suffisante pour la performance de télémétrie cherchée. Lesdites sources sont déployées dans une diversité géométrique réputée suffisante pour que ledit système de positionnement offre un service de positionnement avec des performances satisfaisantes dans sa zone de couverture dès lors que les visibilités directes sont possibles entre sources émettrices et réceptrices. La figure 1 montre un cas où un obstacle 030 limite cette visibilité entre source et récepteurs.

Le deuxième système de positionnement comprend les sources S'1, S'2, S'3 et S'4, est de même type que le premier, de zone de couverture 011, et est inter opérable avec le premier, en cela qu'il admet le même type de récepteur. Le service de positionnement de ces systèmes est respectivement assuré, dans leurs zones de couverture respectives, à la condition que des obstacles, du type de 030 ou 031 n'existent pas entre les sources et les récepteurs.

Le troisième système de positionnement, qui comprend les sources S"1, S"2, S"3 et S"4, est de nature différente, mais fournit également un service de positionnement dans sa zone locale de couverture 012 adaptée à un bâtiment 031 par exemple.

Le signal pulsé multi synchrone multi-source 150 est généré et émis à partir des dispositifs de relais 100, 110, 120 et 130, dits eux-mêmes relais pulsés multi synchrone multi-source. Le relais 110, ayant plusieurs capteurs pour recevoir les sources, émet un signal plus complexe, ledit signal pulsé multi synchrone multi-source multi-capteur 151, qui sera détaillé plus loin.Chaque relais capte les signaux 050 émis par une pluralité de sources appartenant aux systèmes de positionnement, les traite séparément en acquisition et poursuite pour retrouver les marqueurs temporels de chacune des sources, les marque à son tour, dès réception, sur une échelle de temps local sous forme de pulsations, régénère un signal unique à partir des pulsations crées par chacune des sources, et émet finalement ce signal à destination d'autres utilisateurs. Le signal généré assemble des impulsions représentatives du temps de réception de tout ou partie des marqueurs temporels reçus grâce à ces sources, d'où le qualificatif de multi synchrone. Ce procédé permet de relayer par une nouvelle source unique des informations temporelles transmises par la pluralité des sources, telles qu'elles ont été reçues ensemble au niveau de la position du relais, d'où le qualificatif de relais multi-source. Enfin le relais n'utilise que des impulsions ou train d'impulsions à l'exclusion d'une porteuse, d'où le qualificatif de relais pulsé, cette caractéristique étant un des paramètres majeurs pour sa capacité à transmettre simultanément plusieurs sources. Le relais des informations temporelles se fait ainsi, selon le procédé de la présente invention, sous la forme d'un signal pulsé multi synchrone multi-source qui respecte les instants de réception des marqueurs de temps spécifiques détectés sur les codes de télémétrie de chaque source séparément, et en particulier respecte leurs écarts inter sources.

Selon une variante les marqueurs temporels peuvent être captés sur les fréquences porteuses des signaux de positionnement, , de manière similaire au Carrier-Phase GPS, quand ceux-ci sont des signaux RF. Pour cette variante, l'horloge source doit être à l'origine de la génération de porteuse, en plus d'être à l'origine de la génération du code de télémétrie, et préférablement avec une cohérence code porteuse (proportionnalité entre fréquence du code et fréquence porteuse), comme c'est le cas dans les signaux de positionnement GNSS. Cette variante est particulièrement utile lorsque plusieurs capteurs sont utilisés sur un même relais 110, et dans le cas où les capteurs sont trop peu éloignés en regard de la résolution spatiale du code de télémétrie.

Dans le cadre du procédé lié au relais, l'écart temporel n'est pas respecté, bien que maîtrisé. Au contraire, selon une variante, on y applique, source par source, donc canal de traitement par canal de traitement, des corrections qui visent à améliorer la précision ou l'intégrité, en respectant davantage le chemin géométrique direct sur les différents canaux de transmission. Ainsi les corrections à appliquer peuvent concerner tous les cas d'utilisation des corrections couramment nommées bifréquence et des corrections couramment nommées différentielles dans le domaine du GNSS. Ces corrections peuvent venir de la même source (cas bifréquence), par un deuxième signal reçu généré de la même horloge source, d'une autre source par un message modulé dans un signal de positionnement, comme avec l'utilisation d'un satellite SBAS (acronyme de Satellite Based Augmentation system pour système d'augmentation basé au satellite), ou bien encore d'une source de données externes, comme avec l'utilisation d'un GBAS (acronyme de Ground Based Augmentation System pour système d'augmentation basé au sol) ou autres stations de référence comme celles utilisées dans les techniques RTK (acronyme de Real Time Kinematik pour cinématique temps réel). Enfin, elles peuvent être calculées directement dans le relais à partir d'un écart entre une mesure réelle et une prévision de mesure, dès lors que le nombre d'inconnues d'états du système est réduit, cas d'un relais fixe sur position géodésique connue, par exemple.

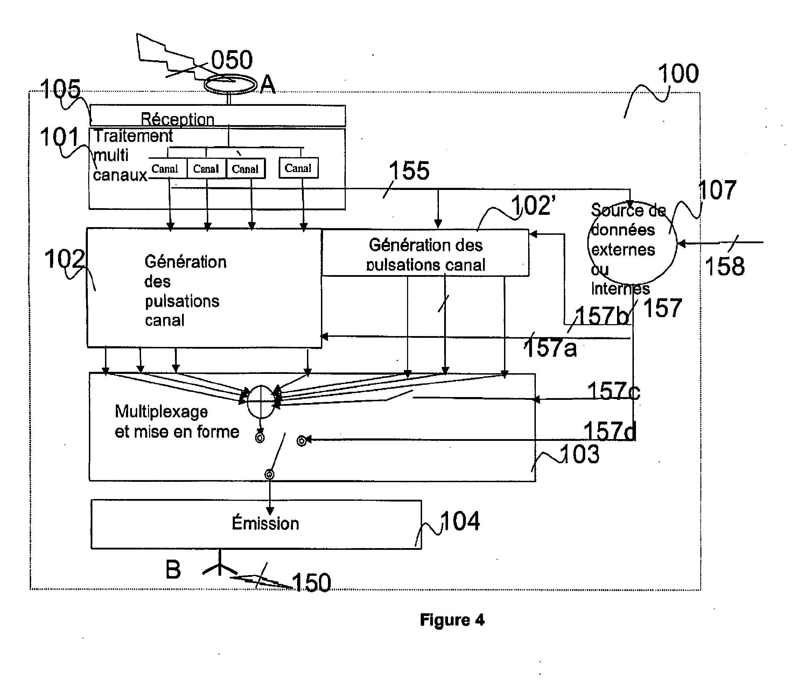

Selon une variante, pour le procédé lié au relais, d'autres corrections spatiotemporelles pour l'amélioration de la précision et de l'intégrité peuvent également être mises en oeuvre. Les corrections et/ou contrôle d'intégrité profitent des techniques de détection et exclusion de multi trajets, par analyse des fonctions d'auto corrélation par exemple. Dans ce cas, le délai de multi trajet identifié est préférentiellement corrigé directement, mais dans un mode particulier de l'invention, illustré en figure 4, il est transmis par message aux utilisateurs finaux, pour une application de la correction par eux mêmes. Pour tous les cas de corrections spatiotemporelles définies dans ce document, l'alternative entre appliquer une correction au niveau du relais pour une émission plus précise et intègre, ou transmission d'une correction pour une application finale par l'utilisateur, reste possible et dépend largement de l'application et du potentiel du canal de transmission.

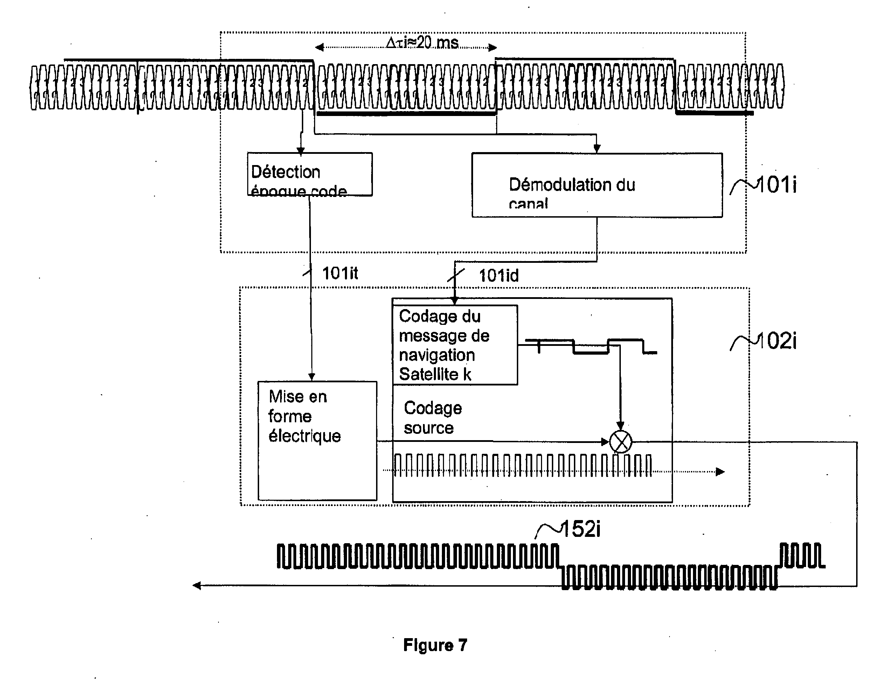

Les impulsions ou trains d'impulsions transmis par le relais marquent sur l'échelle de temps locale du récepteur, et au niveau de la position du relais, des instants d'émission particuliers des signaux émis par les sources. Ceux ci sont des événements particuliers de l'émission source, tels que des époques du code de télémétrie, matérialisés sur l'échelle de temps de l'horloge source. Par exemple, chaque début de séquence de code pseudo aléatoire, dit époque de code pour une source qui les émet périodiquement, correspond à ce type d'instant caractéristique. La figure 7 (détaillée plus loin) illustre une implémentation particulière applicable au cas du système GPS. Dans ce cas, les instants d'époques de code sont parfaitement datés, par un protocole partagé de la source à l'utilisateur, sur une échelle non ambiguë, c'est-à-dire une échelle d'origine connue, le 6 janvier 1980 à 0h00, et une durée parfaitement comptabilisée depuis cette origine sur chaque échelle de temps de source, grâce aux différentes séquences de code pseudo aléatoire qui structure le signal complet. Des principes analogues sont disponibles sur GLONASS, EGNOS et seront également disponibles sur le futur système européen Galileo.

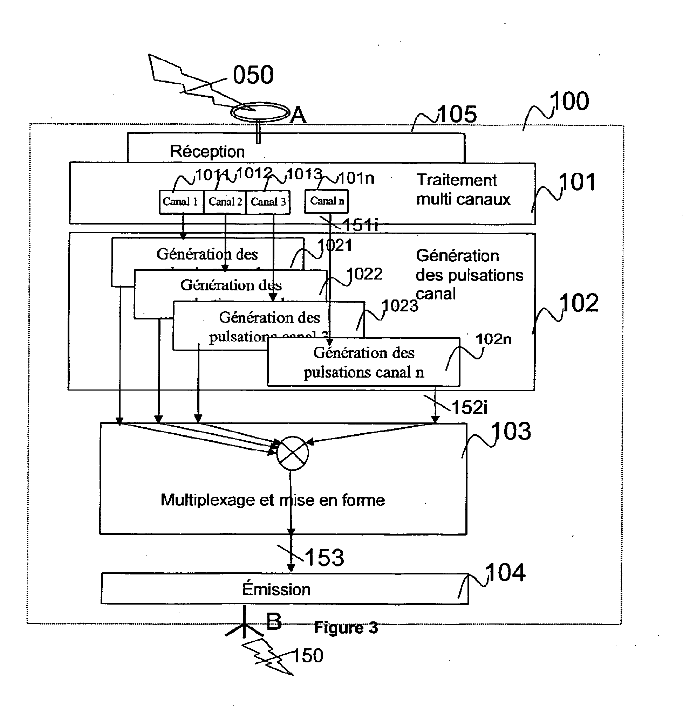

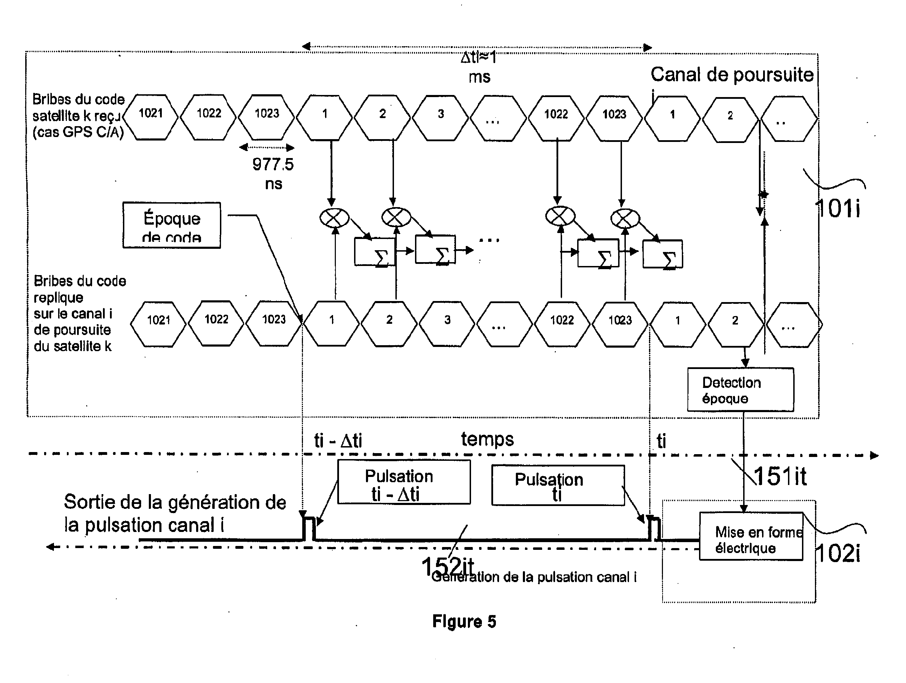

Pour permettre une meilleure compréhension de l'invention, nous considérerons ci-après les figures 3 et 5. Le relais 100 reçoit les signaux d'une constellation GNSS et détermine les temps d'arrivée des codes du signal spatial (époques de code) relatifs aux satellites en visibilité, suivant des méthodes correspondant à un état de l'art des récepteurs GNSS. Le relais 100 génère un signal pulsé, avantageusement un signal Ultra Large Bande (ULB) comprenant une série de pulsations synchronisées avec les époques de code, chaque pulsation se rapportant à une époque de code pour un satellite particulier ; ce signal constitue le signal multi-synchrone multi-source. Les pulsations peuvent être des impulsions ou bien des trains d'impulsions codées ou non. L'utilisation de trains d'impulsions permet d'améliorer le rapport signal à bruit par intégration incohérente au niveau du dispositif de réception 200. L'opération de génération des impulsions ou train d'impulsions à l'instant de détection d'une époque de code est désignée dans la suite « mise en forme électrique ». Le synchronisme entre l'émission des pulsations et les époques de code mesurées peut se faire à un décalage temporel près, convenu et connu de l'ensemble du système. Plus précisément ce décalage est prévu pour absorber la dispersion de temps de traitement entre les différents relais, le temps de traitement pour un relais donné étant défini comme l'écart temporel entre l'instant d'arrivée du code GNSS et l'instant d'émission de la pulsation correspondante au niveau de ce relais.

Le signal multi synchrone multi-source est modulé par un message comprenant un préfixe permettant au dispositif de réception d'en identifier le début, par exemple un motif de synchronisation ou une séquence pilote, une information permettant d'identifier le satellite à l'origine de chaque pulsation et la position du code dans la structure de trame du message de navigation du satellite correspondant à cette pulsation. Typiquement, le message contient également des données issues du message de navigation des satellites représentés dans le signal multi-synchrone multi-source, par exemple les éphémérides de ces satellites. Le message peut aussi contenir des données de corrections spatio-temporelles supplémentaires, par exemple corrections ionosphériques, troposphériques, ou des corrections différentielles, ainsi que des informations d'intégrité. L'opération de modulation du signal multi synchrone multi-source par le message précité sera désignée dans la suite « codage source ». La modulation utilisée peut être par exemple de type bipolaire.

Si plusieurs relais sont présents dans le système, ceux-ci utilisent une technique d'accès multiple, par exemple un codage de type CDMA (non représenté) permettant aux dispositifs de réception 200, 210, 300, 400 de séparer les signaux provenant des différents relais. Les bits du code d'accès multiple peuvent moduler les pulsations successives du signal multi synchrone multi-source ou bien, si les pulsations sont des trains d'impulsions, les impulsions constitutives de chaque pulsation.

A la réception, le dispositif 200 isole le signal 150 d'intérêt parmi les signaux émis par les différents relais, suivant la technique d'accès multiple utilisée par le système, et mesure les temps d'arrivée des pulsations du signal multi synchrone multi-source. Les mesures sont groupées par source et traitées de manière analogue à celle des époques de code GNSS afin de déterminer la position du relais. Le dispositif de réception démodule également le message et en utilise le contenu dans les traitements de localisation comme dans un récepteur GNSS classique.

La figure 1 montre quatre cas typiques d'applications des relais pulsés multi synchrones multi-source.

Le relais 100, le plus à gauche de la figure 1 est solidaire d'un véhicule 020. En effet, le relais peut fournir ses services tout en étant mobile. Le signal qu'il émet 150 est utilisé par le dispositif 200, dispositif de localisation d'un équipement distant (application de gestion de flotte par exemple), qui peut lui-même être mobile. Ce relais 100 est en visibilité directe de six sources en figure 1. Le trajet de propagation ajouté après construction du signal est commun dans l'évaluation des temps de propagation sources - équipement 200 - et peut donc être éliminé ou introduit dans l'inconnue temps d'une résolution 3D+T, de telle sorte qu'après application classique des principes de trilatération, l'équipement 200 retrouve la position 3D de l'équipement 100.

Un peu plus à droite sur la figure 1, on trouve l'équipement relais multi-capteur 110. Il s'agit aussi d'un relais, mais sa caractéristique particulière est qu'il possède plusieurs capteurs de signaux sources Si convenablement répartis sur l'équipement. Ce relais 110, pouvant être appelé relais « d'attitude », relaie à travers le signal pulsé multi synchrone multi-source multi-capteur 151, par des combinaisons d'impulsions, les instants de réception des marqueurs de temps d'une pluralité de sources comme il les a reçus respectivement sur chacun de ses capteurs. Afin de séparer les signaux issus des différents capteurs du relais d'attitude, on utilise une technique d'accès multiple, par exemple un codage de type CDMA. Comme précédemment, les bits du code d'accès multiple peuvent moduler les pulsations successives du signal multi synchrone multi-source ou bien, si les pulsations sont des trains d'impulsions, les impulsions constitutives de chaque pulsation.

Les écarts inter capteurs entre impulsions d'une même source sont représentatifs de l'attitude de l'équipement 110. La position de 110 peut être déterminée comme précédemment à partir d'un seul capteur. Après séparation des signaux issus des différents capteurs du relais d'attitude, le dispositif de réception 210 détermine les positions des capteurs et en déduit, de manière connue en soi, l'attitude du relais 110, Le dispositif 210 peut ainsi déterminer à distance, grâce au signal pulsé émis par le relais d'attitude, l'attitude du dispositif 110. Généralement, un nombre de quatre sources reçues sur quatre capteurs convenablement placés dans ou sur le relais est requis pour déterminer l'attitude (par exemple sous la forme des trois angles d'Euler). Toutefois, dans le cas où le relais a moins de degrés de liberté autour de son centre de gravité, le nombre des capteurs de réception peut être réduit.

On a vu le rôle de l'équipement 200 pour déterminer la localisation du véhicule 020. Ce même équipement peut localiser d'autres relais, comme les relais 120 et 130 de la figure 1 (les plus à droite de la figure 1), y compris des relais qui travaillent sur des systèmes de positionnement S"k différents, tel que en 130, dont la zone de couverture est telle que l'équipement 200 est hors de cette zone. Il est clair sur l'illustration de la figure 1 que les relais 120 et 130 étendent la disponibilité du système de positionnement composé des sources S"i et jouent un rôle important dans une transition entre des zones de couverture de différentes natures. Pour la variante 120 du relais, cette extension de couverture a lieu dans les deux sens, de l'intérieur du bâtiment 031 vers l'extérieur et inversement au prix d'un double capteur et récepteur en tête du relais pour le traitement de deux systèmes de positionnement de natures différentes, et un double système d'aériens à l'émission, le signal pulsé multi synchrone multi-source émis sur chaque aérien pouvant être le même.

Il est clair aussi que le relais 120 peut lui-même jouer le rôle de station de référence pour établir et transmettre, sous forme modulées, ou bien directement, des corrections différentielles, spatiotemporelles, pour une meilleure précision de la télémétrie de l'utilisateur final, incluant par exemple une correction ionosphérique ou troposphérique, si les sources sont satellitaires, une correction d'horloge ou de positionnement de source. Un relais fixe de type 120 a un fort potentiel de redondance s'il reçoit les signaux des systèmes globaux de navigation par satellite en pleine visibilité. Il a ainsi un rôle particulier à jouer pour surveiller l'intégrité locale de ces systèmes, en plus de son rôle de station différentielle, et en particulier pour surveiller les événements redoutés locaux qui peuvent introduire des erreurs de télémétrie néfastes pour la précision et l'intégrité finale des positionnements. Parmi ces événements redoutés, on liste sans chercher à être exhaustifs les multi trajets et/ou les collisions de séquences de code inter sources, qui posent des problèmes d'intégrité aux récepteurs, particulièrement dans les processus d'acquisition, et particulièrement dans la détection de signaux à faible puissance ou dans des effets proche-lointain. Ces collisions introduisent en effet des leurres de synchronisation en relevant le niveau des pics secondaires de la fonction d'auto corrélation relativement au pic principal. Ainsi, un relais du type de 120 est particulièrement bien placé pour introduire un maximum de contrôles d'intégrité au niveau du traitement des signaux 050, effectué canal par canal, un canal étant affecté à une source particulière et à son signal de télémétrie.

De ces contrôles d'intégrité, on peut déduire des données à transmettre avec plusieurs alternatives. La première alternative est une alarme transmise à l'utilisateur grâce à une donnée modulée et la source est directement exclue dans la retransmission. La deuxième alternative est une recommandation sur la confiance que l'utilisateur peut mettre dans l'utilisation de ladite source. Cette information peut être transmise sous forme d'un indice de confiance par rapport à un niveau de performance prédéterminé dans le protocole d'interface du relais, ou au contraire d'une information permettant d'évaluer le modèle statistique de bruit et d'erreur sur la mesure finale de l'échelle de temps source retransmise, dit rayon de protection de la mesure, à indice de confiance prédéterminé dans le protocole d'interface du relais. Le contrôle d'intégrité peut être mené de façon conventionnelle par calcul des résidus entre mesure de pseudo distance réalisée par le récepteur des signaux 050 du relais et une mesure prédite grâce à sa connaissance a priori de sa propre position et de la position des sources, et comparaison avec un test d'hypothèse sur un modèle statistique de bruit et d'erreur préétabli.

Les contrôles d'intégrité réalisés par le relais sont directement utilisés par un dispositif du type 200 ou du type 210, dans le procédé de localisation et, le cas échéant de détermination d'attitude à distance du relais, sous des caractéristiques particulières de l'invention, pour pondérer les mesures, appelées également observables, effectuées sur chaque canal ou pour exclure certaines de ces mesures jugées hors performances pour la fonction cherchée. Cette fonction particulière peut être conduite par l'évaluation des paramètres d'un modèle statistique des bruits et mesures, par exemple la variance d'un modèle de bruit blanc gaussien additif, qui sert à pondérer les observables dans le filtrage de localisation à un certain niveau de confiance près. Ces modèles sont par ailleurs complétés, dans des modes particuliers de réalisation du procédé objet de la présente invention, par des évaluations de perturbations, bruit et erreurs de principes, propres au récepteur du dispositif 200 et également, par des contrôles d'intégrité, propres à chaque canal de traitement, pour détecter les anomalies potentielles à ce stade du traitement, non attribuables à des phénomènes attendus. On retient à ce stade, comme événements redoutés, des erreurs dues aux multi trajets, des anomalies propres à la séparation des impulsions par sources (démultiplexage), des taux d'erreurs de bits anormalement élevés dans la démodulation, l'authentification.... Ces contrôles d'intégrité peuvent encore être complétés, dans des modes particuliers de réalisation du procédé objet de la présente invention, au niveau du dispositif 200, et du procédé de localisation à distance, chaque fois qu'une redondance est atteinte dans le nombre d'observables utiles au filtrage de navigation en regard du nombre de degré de libertés à résoudre pour le mouvement du relais et en regard de la dilution de précision sur des sous-ensembles d'observables. Il s'agit dans ces modes particuliers de réalisation du procédé, d'appliquer ces contrôles d'intégrité aux échelles de temps sources qui sont récupérées par un dispositif de type 200, ou ses variantes, après avoir été relayées par un dispositif de type 100, ou ses variantes.

En figure 1, le relais 120 émet également vers l'intérieur du bâtiment 031, à destination du dispositif 300, nommé dispositif de positionnement « hybride ». Le dispositif 300 est capable à la fois d'effectuer la réception directe des signaux de positionnement tels qu'ils sont émis par les sources, en l'occurrence les sources S", sans que cela soit limitatif, et d'effectuer la réception du signal pulsé multi synchrone multi source, provenant d'un relais, ici le dispositif 120. En l'occurrence ce dispositif 120 multiplexe les échelles de temps des sources S, S' et S", telles qu'elles sont reçues à la position du relais. Le dispositif 300 est capable également d'une double hybridation des mesures reçues par les deux moyens distincts, directs et relais. Il réalise une hybridation lâche, dans un filtrage hybride de navigation de l'état de l'art, filtre de Kalman typiquement, des mesures de télémétrie, dites observables du filtre, réalisées directement et de celles réalisées par le double chemin source vers relais et relais vers dispositif 300. Cette hybridation doit toutefois prendre soin d'utiliser les corrections à appliquer par l'utilisateur selon la source des observables, et/ou de traiter des modèles d'erreurs et de bruit adéquats aux types de mesures effectuées, et en tenant compte de contrôles d'intégrité spécifiques à chaque type de mesures et ce particulièrement pour des mesures effectuées sur des sources différentes. Selon un mode particulier de réalisation du procédé de positionnement hybride, le dispositif 300 est capable de réaliser également une hybridation dite serrée, d'assistance directe au traitement du signal sur le traitement des sources que relais 120 et dispositif de positionnement hybride 300 reçoivent en commun, et qui ont été relayées, en terme d'échelle de temps source, par le relais 120. Cette hybridation serrée suppose une reconnaissance des sources communes et association des canaux de traitement correspondants entre réception du relais et traitement direct. Dans le mode de réalisation de l'hybridation serrée, le dispositif de positionnement hybride 300 reçoit le signal multi synchrone multi-source, détecte sur ce signal les temps d'arrivée des pulsations canal, et cherche les temps d'arrivée des codes des signaux spatiaux GNSS dans une fenêtre autour des mesures des temps d'arrivée des pulsations canal corrigées des délais de traitement du système, la taille de la fenêtre de recherche dépendant de divers paramètres dont la distance du dispositif de réception hybride 300 aux relais. Cette deuxième hybridation, serrée bien que connue au niveau des principes utilisés, et en particulier dans la commande des boudes de poursuite ou des prévisions en terme de domaines d'acquisition, est beaucoup plus efficace, car beaucoup plus réactive, adaptée, et cohérente, qu'une hybridation équivalente passant par un moyen de communication numérique ou « porteuse disciplinée », comme réalisée jusqu'ici dans les techniques de l'état de l'art d'A-GPS ou A-GNSS (marques déposées, acronymes de Assisted GPS ou GNSS). De plus elle apporte une implémentation différente, du fait de la nature impulsionnelle de la transmission, qui joue naturellement un rôle matériel de déclencher sur les traitements de signaux.

Dans des conditions favorables de réalisation, si la portée des relais est de l'ordre de l'équivalent distance de la bribe de code GNSS (typiquement 293 mètres) ou si le système permet une pré-localisation du dispositif de positionnement hybride 300 avec une précision de cet ordre de grandeur, la réception GNSS hybridée peut directement commencer en mode de poursuite, offrant un temps de réponse, une précision et une sensibilité du dispositif de réception hybridée 300 optimaux dès son démarrage. Si par exemple les pulsations canal sont envoyées à un dispositif de réception hybride 300 proche du relais sans qu'aucune correction préalable des distorsions liées à la source et au trajet entre la source et le relais n'ait été apportée aux mesures des époques de code qui ont permis de générer les pulsations, les temps d'arrivée des pulsations dans le dispositif de réception hybride 300 constituent un estimateur précis du temps d'arrivée des époques de code des mêmes sources dans le récepteur. En effet, en l'absence de multi-trajet, les distorsions perçues par le relais et le dispositif de réception hybride sont quantitativement très semblables dans une zone restreinte autour du relais. Si le dispositif de réception 300 subit un effet de multi-trajet sur le signal venant des sources, les pulsations canal permettent au récepteur de centrer la recherche autour du trajet direct, et de rejeter ainsi les trajets secondaires.

Comme on vient de le voir, l'efficacité de l'hybridation est d'autant plus grande que le relais est en proximité directe du dispositif de positionnement hybride, et utilise pour sa transmission une résolution temporelle permettant la précision de mesure et la résolution des multi trajets. Cette condition est particulièrement remplie par un relais 120 qui émet en intérieur des bâtiments en courte portée sur une ressource de fréquence ultra large bande, ou en optique. En particulier, l'hybridation serrée réalisée par un relais situé dans un rayon inférieur à la longueur de propagation d'une demi bribe de code de télémétrie empêche le décrochage d'une boucle de poursuite en cas d'affaiblissement des signaux au dessous du seuil de poursuite.

Dans l'autre sens, l'augmentation de disponibilité obtenue sur le positionnement du dispositif 300, grâce aux hybridations, facilite les traitements nécessaires dans la réception des signaux pulsés multi synchrone et multi-source que ce soit dans la détection des impulsions ou leur datation sur l'échelle locale de temps ou bien dans le traitement nécessaire à la séparation et à l'identification des sources.

Enfin, l'augmentation importante du nombre d'observables du filtre de navigation, acquis par les hybridations lâches et serrées, en même temps que la qualité des modèles statistiques de bruit et erreurs, mis en oeuvre dans des modes particuliers de réalisation du procédé de positionnement hybride, autorisent une nette amélioration des traitements d'intégrité dans le domaine position, connus de l'homme de l'art sous le nom de RAIM (acronyme de Receiver Autonomous Integrity Monitoring) et qui utilisent la redondance des mesures. La cohérence des types d'erreurs entre observables relais et observables directs, réalisée naturellement grâce aux principes utilisés, permet en effet de globaliser le nombre de degré de liberté dans le domaine des mesures en ajoutant simplement le nombre de mesures relais au nombre de mesures directes.

Tous les procédés d'amélioration de performances des systèmes de positionnements décrits dans les modes de réalisation particuliers des différents aspects du procédé de l'invention s'appliquent a minima à étendre les performances des systèmes GNSS dans leurs zones de couverture, à étendre cette couverture aux zones masquées avec des performances de précision et d'intégrité accrue. En conséquence, l'invention participe à améliorer toute application intégrant déjà des récepteurs GNSS, quels qu'ils soient conventionnels, ou SBAS, ou GBAS, ou assistés par des moyens de communication, selon les procédés de type A-GPS ou A-GNSS, RTK...L'invention peut s'appliquer également à étendre la couverture et les performances d'autres systèmes de positionnement comme les réseaux basés sur les émetteurs récepteurs ultra large bande, récemment développés ou d'autres systèmes de radio navigation plus conventionnels.

Finalement la figure 1 montre le dispositif 400, dit de positionnement en réseau ad hoc. Ce dispositif peut être décrit en première approximation comme l'intégration dans un même boîtier d'un dispositif capable du positionnement hybride, compatible en réception avec tous les relais de la figure 1, et d'un dispositif de relais capable d'émettre un signal pulsé multi synchrone multi-source. Il a la capacité de se mettre en réseau qu'on qualifie de réseau ad hoc de positionnement avec ses homologues pour un système de positionnement en réseau coopératif et en utilisant un procédé spécifique de positionnement en réseau ad hoc.

On donne, ci-après, une description détaillée d'un procédé de relais pulsé multi synchrone multi-source et dispositif associé, en regard des figures 3 à13.

La figure 3 représente, schématiquement, les interfaces et les étapes du procédé de relais pulsé multi synchrone multi-source mis en oeuvre par le dispositif 100, dans la progression où elles sont réalisées dans chaque mode de réalisation du procédé de relais. Au niveau des interfaces et dans un but de clarté, la figure distingue les aériens d'antenne A et B du reste des moyens de réception et d'émission. Le signal reçu 050 est un signal composite de toutes les sources des signaux de positionnement de l'environnement à traiter et le signal pulsé multi synchrone multi-source 150 est celui émis par le relais 100.

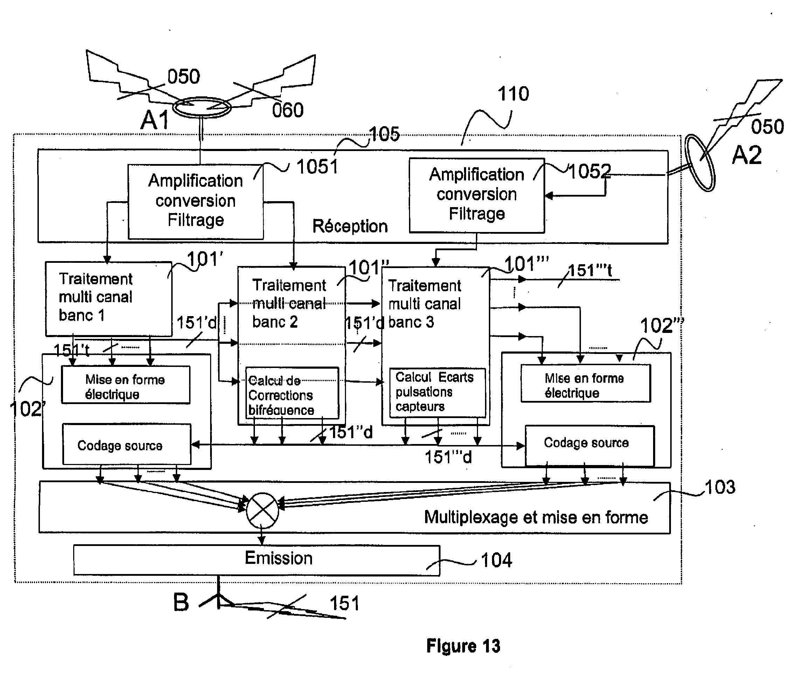

Dans la figure 3, après l'étape de réception utilisant l'antenne A, ou selon une variante un capteur de réception, arrive l'étape de séparation du signal composite venant des sources, en signal provenant d'une seule source, source par source dans une étape conventionnelle de traitements multi canaux 101, composée d'une pluralité de traitements canal 1011, 1012,...101i... 101n, conformes à l'état de l'art dans leur généralité, mais présentant une interface particulière 151 à décomposer par canal en 1511, 1512,.. 151i.. ,151n qui va être décrit dans les lignes qui suivent, mais dont on peut dire dès à présent qu'il est décomposé, pour chaque canal, en deux parties (référencées 151it et 151id) pour distinguer l'aspect temporel, de l'aspect donnée. A la suite, chaque étape de traitement multicanal est suivie d'une étape de génération des pulsations canal 102, par canal 1021, 1022,...102i,... 102n, et donc par source et par signal, indépendamment l'un de l'autre dans certains cas (cas illustré en figure 3), et, selon une variante, pour certaines étapes de type 102 (voir les étapes 102' figure 4 et ou voir étapes 102" et 102"' figure 13), traités par groupement de canaux. Les buts des groupements de canaux sont multiples, et peuvent être représentatifs :
- de groupement de signaux d'une même source (par exemple signal pilote et signal données d'un service de Galileo, car l'horloge source est la même dans les deux cas, ou signal de la fréquence L1 et de la fréquence L2 sur GPS pour créer une correction bifréquence représentative d'un délai ionosphérique,...),
- de groupement de sources (par exemple restitution d'une horloge virtuelle composite, ou calcul de corrections différentielles),
- et/ou de groupement de capteurs (par exemple, calcul de différences de phases porteuses entre capteurs pour une future détermination d'attitude dans un relais d'attitude).

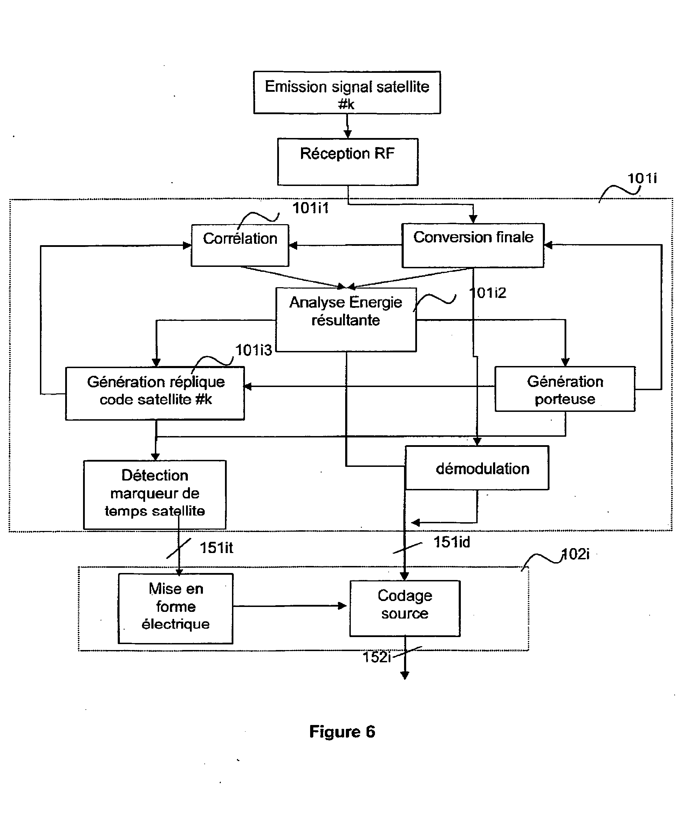

La liste des exemples donnés ici n'est nullement limitative, et est donnée à titre indicatif. Dans ces étapes de générations de pulsations canal 102i, sont générés des signaux électriques, dits pulsations canal, parce qu'ils sont générés, dans des modes particuliers de réalisation du procédé de l'invention, à l'instant précis où un marqueur de temps précis, est reconnu, dans le traitement canal, comme étant reçu de la source par l'intermédiaire de son signal de positionnement. On se reporte à la figure 5 qui détaille les étapes 101i et 102i et leurs interfaces 151it et 152it. Dans la figure 5, on voit que l'interface 151t est produite par un détecteur d'époque, qui fonctionne comme un déclencheur, attaché à la génération d'une réplique du code de télémétrie pour un traitement de corrélation avec le signal reçu. La mise en forme électrique consiste à générer un signal électrique présentant une transition de front déterminée à l'instant où une pulsation devra être émise par les blocs de multiplexage et mise en forme 103 et d'émission 104 quand ils recevront ce signal. La transition de front électrique correspond à l'information d'époque de code calculée dans l'étape 101i. Dans la figure 5, le déclencheur, après mise en forme électrique, qui a été placée dans l'étape 102i pour plus de clarté, est en position haute à l'instant précis où la réplique transite de la bribe numérotée 1023 à la bribe numérotée 1 dans la génération, et redescendra en position basse aussitôt après, dès lors que les traitements suivants auront été déclenchés. Cette transition correspond par exemple à la conventionnelle époque de code du signal GPS C/A qui comporte 1023 bribes. Evidemment, l'exemple de la figure 5 traite de ce signal GPS C/A, mais il peut être généralisé à n'importe quel signal de positionnement sur choix déterminé, et entendu avec l'utilisateur du relais dans un document d'interface, ledit choix portant sur une transition ou plusieurs transitions, ou plusieurs fragments du code de télémétrie composant l'essentiel de l'information temporelle dans le signal de positionnement. Selon une variante, des transitions prises sur la porteuse de ce signal peuvent également être choisies, dans la mesure où elles peuvent être ramenées à l'échelle de temps de l'horloge source. C'est le cas des signaux GNSS qui sont générés en cohérence code-porteuse et cette utilisation peut être particulièrement utile dans un relais d'attitude. Par ailleurs, au moins une partie des étapes 101i, chacune étant affectée au traitement d'une source et traitant chaque source visible à minima, réalise les traitements du signal de positionnement, conformément à l'état de l'art d'un récepteur de radio navigation ou plus généralement de traitement d'une mesure télémétrique. Il s'agit des traitements d'acquisition et de poursuite du signal, par exemple du signal GNSS comme décrit dans la figure 5 et dans la figure 6, entre réception et restitution des observables.

La figure 6 représente une séquence possible, simplifiée, des traitements réalisés en poursuite alors que dans la figure 5 seulement les fragments utiles à la compréhension, propres au traitement de génération de la réplique (101i3 en figure 6) et à la corrélation (101i1 en figure 6), et avant analyse de l'énergie résultante (101i2 en figure 6) pour détection d'écart de synchronisation et réducteur d'écart par DLL (acronyme de Delay Lock Loop pour boucle à asservissement de retard) ont été rapportés, dans le but de fournir une sorte de chronogramme. Dans une implémentation préférentielle de l'invention, et dans le cas de l'utilisation des sources satellitaires des systèmes GNSS, les étapes de génération des pulsations canal sont actives lorsque les traitements du signal sont dans la phase stationnaire de poursuite, avec une synchronisation récurrente de la réplique sur le signal reçu. Le principe du procédé de relais pulsé multi synchrone multi-source repose en effet sur le choix de marqueurs de temps récurrents indus dans le signal des sources, et du relais sans délais de ces marqueurs de temps dès qu'on les a reçus au niveau de l'antenne A. Ainsi les traitements de poursuite du signal sont mieux adaptés que les traitements d'acquisition, bien que ces derniers puissent aussi être utilisés.

On voit en figure 6 que la détection de marqueur de temps satellite peut provenir de la réplique de code pour la corrélation ou de la réplique de porteuse pour la conversion finale en bande de base, ou des deux sources d'informations. La discrimination d'un instant marqué du signal GNSS peut ainsi également être pris sur la porteuse, à partir de la boucle de porteuse du récepteur, réduisant l'effet Doppler. A titre d'exemple, on donne la marque du début du 100° cycle de porteuse après une époque de code. Cette information qui peut être ajoutée à l'information prise sur le code dans un train de pulsations canal peut alors porter la propagation en vitesse de phase en plus de l'information en vitesse de groupe. Elle est particulièrement intéressante dans un relais d'attitude, du fait d'une longueur d'onde de porteuse plus appropriée que la longueur d'onde de code pour mesurer une différence de temps de propagation entre capteurs.

La figure 6 montre aussi que le traitement canal peut fournir une donnée 151id. Dans un mode particulier de réalisation du procédé de relais pulsé multi synchrone multi-source, cette donnée est le bit du message de navigation du signal, dès sa démodulation, qui peut venir en surimpression de la pulsation canal en cours, comme ceci est illustré en figure 7. Ce mode de réalisation particulier du procédé de relais pulsé multi synchrone multi-source peut être particulièrement utile au traitement du dispositif 200 ou 210, pour acquérir les données qui permettent le positionnement des sources, mais également au traitement du dispositif 300, dans un but particulier d'amélioration de la sensibilité du récepteur par les méthodes connues de l'état de l'art.

La figure 6 montre aussi que l'interface 151id peut profiter des résultats de l'étape d'analyse de l'énergie résultante 101i2 du traitement canal. En effet dans des variantes, l'interface numérique 151id, en codage binaire par exemple, est une donnée transmise à l'utilisateur par surimpression sur l'information temporelle 151it, ou bien une correction, dite spatiotemporelle dans ce document, puisque, dans les principes télémétriques visés ici, une durée vaut une distance, et que les corrections à apporter sont soit des désynchronisations, soit des délais perturbant le chemin géométrique. Il est à noter ici que la donnée transmise peut être la valeur de la correction à apporter à l'information temporelle 151it pour une meilleure précision de la mesure télémétrique finale de l'utilisateur. Dans ce cas, c'est à l'utilisateur final d'appliquer ladite correction spatiotemporelle, conformément au document de standard d'interface du relais 100. Ladite correction spatiotemporelle ou information peut par ailleurs être le résultat d'un filtrage et être ainsi d'une validité non directement simultanée du marqueur de temps en intégrant des événements du « passé proche».

Dans le cas de la surimpression de 151id et 151it, celle-ci a lieu selon une variante soit, dans une étape, dite de codage source dans ce document, qui fait partie intégrante de l'étape de génération des pulsations canal 102i et qui correspond à apporter une modulation à la future impulsion élémentaire crée dans l'étape de multiplexage et mise en forme temporelle (étape 103 de la figure 4), soit directement dans l'étape de multiplexage et mise en forme temporelle (étape 103 de la figure 4), par exemple en générant un train d'impulsion élémentaires représentatif de cette donnée binaire 151id, dans un espace vide entre l'information temporelle crée sur un canal donné et le suivant par ordre chronologique d'arrivée des marqueurs temporels sur les sources.

Dans le cas où la correction spatiotemporelle est appliquée directement au niveau du relais, cette correction peut être appliquée, selon une variante, soit dans l'étape de génération des pulsations canal 102, sur un signal électrique, soit dans l'étape de multiplexage et mise en forme temporel 103 directement sur un signal radio ou optique. Dans la variante où les corrections ne sont pas appliquées au niveau du relais, l'étape de multiplexage et de mise en forme temporelle 103 respecte scrupuleusement les instants d'arrivée des marqueurs de chaque source, dans leur ordre d'arrivée et en respectant particulièrement les écarts de temps entre eux.

Selon une variante, et particulièrement si les horloges des sources ne sont pas physiquement synchronisées, un traitement anticollision de pulsations est mis en oeuvre. Il consiste soit à exclure des pulsations qui arriveraient à des instants trop proches, soit à en retarder une, quitte à lui infliger une surimpression qui permettrait à l'utilisateur final d'être informé de ce retard particulier. Il est clair ainsi que ce mode particulier de réalisation du procédé de relais pulsé multi synchrone multi-source autorise le traitement d'un ensemble de sources non physiquement synchronisées, pourvu qu'elles appartiennent à des sous-ensembles cohérents.

Par ailleurs, selon une variante, on peut générer les pulsations canal d'une horloge virtuelle composite, par traitement de plusieurs canaux, et en particulier de ceux qui traitent d'un sous ensemble cohérent de sources (voir figure 4, et en exemple tous les canaux qui traitent les sources du système GPS). Ce traitement peut consister à entretenir une échelle de temps locale asservie à suivre la synchronisation moyenne filtrée sur un réseau de sources, celles des canaux retenus pour créer ledit traitement, selon les méthodes de l'état de l'art des récepteurs de navigation par satellite et connues sous le nom de TMP (acronyme de Time Mark Pulse). Selon une variante, plusieurs horloges virtuelles composites peuvent être crées pour tenir compte des différents réseaux cohérents de sources relayées, et chacune est distinguée des horloges sources relayées ensemble grâce au traitement de l'étape de multiplexage et de mise en forme temporelle 103 par la surimpression de l'équivalent d'un identifiant de source par exemple.

Selon une variante, particulièrement si le relais est mobile, ce traitement qui, pour trouver le bon asservissement de l'horloge virtuelle composite et créer les interfaces 151it correspondantes, résout la position du relais, peut alors transmettre cette valeur de position à l'étape de génération des pulsations du canal correspondant dans l'interface 151id, pour que celle-ci passe en surimpression dans le signal multi synchrone multi-source.

Selon une variante, cette interface 151 id porte une information sur la qualité du traitement dudit canal et/ou de plusieurs traitements de canaux combinés (cas de la figure 4), et/ou sur une correction à apporter à l'information temporelle 151it, dans les traitements futurs. Par exemple un des éléments de la liste ci-dessous peut être l'objet de l'interface 151 d, la liste ci-dessous étant donnée à titre indicatif et sans que cette liste soit limitative :
- un indice de confiance correspondant au rapport signal sur bruit après désétalement du signal,
- un statut des états de poursuite ou d'acquisition du signal ou de démodulation efficace des données du signal,
- une correction de calibration correspondant au temps de propagation propre au canal ou au relais, et/ou délai interne nécessaire aux traitements et calculs, ou biais inter capteurs dans la variante qui implémente plusieurs capteurs, ou encore les différents bras de levier correspondants (de A vers B et entre A1 et A2),
- une correction correspondant à un délai de propagation non représentatif d'une distance géométrique entre la source et l'antenne réceptrice A du relais, et on cite en particulier toute corrections différentielles qui peuvent être évaluées dans le relais grâce à un calcul de l'état de l'art réalisé par évaluation sur les données émanant des sources d'un réseau de sources cohérentes, de l'écart entre mesures de pseudo distance ou pseudo vitesse et prédiction à partir des connaissances a priori de la position et temps du relais, de manière analogue à celui d'un récepteur de navigation mis en mode station de référence, lesdites corrections différentielles étant représentatives :
   o des délais ionosphériques et troposphériques, dans le cas où les sources sont satellitaires, et qui peuvent aussi être évaluées par mesure bi fréquence pour la ionosphérique si deux canaux traitent deux fréquences différentes sur une même source,
   o des dégradations volontaires du signal, particulièrement celles du SA du système GPS, le cas échéant,
   o des erreurs et imprécisions des positionnements ou horloges des sources,
   o biais d'horloge locale à réduire communément sur les interfaces 151 it ,
- une anomalie dans le traitement détectée par des contrôles d'intégrité récurrents qui peuvent être actifs dans cette étape du traitement de signal,
- une anomalie ou panne matérielle sur un canal,
- un taux d'erreur de bits anormalement élevé, ou un contrôle de parité sur des messages transmis incohérents,
- une alerte de décrochage de boucle qui peut être imputable à une interférence, en particulier sur raie parasite,
- une anomalie dans la fonction de corrélation imputable à un multi trajet et dans ce cas, l'information peut porter en terme d'alerte ou en terme de valeur du délai si celui-ci a pu être évalué par des techniques de l'état de l'art, et
- une information transmise dans le signal lui-même et faisant état d'une anomalie sur ce signal (par exemple venant d'un message d'intégrité sur Galileo).

Selon une variante, l'étape de traitement canal comporte un contrôle de l'intégrité du canal. Ce traitement suppose un modèle statistique a priori des bruits et erreurs susceptibles de perturber la détection d'époque, ledit modèle s'appliquant à une caractéristique particulière de la mesure. Les paramètres de ce modèle statistique dépendent en particulier du rapport signal sur bruit présent sur le canal de transmission. Le contrôle d'intégrité consiste à réaliser un test statistique d'hypothèses sur ladite propriété particulière appliquée à la mesure réelle. Le traitement permet d'évaluer un indice de confiance dans la mesure, qui peut servir aussi d'alarme au cas où le modèle n'est pas réalisé au titre d'une probabilité de fausse alarme ou de non détection. Cet indice de confiance peut être pré-négocié en regard d'une performance attendue de résidu d'erreur, par exemple dans le document de standard d'interface du relais. Selon une variante, ce sont les probabilités qui sont négociées et un rayon de protection pour satisfaire ces probabilités est transmis dans l'interface 151d. Un modèle statistique des bruits et erreur en bruit blanc gaussien centré additif est généralement suffisant, même s'il crée une borne supérieure au modèle réel.

Selon une variante, l'étape d'intégrité porte d'un coup sur l'ensemble des canaux et est alors dite « contrôle d'intégrité relais », et dans ce cas elle utilise la redondance des canaux et sources pour évaluer soit une intégrité globale si la redondance est faible soit une intégrité individuelle par canal si la redondance est très grande, et en particulier dans sa diversité géométrique.

Dans tous les cas le résultat des contrôles d'intégrité (alertes, rayons de protection ou indices de confiances) porte soit sur une information transmise par l'intermédiaire de l'interface 151 id ou encore par l'intermédiaire des interfaces 155 ou 157 de la figure 4, soit sur l'exclusion d'un canal dans les étapes de génération de pulsations canal 102 et/ou de multiplexage et mise en forme temporelle 103.

Revenant au signal déclencher 151it, comme décrit avec la figure 5, ce signal électrique (par exemple TTL) fonctionne comme un déclencheur, mis en position haute, du moins avec une transition de front montant suffisamment raide pour marquer avec précision l'instant précis où le marqueur de temps est reconnu dans le traitement de synchronisation signal source -signal réplique mis en oeuvre dans l'étape 101 i.

Le choix du marqueur de temps à reconnaître dans l'étape 101i est prédéterminé, et décrit dans le document d'interface du relais, de façon à être connu à la fois de l'utilisateur et du relais, pour un traitement adéquat en réception par l'utilisateur du relais, et en particulier pour qu'il en déduise une valeur d'observable relié à la source du signal de positionnement, que ce soit en TOA (Time of Arrival), ou bien en TDOA (Time Différence Of Arrival) en utilisant l'unité de temps retenue pour le relais de l'échelle de temps de source.

Les résultats des étapes de génération des pulsations dépendent des résultats des étapes de traitement canal. Ces étapes sont exécutées en parallèle.. Dans l'invention, l'étape 102 i peut ne faire que la mise en forme électrique du déclencheur sur l'instant d'arrivée du marqueur de temps dans le traitement canal. L'étape 102 i est aussi décrite selon plusieurs variantes dans les figures 7 à 11. Dans chaque cas, il s'agit d'une surimpression de la donnée numérique 151id en codage source sur une mise en forme électrique du signal déclencher émanant de l'étape 101 et noté 151it. On a déjà évoqué cette surimpression qui permet de transmettre toutes sortes de données ou de corrections propres au canal en même temps que les échelles de temps des sources. Dans tous les cas et afin de respecter le besoin de synchronisation au niveau de l'utilisateur du relais, le débit de données en surimpression sur les échelles de temps est limité, de sorte qu'il y ait le moins possible d'interférences inter symboles sur les marqueurs des échelles de temps d'une même source d'une part et inter sources d'autre part. Les figures suivantes montrent à titre indicatif et non limitatif d'autres façons d'utiliser la surimpression :
- la figure 7 concerne la création d'une surimpression du message de navigation, plus quelques données internes ou externes le cas échéant. Parmi les données externes au canal, on cite un code d'accès au signal du relais, une signature du relais qui permet une authentification, un code de multiplex si plusieurs relais doivent partager le même canal de transmission, un identificateur du capteur utilisé, une identification du destinataire du signal par exemple pour un relais uniquement en réponse à une requête du destinataire ou encore toute sorte d'autres données de bas débit,

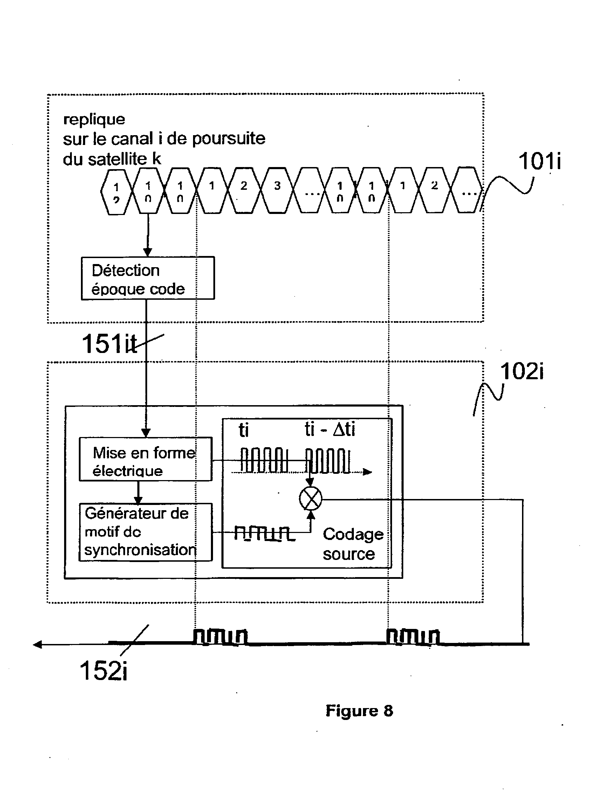

- la figure 8 montre le cas d'un motif de synchronisation qui peut être mis en surimpression pour une meilleure détection et synchronisation au niveau du destinataire,

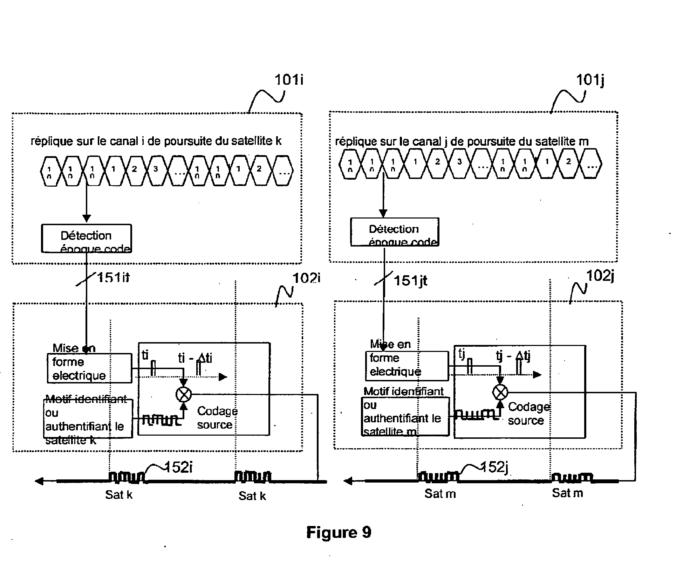

- la figure 9 montre le cas d'un identificateur de source et

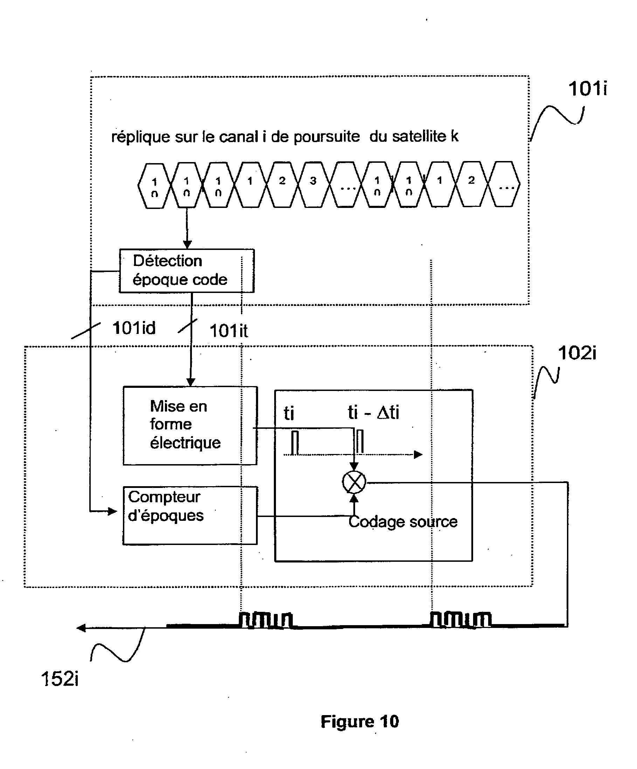

- la figure 10 montre le cas d'un compteur d'époque qui peut faciliter la restitution d'un TOA ou TDOA au niveau du destinataire.

Selon une variante, et pour des utilisations du type LBS par exemple (, acronyme de Location Based Services pour systèmes basés sur la localisation), le relais fonctionne, comme illustré en figure 4 au niveau de l'étape 103 de multiplexage et mise en forme temporelle, alternativement en fournisseur d'échelles de temps de sources, et en fournisseur de données de débit plus élevé que celles qui peuvent être transmises dans le mode relais pulsé multi synchrone multi-source. L'utilisation de techniques ultra large bande pour des zones de couverture restreintes, du fait de la puissance émise, autorise parfaitement la transmission dans un mode alternatif de hauts débits de données, qui conviennent parfaitement à des applications LBS. Dans ce cas, l'interface 158 fournit ces données au relais, données qui sont tamponnées au cours de l'étape 107 dite de source des données internes et externes, puis transmises soit via l'interface 157a ou 157b vers l'une des étapes 102 ou 102' de génération des pulsations canal, de façon à être passées en surimpression des marqueurs de temps si lesdites données sont bas débit, soit, si elles sont haut débit, via l'interface 157c ou 157d vers l'étape de multiplexage et mise en forme temporelle 103 pour être multiplexées comme les échelles de temps sources et entre deux marqueurs de temps de celles-ci ou finalement fournir des slots de temps spécifiques aux données.

Dans la figure 3, l'étape de génération de la pulsation canal 102 agit en liaison très proche avec l'étape de traitement multicanal et crée de façon quasi périodique (au Doppler près si la source est défilante et à l'instabilité court terme non corrigée de l'horloge locale près), dès la réception des marqueurs de temps choisis sur chaque source traitée, un signal électrique dont le front montant (ou descendant) est synchrone de ces marqueurs. L'étape de multiplexage et mise en forme 103 est chargée de combiner dans un même signal électrique les pulsations canal en provenance de chaque canal, après les codages sources décrits plus haut, en respectant les instants d'arrivée de chaque pulsation canal, et si nécessaire de ramener le résultat à un codage en mots binaires ou orthogonaux pour une bonne transmission. Cette étape réalise également la mise en forme temporelle selon une forme impulsionnelle destinée à définir l'occupation spectrale de l'émission finale de chaque transition du signal numérique en bande base résultant du multiplexage des pulsations canal et des données supplémentaires, après une modulation supplémentaire si nécessaire du signal électrique selon les méthodes de l'art.

Finalement l'étape d'émission 104 complète la chaîne de traitement du relais 100 (comme décrit en figure 3) avec ses traitements classiques d'amplification de puissance adéquate à la couverture de la zone où le service de relais pulsé multi synchrone et multi-source doit être fourni dans l'application souhaitée.

L'aérien A, en figure 3 est en interface de réception avec les signaux 050, provenant d'une pluralité de sources, qui dans un mode de réalisation particulier de l'invention, sont des signaux provenant de sources satellitaires des systèmes globaux de navigation par satellite. L'aérien A et l'étape de réception sont dans tous les cas les moyens adaptés pour recevoir et pré-traiter les signaux provenant des sources du système de positionnement à relayer. L'antenne A, si le signal à recevoir est RF ou la cellule A si le signal à recevoir est optique, a dans tous les cas un diagramme le plus ouvert possible afin de recevoir une pluralité de sources bien distribuées dans l'espace géométrique autour de lui. La sortie de l'étape de réception est considérée, dans un mode de réalisation particulier du procédé de relais, comme une sortie numérique échantillonnée pouvant être opérée sans distorsion par un calculateur dont la puissance de calcul est adaptée au besoin en traitement du signal reçu par A. Cela suppose un traitement simultané pour l'ensemble des sources en visibilité potentielle de l'aérien A. Comme c'est indiqué en figure 3, cette étape de traitement des signaux sources, dite traitement « multi canaux » sur la figure 3 met en parallèle des traitements qui peuvent être identiques ou différents selon les canaux, mais dans tous les cas tels qu'ils s'attachent séparément à tirer l'information, nécessaire à la suite du procédé, sur un signal provenant d'une seule source. Cette étape réalise donc la séparation des sources lorsqu'elles sont en accès multiple. Elle réalise également la synchronisation sur le code de télémétrie, avec restitution de porteuse le cas échéant, et en particulier dans le cas de GNSS où les satellites sont défilants. Elle réalise la démodulation des données transmises dans le message de navigation.

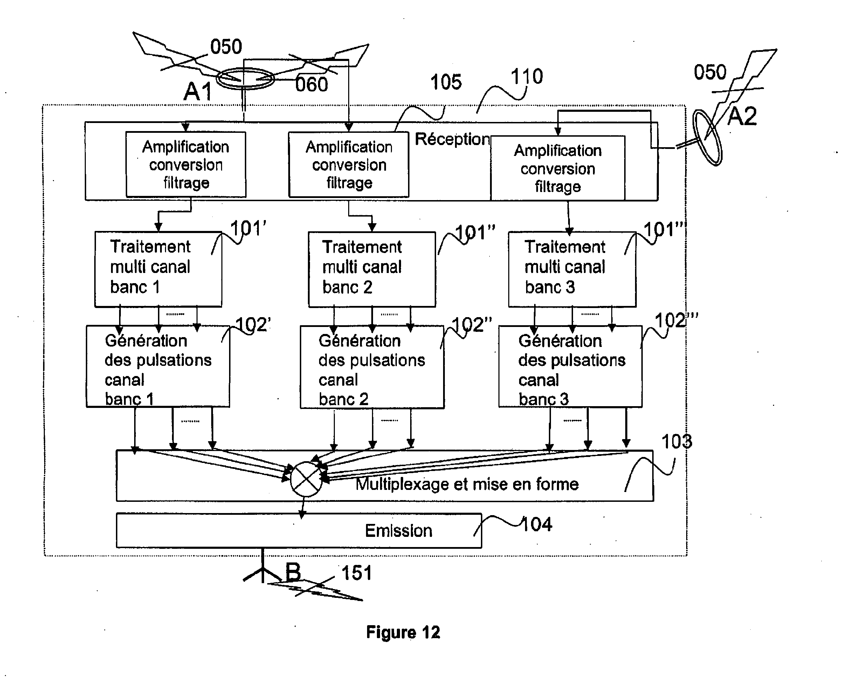

Par ailleurs, certaines sources vont fournir plusieurs signaux sur des fréquences différentes comme c'est le cas sur GNSS, et dans ce cas l'étape de réception peut avoir à multiplier les canaux de conversions en fréquence (voir figure 12 et 13 avec les signaux entrant 050 et 060). Selon une variante, le relais peut aussi travailler sur plusieurs aériens (A1 et A2 sur les figures 12 et 13), soit dans le but d'avoir une ouverture sur le « ciel », ou à l'intérieur d'un bâtiment, plus grande de façon à avoir une meilleure diversité géométrique soit pour atteindre des sources de nature différentes (extérieur et intérieur de bâtiment), soit enfin pour devenir un relais d'attitude. L'agencement des étapes de réception et de traitement multicanaux et enfin de générations des pulsations canal est dans ce cas un peu adapté à la configuration d'antenne. Les figures 12 et 13 illustrent deux possibilités de traiter cette adaptation d'agencement, la figure 12 offre une parallélisation totale des traitements alors que la figure 13 montre un cas où les canaux peuvent être mixés à partir d'un niveau de traitement qui peut être variable, de l'émission 105 au multiplexage 103. On observe en figure 13, qui représente un mode de réalisation particulier du procédé de relais d'attitude, que l'étape de réception 105 est divisée en deux étapes d'amplification conversion filtrage séparées, l'une 1051 est consacrée à la réception des signaux 050 et 060 par le capteur A1 et l'autre est réservée à la réception des signaux 050 par le capteur A2. On a supposé dans cette figure que les signaux 050 et 060 sont issus d'un même groupe de sources sur deux fréquences différentes. Par exemple, on suppose, sans perdre de généralité, que 050 est l'ensemble des signaux des satellites GPS reçus sur L1 et 060 est l'ensemble des signaux reçus des mêmes satellites GPS sur la fréquence L2. L'étape 1051, après une descente en fréquence, par exemple sur la moyenne des deux fréquences, fournit ses résultats à deux bancs de canaux de façon séparée. On observe alors en figure 13 une double étape de traitement, l'étape de traitement multicanal banc 1, référencée en 101' se charge des signaux en fréquence L1, et l'étape de traitement multicanal banc2, référencée en 101"se charge des signaux en fréquence L2. On voit que ces deux étapes ont des issues différentes. L'étape 101' fournit les données temporelles 151't à l'étape de génération des pulsations canal 102', et des données informationnelles 151'd à l'étape 101", de telle sorte que l'étape 101", ne fournit que le résultat du calcul des corrections bifréquence 151 "d, pour être traitées dans l'étape de génération des pulsations canal 102', en surimpression ou en correction directe des données temporelles 151't par exemple. On observe encore en figure 13, que la sortie de l'étape 1052, qui traite les signaux 050 reçus par le capteur A2 va être traitée par un banc de canaux spécifiques, dans l'étape de traitement multicanal banc3 101"'. Cette étape peut fournir des données temporelles de détection d'époque 151"'t en vue de générer des pulsations canal propres, grâce à l'étape 102"'. Grâce à sa réception également de données informationnelles 151'd, l'étape 101"' peut également calculer les écarts de réception entre capteurs A1 et A2, source par source et fournir cette donnée 151"'d aux deux étapes de génération de pulsations canal 102' et 102"' pour surimpression des signaux temporels traités respectivement par ces étapes. L'étape de multiplexage et mise en forme 103 réalise alors simplement le multiplexage des séries de pulsations canal provenant des étapes 102' et 102"'. En sortie de l'étape d'émission 104, le signal 151 est alors représentatif de la réception sur plusieurs capteurs par une variante de relais, dit relais d'attitude 110, et le signal 151 est dit pulsé multi synchrone multi-source multi-capteur. Il est à noter ici que le relais d'attitude doit remplir au moins la fonction de relais, telle qu'elle a été définie dans la description de la figure 3 en fournissant l'information principale fournie dans un signal 150, grâce à la réception sur au moins un des capteurs, et donc le signal 151 est un enrichissement d'un signal de type 150.

L'aérien B est le moyen de contrôler la propagation du signal pulsé multi synchrone multi-source généré par le relais 100. L'antenne B est adaptée à l'émission d'un ensemble ordonné d'impulsions ou de trains d'impulsions élémentaires de très courte durée à ultra courte durée, avec une puissance d'émission adéquate pour diffuser dans la zone de couverture du relais de façon préférablement hémisphérique, mais pouvant être isotrope, ou directionnelle selon le besoin de l'application. Une densité de flux homogène est préférée pour éviter des effets indésirables d'interférences ou d'effets de type proche-lointain.

Selon une variante, plusieurs aériens B1, B2,...,Bp peuvent être employés de manière à étendre la zone de couverture du relais.

L'ensemble d'impulsions ou de trains d'impulsions élémentaires couvre à minima les besoins de transmissions des échelles de temps de chacune des sources à transmettre avec une valeur de vecteur unitaire suffisante pour tenir les besoins de réactivité des applications que le relais dessert. Typiquement, dans le cadre de GNSS, une échelle de temps par source à 1 ms de pas est considérée satisfaisante, mais cette valeur est donnée ici à titre indicatif. On peut dès à présent retenir une vingtaine de sources GNSS visibles en permanence en tout point. Le signal ainsi composé est le signal pulsé multi synchrone multi-source 150.

Selon une implémentation préférentielle, lerelais adapté à relayer des signaux GNSS par un canal de transmission ultra large bande. En effet, étant donné leurs caractéristiques de pénétration des matériaux, leur très bonne résolution temporelle, et leur capacité à la discrimination de trajets multiples, les signaux impulsionnels en ultra large bande (ULB) sont avantageusement choisis pour constituer le signal pulsé multi synchrone multi-source 150. Les signaux GNSS bien connus de l'état de l'art, sont basés sur les horloges extrêmement stables incluses dans les émetteurs. Ces horloges ne sont pas synchronisées entre elles physiquement, mais une horloge virtuelle composite est générée au niveau des infrastructures qui contrôlent la constellation et chacune des horloges de satellite est calibrée en regard de l'horloge virtuelle composite appelée échelle de temps système. Cette technique permet, au niveau de l'utilisateur des signaux GNSS, une trilatération sur des mesures de temps d'arrivée (TOA) ou sur leurs différences (TDOA). Sans perdre de généralité, on parle, dans cette description de l'invention, de signaux GNSS pour tout signal à porteuse et modulation temporelle dont la génération :
- repose sur l'utilisation d'une horloge stable,
- offre des fronts montants suffisamment reconnaissables en synchronisation (large bande spectrale) et
- porte un moyen de comptage de ces fronts montants à partir d'une origine donnée des temps (par exemple grâce à de multiples proportionnalités entre les fréquences porteuses, les débits des codes de télémétrie qui se combinent dans le signal de navigation et les débits des données).

Selon une variante, d'autres sources sont envisageables, et en particulier celles appartenant à des systèmes de positionnement destinés à couvrir l'intérieur de bâtiments, qu'ils soient, par exemple sans que la liste soit exhaustive, des systèmes à base de télémétrie optique ou à base de techniques ultra large bande.

Selon une variante, le signal pulsé multi synchrone multi-source peut aussi être transmis par une liaison optique. Dans ce cas les antennes et les moyens d'émission sont adaptés.

Selon une variante, on utilise pour des raisons de compatibilité électromagnétique, ou bien pour des raisons d'extension de la zone de couverture du relais, des signaux pulsés à bandes plus étroites, mais cependant très larges pour obtenir une résolution temporelle satisfaisante. Il existe dans les allocations réglementaires de fréquences des bandes de largeur suffisantes dans les allocations aux services aéronautiques de radio navigation pour adapter les procédés décrits ici à ce type d'applications. Une largeur de 100 MHz doit typiquement convenir au procédé en permettant une résolution temporelle de bonne qualité.

Les étapes d'émission 104 et de réception 105 n'ont pas été détaillées dans la figure 3 ou 4, dans souci de simplification. Ici, on peut considérer que l'étape de réception est celle de l'état de l'art. Dans les figures, les antennes GNSS ont été représentées en ellipse, alors que les antennes propres aux signaux de l'invention sont représentées en brins. Les antennes portent une lettre de définition afin de bien distinguerles localisations de ces antennes.

Les implémentations de la partie réceptrice GNSS décrites ici sont basées sur des implémentations conventionnelles avec une connotation implémentation matérielle et dans l'espace temporel des corrélateurs. L'applicabilité des procédés de l'invention ne se limite cependant pas à ce type d'implémentations. Une implémentation logicielle est parfaitement acceptable, de même qu'une corrélation dans le domaine fréquentiel, la base étant simplement sur le besoin de synchronisation sur les marqueurs de temps du signal GNSS, fonction réalisée dans tous les cas.

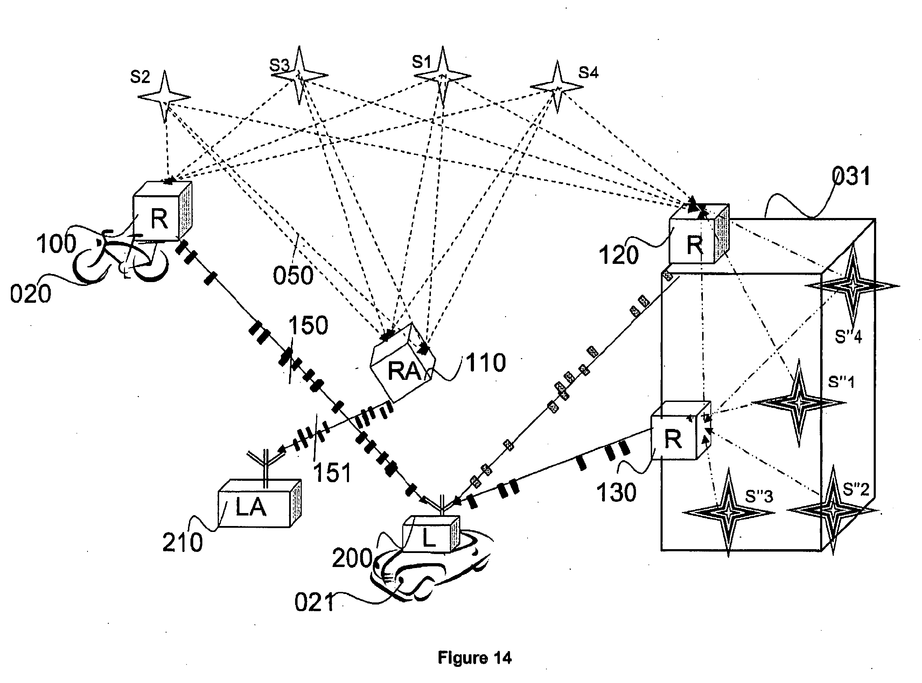

On donne, ci-après, une description détaillée d'un procédé, dispositif et système de localisation à distance et détermination d'attitude d'un équipement relais pulsé multi synchrone multi-source, en regard des figures 14 à 17.

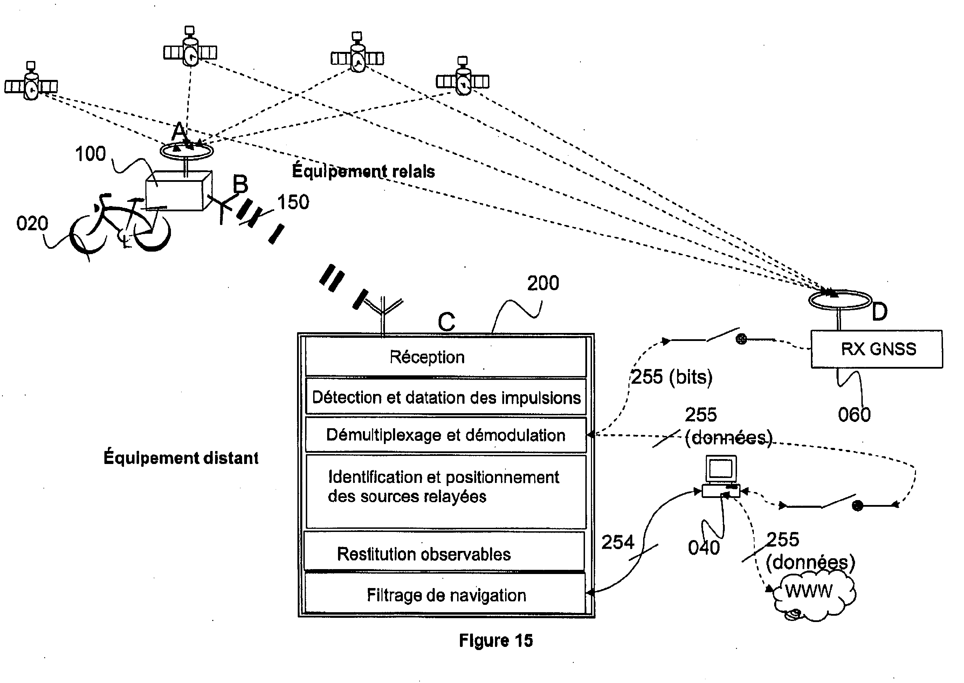

Les figures 14 et 15 donnent les conditions d'utilisation du procédé de localisation à distance d'un relais pulsé multi synchrone et multi-source, et, selon une variante, de détermination d'attitude lorsque le relais est dans sa variante de relais d'attitude et que le signal reçu est un signal pulsé multi synchrone multi-source multi-capteur.

Le relais pulsé multi synchrone multi-source, comme on le voit en figure 14 en 100, 110, 120 ou 130 peut être rendu ou non solidaire d'un équipement mobile (par exemple le relais 100 est solidaire du mobile 020 en figure 14). Cependant, la localisation n'existe réellement que si ledit relais reçoit et relaie un nombre de sources cohérentes (c'est-à-dire appartenant à une même constellation, par exemple, appartenant à Si, ou encore toutes appartiennent à l'ensemble S"k) égal au nombre de degrés de liberté du mouvement de l'équipement mobile plus un. Au contraire la mobilité de l'équipement mobile 021 qui est solidaire de l'équipement distant chargé de la localisation 200 a peu d'importance. Dans les cas où la redondance est supérieure au nombre minimal nécessaire le dispositif de localisation peut au choix réaliser une évaluation de la distance qui le sépare de l'équipement distant, ou bien réaliser une synchronisation avec l'équipement mobile 020. Il peut encore, en alternative, réaliser un contrôle d'intégrité sur la position restituée du relais par technique de type RAIM, après avoir adapté correctement, en regard du problème posé, le modèle statistique de bruit et d'erreur, d'avoir adapté les probabilités de fausse alarme et de non détection, en regard des probabilités des événements redoutés, des performances cherchées et des temps de corrélation des mesures entre elles. Cette technique utilise en effet la redondance des observables. Dans ce mode particulier de réalisation du procédé de localisation, l'adaptation est toute particulière, puisque les sources sont toutes traitées dans le même canal depuis le relais. En particulier dans les variantes où le relais a lui-même appliqué des contrôles d'intégrité, réduisant les erreurs liées aux sources, les événements redoutés ne se situent pas alors dans la mesure directe comme c'est traité habituellement dans l'état de l'art, mais davantage dans l'ensemble des erreurs, qui peuvent être décorrélées entre observables, et qui peuvent émaner du traitement propre au dispositif 200, c'est-à-dire dans le traitement du signal multi synchrone pulsé et l'extraction de ses données, ou à la propagation du relais à l'équipement distant.

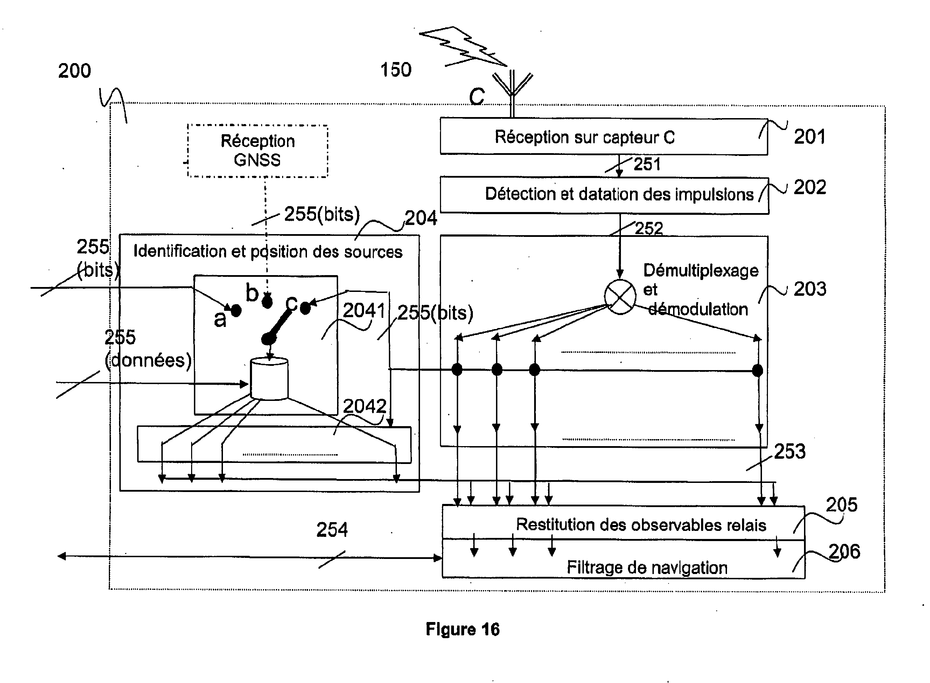

La figure 15 représente, schématiquement, les interfaces et les étapes du procédé mis en oeuvre par le dispositif 200, et la figure 16 détaille la progression où ces étapes sont réalisées dans un mode de réalisation préférentiel du procédé. Les étapes dans leur ordre de progression sont les suivantes : étape de réception 201 du signal pulsé multi synchrone multi-source, détection et datation des impulsions élémentaires et/ou trains d'impulsions élémentaires 202, puis démultiplexage et démodulation des impulsions élémentaires ou trains d'impulsions élémentaires 203, puis identification et positionnement des sources 204, à l'origine des impulsions dans la génération du signal reçu, et enfin une étape de restitutions des observables relais 205 et une étape de filtrage de navigation 206.

Le signal reçu 150 par l'aérien C est un signal composite des signaux pulsés multi synchrones multi-source provenant de tous les relais en visibilité de l'antenne C L'étape de réception 201 prévoit un traitement des accès multiples pour séparer le signal considéré des signaux provenant des autres relais. Cette étape n'est toutefois pas nécessaire si le système comprend un seul relais..

Selon une variante, pour l'équipement distant chargé d'une détermination d'attitude, le signal reçu est le signal pulsé multi synchrone, multi-source, multi-capteur 151 émis par un dispositif dit relais d'attitude 110 mettant en oeuvre des traitements du type de ceux illustrés en figure 12 ou 13.

Suite à l'étape de réception 201, l'étape de détection et datation 202 des impulsions élémentaires ou des trains d'impulsions élémentaires est chargée de tout traitement qui permet de rehausser le niveau du rapport signal sur bruit, dans la bande de réception utile, par des filtrages, jusqu'à obtention d'une capacité de détection, synchronisation et de démodulation selon les méthodes de l'art. Selon des modes de réalisation particuliers, le traitement de détection, en analogique avec une simple diode détectrice de l'art, ou après numérisation et filtrage adapté selon le cas, mesure ou calcule l'énergie du signal reçue, la compare à un seuil choisi en fonction d'une probabilité de fausse alarme acceptable dans le bruit ambiant. L'instant de franchissement de ce seuil est considéré comme instant d'arrivée d'une impulsion élémentaire ou d'un train d'impulsions élémentaires. Dans un mode de réalisation préférentiel, l'étape de détection et datation des impulsions 202 filtre le signal reçu pour isoler la bande d'intérêt et cherche, à l'aide d'un détecteur quadratique, les zones temporelles du signal présentant de l'énergie. Ces zones ne contiennent typiquement qu'une seule impulsion, ou qu'un seul train d'impulsions relatif à une époque de code pour une source et un relais donnés. Le détecteur quadratique fournit un échantillon qui est daté. Avantageusement, on utilisera une recherche par dichotomie, telle que décrite dans l'article de L. Reggiani intitulé « Rapid search algorithms for code acquisition in UWB impulse radio » publié dans IEEE Journal on Selected Areas in Communications, Vol. 23, N°5, May 2005, pages 898-908.

Les traitements spécifiques comportent en premier lieu la datation du déclenchement lié à la détection d'une impulsion sur l'échelle de temps locale. L'étape de détection et datation des impulsions reçues crée selon l'implémentation, en analogique un signal électrique, qui est échantillonné et tamponné, ou en numérique directement le tableau tampon, référencé 252 en figure 16, sur la période d'analyse choisie.

Selon une variante, dans les cas où les puissances reçues sur le signal pulsé multi synchrone multi-source sont faibles par rapport au bruit et en particulier du fait d'une puissance émise faible ou très étalée en spectre, et selon les types de modulation, le filtrage adapté de l'étape de détection et datation comporte un traitement de corrélation avec un motif de synchronisation, si le relais l'a utilisé, ou avec une autre réplique, par exemple, le motif d'identification du relais, le cas échéant, ou son code d'accès dans un souci de récupérer de l'énergie signal sur désétalement de spectre.

Selon une variante, le filtrage adapté de l'étape de détection et datation utilise toute information connue a priori pour établir des prévisions de séquences des instants d'arrivée des impulsions élémentaires ou trains d'impulsions élémentaires du signal reçu, qui sont générées en pseudo-réplique aidant la détection par corrélation. En particulier les informations connues a priori peuvent provenir du flux de données 254, qui est en sortie du procédé 200, en figure 16 c'est à dire les résultats propres de l'étape de filtrage de navigation 206, en bouclage interne, mais qui peut être également en entrée de cette même étape, provenant d'un dispositif externe 040 au procédé 200 et montré en figure 15, qui peut fournir des données d'initialisation ou bien d'assistance, pouvant être approximatives et fournies essentiellement en mode d'initialisation. En alternative, des données moins élaborées émanant de l'étape d'identification et de position des sources 204, ou encore de l'étape de restitution des observables 205. Ces prévisions utilisent le protocole de choix des marqueurs de temps retenus des échelles de temps des sources, tel que décrit dans le document d'interface du relais.

Selon une variante l'étape de détection comporte un traitement d'isolation du trajet direct, ce traitement pouvant se baser sur le fait qu'il est le premier arrivé. Une technique permettant de revisiter le signal en détection sur une fenêtre de Hamming entourant de part et d'autre la détection, ce traitement se déclenchant à l'instant de détection, permet de réaliser avec des seuils de détection et d'analyse appropriés et une nouvelle corrélation avec la forme impulsionnelle prévue, cette isolation.

Le tableau tampon 252, qui contient à la fois les datations d'arrivée des impulsions et les niveaux d'amplitude de ces impulsions élémentaires ou trains d'impulsions élémentaires, est alors analysé par l'étape de démultiplexage et démodulation 203. Cette étape est chargée de trier et séparer les impulsions élémentaires ou trains d'impulsions élémentaires en fonction de leur provenance source dans un but de coassement, par canal dit « canal d'observable relais », des impulsions et de leurs datations en temps local, chaque canal restituant l'échelle de temps d'une source, et l'ensemble des canaux réalisant un classement source par source. L'étape 203 est chargée d'autre part de restituer les flux de données supplémentaires qui ont été transmises par le relais, le cas échéant. L'étape peut utiliser pour le classement, par exemple, une analyse des périodicités, par FFT, d'autres moyens temporels étant envisageables. En sortie de cette étape, chaque impulsion élémentaire, qui était un marqueur de temps d'une échelle de temps source, et sa datation en échelle locale, est affectée à un canal, dit canal d'observable relais, chaque canal d'observables relais ayant pour fonction finale de rassembler tous les marqueurs de temps d'une seule source. Dans la variante 210 du procédé, cas où le signal reçu provient d'un relais d'attitude 110, l'étape de démultiplexage et de démodulation est chargée plus spécifiquement de séparer à la fois les informations des sources et des capteurs et crée un classement des données contenues dans le tableau tampon 252 en canal d'observables relais, chacun étant représentatif d'un couple source - capteur unique.

Selon une variante, l'étape de démultiplexage et démodulation 203 est supportée par des traitements de corrélation avec des séquences générées à l'issue d'un traitement supplémentaire de prévisions d'écarts temporels attendus (ou périodicités) sur une même source et entre sources (ou écarts fréquentiels si utilisation des FFT), lesdites prévisions étant réalisées grâce au protocole des marqueurs de temps choisis, et/ou grâce à la connaissance a priori des positions et vitesse relatives des sources et de l'équipement relais 100 solidaire de 020 et/ou de l'équipement distant 200, celles-ci étant obtenues par filtrage grâce aux résultats des étapes de restitution des observables 205 et ou de filtrage de navigation 206 et/ou d'identification et positionnement des sources 204 dans un bouclage interne des traitements.

En l'absence de prévisions déterministes possibles, le traitement de l'étape de démultiplexage et démodulation peut initialiser un traitement de type acquisition ou un nombre d'hypothèses, plus ou moins exhaustives ou réduites selon les incertitudes des connaissances approximatives des coordonnées, déplacements et caractéristiques des sources et relais, peut être envisagées et des tests d'hypothèses sont menés en utilisant, pour chaque hypothèse, un calcul d'un critère de vraisemblance choisi pour discerner une hypothèse de présence de signal utile, en l'occurrence une échelle de temps source, d'une hypothèse d'absence de signal utile. Les hypothèses prennent à chaque fois une valeur de position d'un marqueur de temps et une valeur d'unité de temps, menant ainsi une acquisition dans un domaine de temps fréquence, habituel dans le domaine de GNSS. Le maximum absolu ou relatif sur l'ensemble des hypothèses ou bien une valeur au dessus d'un seuil permet de dégager une ou des hypothèses à retenir pour des traitements ultérieurs. Eventuellement, le traitement est repris sur un nombre plus réduit d'hypothèses retenues en liste de cellules temps - fréquence susceptibles de contenir un signal utile, pour un critère plus sélectif.

D'autre part, cette étape de démultiplexage et démodulation 203 est chargée également de reconnaître les trains d'impulsions élémentaires qui modulent des informations, soit sur les échelles de temps des sources, soit entre ces échelles de temps, lesdites informations devant être démodulées pour restituer l'information qu'elles portent. Les techniques de l'art de la démodulation sont utilisées, et le document de standard du relais fourni les formats nécessaires à cette démodulation et traitement de formats, contrôle de parité, etc.

Selon une variante, lorsque le relais a utilisé la surimpression d'un identificateur de source sur les marqueurs de temps de l'échelle de temps de ladite source, l'étape de démultiplexage et démodulation 203 utilise cet identificateur comme moyen de séparer les sources, après démodulation des trains élémentaires d'impulsions correspondants. Dans un mode particulier de l'invention, l'identificateur de source est une séquence pseudo-aléatoire dont la fonction d'auto-corrélation présente un valeur élevée quand la séquence et sa réplique sont synchronisées, et une faible valeur quand la séquence et sa réplique sont décalées temporellement. Enfin, l'ensemble des séquences pseudo-aléatoires utilisées pour séparer les différentes sources présentent une inter-corrélation faible. L'étape de séparation de sources consiste alors à corréler la réplique d'une séquence avec le signal reçu pour différentes hypothèses de temps de réception du signal et différentes hypothèses de glissement temporel des marqueurs à cause du décalage Doppler dû aux déplacements des satellites, des relais et des dispositifs de réception.Selon une variante, lorsque le relais a utilisé la surimpression d'un identificateur de capteur sur les marqueurs de temps de l'échelle de temps de ladite source reçue par ledit capteur, ou les écarts de temps entre deux capteurs, l'étape de démultiplexage et démodulation 203 utilise cet identificateur comme moyen de séparer les capteurs, après démodulation des trains élémentaires d'impulsions correspondants. Des modulations différentes ont pu être utilisées aussi pour différencier les sources et/ou les capteurs et dans ce cas, le type de modulation peut également devenir un critère de différentiation des sources et/ou des capteurs. Quand le relais d'attitude a émis une différence de temps entre deux capteurs en surimpression d'un marqueur de temps d'un des deux capteurs (comme illustré en figure 13), l'étape de démultiplexage et démodulation 203 démodule évidemment cet écart de temps en surimpression, associe la datation du marqueur de temps du premier capteur au canal d'observable relais représentatif de la source correspondante et du premier capteur, et utilise la correction et la datation du premier capteur pour créer une datation d'un marqueur de temps à associer au canal d'observable relais représentatif de la même source et du deuxième capteur, et à destination de l'étape de restitution des observables relais 205.

Selon une variante, lorsque le relais a porté en surimpression, sur une ou plusieurs sources, un message de navigation venant directement de la source, celui-ci est fourni par un flux spécifique de cette information sans autre traitement que la restitution des bits 255 à l'étape d'identification et positionnement des sources 204 pour son traitement spécifique 2041 entrée c.

Selon une variante, lorsque le relais a porté en surimpression, sur les marqueurs de temps appartenant à une ou plusieurs sources, une correction spatiotemporelle, celle-ci est restituée après démodulation dans l'étape 203 et corrige les données de l'étape de détection et datation auxquelles elles doivent s'appliquer, après leur classement dans les canaux d'observables relais.

Selon une variante, lorsque les marqueurs de temps choisis sur une échelle source portent une information de temps depuis une origine bien définie, soit depuis la source, soit affectée au marqueur par le relais, en utilisant un compteur d'époque, un traitement pour retrouver la datation en échelle de temps source d'une impulsion élémentaire donnée est réalisé dans l'étape 203, en utilisant le compteur d'époque, le cas échéant.

Selon une variante, l'étape de démultiplexage et démodulation 203 utilise un filtrage temporel supplémentaire sur l'unité de temps restituée d'au moins une des échelles de temps restituées des sources, séparément les unes des autres, ou sur toutes, ce filtrage par source étant fourni comme information à l'étape de restitution des observables 205 pour une évaluation du Doppler (source Si - relais 100 + relais 100- équipement distant 200) et/ou également comme information en bouclage interne pour faciliter le traitement de détection et datation 202.

Selon une variante, l'étape de démultiplexage et démodulation 203 exploite des informations d'horloge virtuelle composite, le cas échéant où le relais fournit ce service, comme une échelle de temps servant à synchroniser l'échelle de temps locale, cette synchronisation ayant un effet de calage de synchronisation pour l'étape de détection et datation 202 et/ou de restitution des observables 205 et/ou directement de filtrage de navigation 206.

Selon une variante, et pour au moins un des canaux d'observables relais, l'étape de démultiplexage et démodulation 203 met en oeuvre un contrôle récurrent d'intégrité de la datation sur échelle locale des impulsions élémentaires reconnues en provenance d'une source, le résultat permettant soit une invalidation de ladite datation en cas de détection d'une anomalie, soit l'attribution d'un facteur de qualité de cette datation. Ce facteur de qualité correspond à un paramètre permettant d'établir un modèle statistique de bruits et d'erreurs liés à l'étape de démultiplexage et ou de détection et datation, avec un indice de confiance prédéterminé. Par exemple, cet exemple est à titre indicatif sans perdre de généralité, on choisit de retenir un modèle blanc gaussien centré pour borner à 99,99 % les bruits et erreurs liés aux résultats de datation d'une échelle de temps d'une source, et le facteur de qualité attribué est la variance de cette fonction de probabilité. Le facteur de qualité s'applique alors aux récurrences d'impulsions classées dans le canal d'observable. Ledit contrôle d'intégrité s'appuie, en amont de l'attribution du facteur de qualité, sur des critères de vérifications permettant d'obtenir pas à pas la confiance cherchée, avec par exemple :
- le calcul d'un critère de variation des écarts temporels d'une impulsion à la suivante, et la vérification de sa cohérence avec des valeurs possibles de déplacement de l'équipement solidaire du relais 020 ou de la source, ou de l'équipement distant chargé de la localisation 021, et concluant dans la négative à une anomalie dans la séquence des impulsions élémentaires,
- la présence identifiée par l'étape de détection et datation d'un multi entre la source relayée et l'équipement relais et ou entre le relais et l'équipement mobile, voire l'absence du trajet direct, analysé par le filtrage sur la fenêtre de Hamming,
- un taux d'erreurs de bits dans le traitement de démodulation trop élevé ou des contrôles de parité défectueux,
- un critère de décrochage des résultats de corrélation entre prédiction et signal reçu, ledit décrochage pouvant être attribué à une perte de signal, ou à une interférence liée à la multiplicité des relais, ou à la présence d'un signal provenant directement de la source, ou un autre signal interférant,
- une alerte ou une autre information transmise par la source dans son signal de positionnement lui-même, comme c'est le cas avec le futur système GNSS Galileo , ou dans celui d'une autre source, comme c'est le cas avec EGNOS ou WAAS retransmise par le relais qui est représentative de la non intégrité des informations portées dans le signal de positionnement lui même.

Le rôle de l'étape d'identification et de positionnement des sources 204 correspond à l'attribution d'une source à un canal d'observable relais et ensuite d'une position de la source à un marqueur de temps choisi pour restituer un observable dans l'étape de restitution des observables 205. La restitution des échelles de temps d'émission des sources n'est en effet pas suffisante à la localisation du relais 100, le procédé mis en oeuvre par l'équipement distant 200 devant également restituer la position des sources. Avant d'attribuer une position à un marqueur de temps choisi sur l'échelle de temps source restituée et datée en temps local, par les étapes de détection et datation 202 d'une part et par l'étape de démultiplexage et démodulation 203 d'autre part, il est nécessaire d'identifier la source et donc de reconnaître son identificateur. Cette opération est simplifiée dès lors que celui-ci a été mis en surimpression de l'échelle de temps par le marqueur. Elle peut aussi être traitée par une batterie de tests d'hypothèses utilisant une connaissance a priori d'un ensemble de sources ayant participé au procédé du relais, et un critère de vraisemblance appliqué au résultat d'une fonction choisie pour son pouvoir discriminant et calculée d'une part avec l'hypothèse et d'autre part avec le résultat de la fonction de démultiplexage et démodulation 203.

Les sources peuvent être fixes et dans ce cas leur position est invariante, donc mémorisable dans une base de données, ce qui est fait à l'installation du procédé dans l'équipement distant 200 ou de façon récurrente ou sur requête à partir d'un flux de données (255 - données en figure 15) qui peut provenir d'un serveur Internet par exemple par l'intermédiaire d'un équipement adapté (040 figure 15).

Dans un autre cas, les sources sont mobiles, comme c'est le cas pour les satellites des systèmes globaux de navigation par satellites. Les mouvements de ces dernières sources sont quasi déterministes et leurs trajectoires répondent à des modèles polynomiaux ou autres qui peuvent être utilisés sur une période de validité suffisante pour qu'une mémorisation des paramètres de ces modèles soit effectuée dans une base de données après avoir été acquis. L'étape d'acquisition peut avoir lieu également sur le flux de données (255 -données sur figure 15) également par le biais d'un serveur Internet connu de l'art ou spécifique, par un moyen filaire ou sans fil, qui peut par ailleurs être intégré au dispositif 200. Selon une variante, l'étape d'acquisition peut avoir lieu également sur le flux de bits (255- bits), directement récupéré d'un récepteur GNSS (060 figure 15), capable de recevoir et démoduler les mêmes sources de signaux que l'équipement relais, et transféré en entrée (a) de l'étape d'acquisition et mémorisation de message 2041 intégrée dans l'étape d'identification et positionnement des sources 204. Enfin dans une autre variante du procédé, un récepteur GNSS est intégré dans le dispositif 200 et fournit le flux 255-bits en entrée (b) de ladite étape d'acquisition et mémorisation de messages. Les messages de navigation des systèmes globaux de navigation par satellites contiennent également des paramètres de modèle de corrections des horloges sources. Ces modèles d'horloge sont récupérés conjointement par ces étapes pour être intégrés également dans l'étape de restitution des observables. L'équivalent pour les sources fixes ou pour des sources mobiles, à savoir des modèles permettant de corriger des instabilités des horloges de sources n'appartenant pas à la classe des systèmes globaux de navigation par satellite est également à prendre en compte pour une meilleure précision dans la restitution des observables 205.

L'étape de restitution des observables est chargée de reconstruire, à partir des résultats de datation en échelle de temps locale, des impulsions marqueurs de temps, réalisée en étape 202, de la reconnaissance des marqueurs de temps provenant d'une même source, réalisée en étape 203, de l'identification et du positionnement de la source, réalisée en 204 toutes les informations susceptibles de fournir après une étape de traitement adaptée à restituer la position de l'équipement relais 100.

Cette restitution d'observables peut se faire par source sous la forme d'une pseudo distance entre source et relais, et dans ce cas, le terme de pseudo distance prend ici en compte le fait que la désynchronisation de l'horloge locale à l'horloge de source contient également la distance relais - équipement distant et tout autre mode commun à toutes les sources relayées dans la composition des segments de propagations entre source et équipement distant. Pour chaque source, la pseudo distance source - relais est calculée grâce à la différence entre les résultats de la datation d'au moins une des impulsions en échelle de temps locale et sa restitution en échelle de temps source. La datation de l'impulsion marqueur de temps en échelle de temps source peut être traitée en absolu si des compteurs d'époques ont été relayés ou sinon est traitée avec un nombre d'ambiguïtés.

Selon une variante, on utilise des incréments temporels de pseudo distances, en utilisant l'unité de temps source, qui peut être variable, restituée par différence de datation locale entre deux marqueurs de temps successifs de la même échelle de temps source telle qu'elle est restituée sur un canal d'observables relais. Ainsi, pour chaque source, la différence de datation d'au moins une des impulsions à au moins une des suivantes peut être calculée, représentative de la pseudo vitesse, à la dérive près d'horloge locale et/ou variation de la distance équipement relais - équipement distant (sans distinction l'une de l'autre)

Selon une variante, et pour éliminer cette horloge locale et ses défauts, on restitue un observable par couple de sources, par exemple en utilisant une source pivot, ou bien une échelle de temps virtuelle composite d'un groupe de sources cohérentes auquel appartient la source dont on veut restituer l'observable. Dans ce cas, on a des observables en différences de temps d'arrivée ou technique dite de TDOA. A partir d'une source pivot, et pour chaque autre source, la différence de datation est calculée en temps local d'au moins une des impulsions à celle de ladite source pivot, représentative d'un même marqueur de temps. Enfin, à partir d'une source pivot, et pour chaque autre source, les doublés différences, de datation d'au moins une des impulsions à au moins une des suivantes sur une source, à la même quantité évaluée pour la source pivot, pour des impulsions représentatives des mêmes marqueurs de temps, permettent de retrouver des différences d'effets Doppler d'une source à l'autre représentatifs de mouvements relatifs entre chaque sous-ensemble de type source - relais.

Selon une variante, dans le procédé de détermination d'attitude, il est nécessaire de réaliser en plus des observables relais, par la méthode décrite plus haut et appliquée à des canaux d'observables relais tous représentatifs d'un même capteur, il est nécessaire de restituer les observables d'attitude par l'un au moins des calculs suivants :
- pour chaque capteur et pour chaque source, la pseudo distance source - capteur du relais, calculée grâce aux résultats de la datation d'au moins une des impulsions du couple capteur - source en échelle de temps locale et sa restitution en échelle de temps source, (technique TOA niveau position et attitude),
- pour chaque capteur, et pour chaque source, la différence de datation d'au moins une des impulsions à au moins une des suivantes, (technique TOA niveau vitesse et attitude),
- pour chaque source, à partir d'un capteur pivot, et pour chaque autre capteur, la différence de datation d'au moins une des impulsions liées à ladite source et audit capteur à celle liée à la même dite source par l'intermédiaire du dit capteur pivot, lesdites impulsions étant représentatives d'un même marqueur de temps de ladite source (technique TOA, niveau position -TDOA, niveau attitude),
- à partir d'un capteur pivot et d'une source pivot, et pour chaque autre couple source - capteur, les différences d'une source à la source pivot des différences de datation d'au moins une des impulsions liées, pour ladite source, audit capteur à celle liée à la même source et au dit capteur pivot, lesdites impulsions étant représentatives d'un même marqueur de temps de ladite source (technique TDOA niveau position et attitude).

L'étape de restitution des observables est aussi chargée d'effectuer les corrections des erreurs de principes connues et estimables. En particulier dans le cas où les sources sont celles des systèmes globaux de navigation par satellites, les corrections de l'état de l'art de ces systèmes habituellement réalisées dans un récepteur des signaux de ces sources sont appliquées pareillement aux observables restitués.

Selon une variante, lorsque le relais fournit le service correspondant, les corrections différentielles transmises et ou les corrections bifréquence (pour correction des délais ionosphériques) sont appliquées.

Selon une variante, et pour au moins un des canaux d'observables relais, l'étape de restitution d'observables 205 met en oeuvre un contrôle d'intégrité sur les mesures relais ainsi restituées, pour servir d'observables dans l'étape finale du procédé à savoir le filtrage de navigation 206. Le résultat de ce contrôle d'intégrité, dit mesure relais, permet soit d'invalider l'observable en entrée du filtre s'il est jugé qu'une anomalie a été détectée ou que le facteur de qualité est inapproprié à un bon fonctionnement du filtre de navigation soit d'attribuer un facteur de qualité à l'observable, qui vient pondérer celui-ci dans son utilisation par le filtrage de navigation. Comme pour le facteur de qualité de la datation; ce facteur de qualité correspond à un paramètre permettant d'établir un modèle statistique de bruits et d'erreurs liées à l'étape de restitution des observables, avec un indice de confiance prédéterminé. Le contrôle d'intégrité mesures relais et le facteur de qualité applicable aux observables relais s'appuie, sur des critères de vérifications permettant d'obtenir pas à pas la confiance cherchée, avec par exemple :
- la prise en compte du facteur de qualité datation,
- la prise en compte de la disponibilité d'un positionnement précis de la source en regard de la performance attendue ou la prise en compte d'une valeur de cette précision,
- un indice de qualité ou d'exclusion de la source, établi par le contrôle d'intégrité du système de positionnement lui-même et transmis par le signal de positionnement, la présence et la précision des corrections spatiotemporelles appliquées aux mesures et datations,
- un taux d'erreurs de bits et contrôles de parités défectueux anormalement élevé dans l'acquisition et la mémorisation des messages au niveau de l'étape 204.

L'étape de filtrage de navigation utilise les équations d'état classiques du problème de positionnement de l'équipement relais en relation avec les observables restitués dudit problème. Les inconnues d'état du système sont la position et la vitesse du relais, dans tous les cas. Les inconnues du temps local, en biais et dérive, existent seulement dans le cas où les observables ont été traités en technique TOA. Dans la technique TDOA ils ont été naturellement éliminés. Dans le cas où ellles existent, ces inconnues représentent de façon indiscernable les réels paramètres de désynchronisation avec l'échelle de temps virtuelle composite du réseau cohérent de sources utilisées mais aussi de tous les modes communs aux observables en particulier les temps de propagation de l'équipement relais à l'équipement distant. L'estimation des inconnues d'état, en position et en vitesse du relais est traitée séparément, par la résolution du modèle d'état en position et du modèle d'état en vitesse, préférentiellement après linéarisation autour d'une estimée proche par une technique de moindres carrés. La résolution du temps n'est décomposable en restitution réelle du temps et de la distance équipement relais équipement distant qu'à la condition d'avoir des observables supplémentaires, par exemple un signal de télémétrie lui-même proposé par le relais à partir d'une horloge stable ou stabilisée sur un réseau redondant de sources cohérentes. L'horloge virtuelle composite peut jouer ce rôle si elle a été établie à partir d'un réseau de sources cohérentes travaillant elles mêmes sur des horloges stables, ce qui est le cas des constellations GNSS.

Selon une variante, lorsque le relais est un relais d'attitude, les inconnues d'état du système comportent les angles d'Euler ou le quaternion d'attitude en plus des positions et vitesse du centre de gravité, ou bien concernent les positions et vitesses des centres de phase de chaque capteur. Les systèmes d'équations d'états sont écrits en regard des observables groupés par sources et par capteurs, selon la méthode décrite plus haut, et là encore avec l'alternative de la technique TOA, en ajoutant l'inconnue liée au temps local et l'alternative de la technique TDOA. Cependant le processus utilisé pour la résolution est équivalent dès lors qu'on a pris le soin de séparer par groupes d'inconnues : position, vitesse et attitude.

Selon une variante, une technique de moindres carrés pondérés ou de filtrage de Kalman est utilisée, en utilisant les paramètres d'un modèle statistique de bruit et d'erreurs sur chaque observable. Ce modèle statistique est plus ou moins élaboré selon les applications du procédé, et selon la connaissance a priori des erreurs de principes de la mesure et des bruits rencontrés au niveau du capteur de réception. Il peut être spécifique à chaque observable. En particulier, ces modèles sont dépendant de la nature du lien physique, RF ou optique, de la nature de la source, qui peut être à horloge stable ou non, de l'environnement traversé le long de la propagation, intérieur au bâtiment ou extérieur, environnement diffusant ou diffractant, ou encore liés à la qualité du relais, le niveau de protection des codes correcteurs d'erreur dans la modulation des données, la présence ou non des données de calibration transmises, et à appliquer pour la réduction de ses propres erreurs de principe.

Préférentiellement, et en particulier dans le cas d'utilisation d'une technique de moindres carrés pondérés, le modèle statistique de bruits et d'erreurs est choisi blanc gaussien centré en utilisant un bornage supérieur de la variance correspondant au niveau de confiance cherché dans la précision et l'intégrité des observables, ledit niveau de confiance étant négocié au niveau de l'utilisateur et pris en compte dès le document de standard d'interface du relais, soit en terme final de localisation sur l'erreur de position et vitesse du relais, soit plus directement au niveau des observables. La pondération peut être naturellement liée dans ce cas aux résultats des contrôles d'intégrité effectué dans l'étape de restitution des observables et être directement liée au facteur de qualité attribué alors à l'observable.

Dans un mode particulier de réalisation du procédé de localisation et de détermination d'attitude, l'étape de filtrage de navigation 206 réalise elle-même une évaluation de la précision et de l'intégrité des estimations de position et vitesse de l'équipement relais qui viennent en sortie de ce procédé, pour un affichage à l'utilisateur final de l'application par exemple, à l'aide du dispositif 040 en figure 15. Cette évaluation consiste à calculer un volume de protection, centré autour de la position affichée, et qui contient la position vraie de l'équipement à localiser, à l'indice de confiance négocié près, ou plus exactement à son complément à un près. L'indice de confiance va déterminer en effet un pourcentage par exemple de 99,9 % dans la confiance à mettre dans la position affichée alors que le volume de protection ne doit pas être dépassé par la position vraie à plus d'une valeur d'une probabilité de non détection du dépassement qui correspond au complément à un de l'indice de confiance, soit à 1-0,999=0,001=10⁻³ dans l'exemple ci-dessus, cette valeur n'étant proposée ici qu'à titre d'exemple. Le volume de protection est calculé selon un indice de confiance prédéterminé selon l'application, et correspond donc à une probabilité d'avoir une erreur du positionnement au-delà du volume de protection, sans avoir eu de déclenchement d'alarme signalant la non intégrité ou l'invalidité de la position affichée. Ce volume est préférentiellement cylindrique, mais peut être aussi ellipsoïdal. Dans le cas du volume cylindrique, on distingue les composantes horizontales des erreurs de position, limitées par le rayon de protection horizontal qui définit un cercle horizontal autour de la position affichée qui contient l'erreur de position horizontale à l'indice de confiance près, des composantes verticales du segment vertical qui prolonge le cercle horizontal en volume cylindrique au dessus et en dessous du plan horizontal et qui contient l'erreur de position verticale à l'indice de confiance près. L'équivalent pour la vitesse est évident. Le calcul du volume de protection va évidemment dépendre de la qualité de l'observabilité des inconnues d'état du système à travers les mesures ou observables. Deux facteurs multiplicatifs sont évidents dans le problème posé, à savoir la diversité géométrique des sources qui ont été relayées par l'équipement relais et transformées en observables relais valides et calculé en dilution de précision, comme dans l'état de l'art, et la qualité des mesures elle-même, qui peut être directement liée au modèle statistique de bruits et d'erreurs affectant ces mesures. Dans le cas où les mesures sont homogènes, le même modèle statistique de bruits et d'erreurs peut être pris pour tous les observables et dans ce cas, on choisit préférentiellement un modèle blanc gaussien centré avec une variance qui dépend a minima du rapport signal sur bruit de la réception.

Selon une variante, dans le cas de l'utilisation d'une technique de moindres carrés pondérés et /ou de filtrage de Kalman, l'évaluation de la précision calcule la variance de l'erreur d'estimation des inconnues du modèle d'état utilisé, en utilisant les équations d'état et en se ramenant aux modèles statistiques de bruit et d'erreurs des observables, après avoir supposé qu'ils ne sont pas corrélés entre sources jusqu'au relais puis corrélés du relais à l'équipement distant, pour certains types d'erreurs.

Selon une variante, l'étape de filtrage de navigation 206 met en oeuvre, lorsque la redondance des observables est satisfaisante en regard du nombre d'inconnues des équations d'état, un contrôle supplémentaire pour vérifier l'intégrité de l'estimation de position, de vitesse, et le cas échéant d'attitude par le calcul des résidus a posteriori sur chaque observable. Il s'agit pour cela de calculer la différence entre chaque observable restitué et chaque observable ré-estimé a posteriori à partir de la valeur affichée (ou estimée sortant du filtre) de position, vitesse, attitude du relais. En supposant un modèle statistique gaussien centré pour chaque observable, celui par exemple utilisé dans le contrôle d'intégrité mesure relais, la norme de ce résidu doit suivre une loi du khi2, et un test du khi2 sur la norme du résidu permet de détecter une incohérence sur les observables susceptible d'avoir introduit une erreur de position et /ou une erreur de vitesse et /ou une erreur d'attitude. Avec une redondance suffisante dans les observables, liée à la fois au nombre d'observables et à leur diversité géométrique, cette technique dérivée des techniques RAIM, est capable de donner le volume de protection selon un indice de confiance cohérent du seuil choisi pour le test du khi2 d'une part, de fournir lorsque le test est négatif une invalidation des données affichées, et enfin, avec un niveau de redondance encore supérieur, une isolation de l'observable défaillant. Ce traitement particulier aboutit dans un retour sur les traitements du filtrage de navigation pour recalculer une position intègre chaque fois que cela est possible, en particulier en cas de redondance suffisante, et également un retour sur l'étape de démultiplexage et démodulation pour une réparation du traitement de classement.

Des techniques étendues du RAIM sur des mesures non indépendantes sont également possibles, en particulier sur les observables pseudo distance et pseudo doppler d'une même source. Dans ce cas le volume de protection de la position relais est calculé à partir d'une réduction simultanée des formes quadratiques qui représentent le résidu d'erreur entre observable réalisé et observable estimé d'un côté et l'erreur de position relais d'un autre côté, dès lors qu'un biais ou erreur existe sur les deux mesures provenant d'une même source.

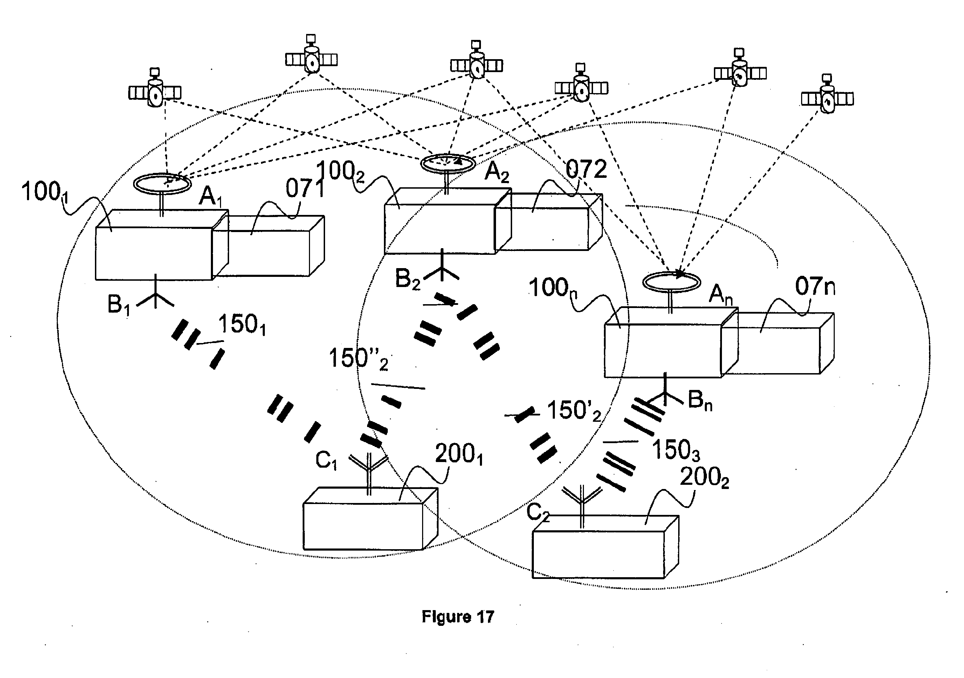

La figure 17 montre un exemple de système mis en oeuvre pour une gestion de flotte étendue d'un ensemble d'équipements 071, 072,... 07n à partir des procédés de relais selon des modes de réalisation particuliers. L'adaptation consiste ici à résoudre les problèmes liés à l'accès multiple pour des relais émettant vers plusieurs équipements distants différents, et pour un équipement distant de traiter une provenance simultanée de plusieurs relais. Ainsi on peut avoir besoin de localiser un même relais par plusieurs stations de localisation, et le signal pulsé multi synchrone multi-source utilisé pour chacune des stations peut ne pas avoir à relayer exactement les mêmes sources. Il peut être alors nécessaire d'émettre des signaux différents pour un accès multi-point. Dans ce cas le relais peut utiliser un motif d'authentification différent adapté à cette mise en oeuvre. Inversement, une station de localisation peut avoir besoin de localiser une pluralité de relais et dans ce cas, un unique canal de transmission pour tous les relais est préférable. Une technique de multiple accès doit être alors appliquée au niveau de chaque relais de cette transmission, afin qu'au niveau de la localisation la séparation des signaux des relais soit possible et efficace. En figure 17, chacun des équipements 071, 072, ... 07n de l'ensemble à localiser est solidaire d'un relais pulsé multi synchrone multi-source 100₁, 100₂,... 100ₙ, respectivement équipés des capteurs A₁, A₂, ...Aₙ, pour la réception des signaux de positionnement des sources, représentés ici sans perdre de généralité sous forme de satellites, et équipés des aériens émetteurs de signaux pulsés multi synchrones multi-source B₁, B₂, ...Bₙ. En figure 17, deux équipements distants assurent ensemble la localisation de toute la flotte. Il s'agit des équipements 200, et 200₂, respectivement équipés de leurs capteurs respectifs C₁ et C₂. L'équipement 071 émet grâce à son relais 100₁ à destination du dispositif 200₁ le signal 150₁, qui lui-même reçoit aussi le signal 150"₂, en provenance de l'équipement 072 grâce à son relais 100₂. Ce même équipement 072 émet grâce à son relais aussi un signal 150'₂, différent de 150"₂ à destination de l'équipement distant 200₂. Enfin l'équipement distant 200₂ reçoit et traite simultanément le signal pulsé multi synchrone multi-source 150₃ en provenance du relais 100ₙ de l'équipement 07n. Selon une variante, les relais peuvent être équipés de liaisons numériques supplémentaires qui permettent de recevoir des requêtes de la part des équipements distants chargés de la localisation et n'être activés que sur ces requêtes.

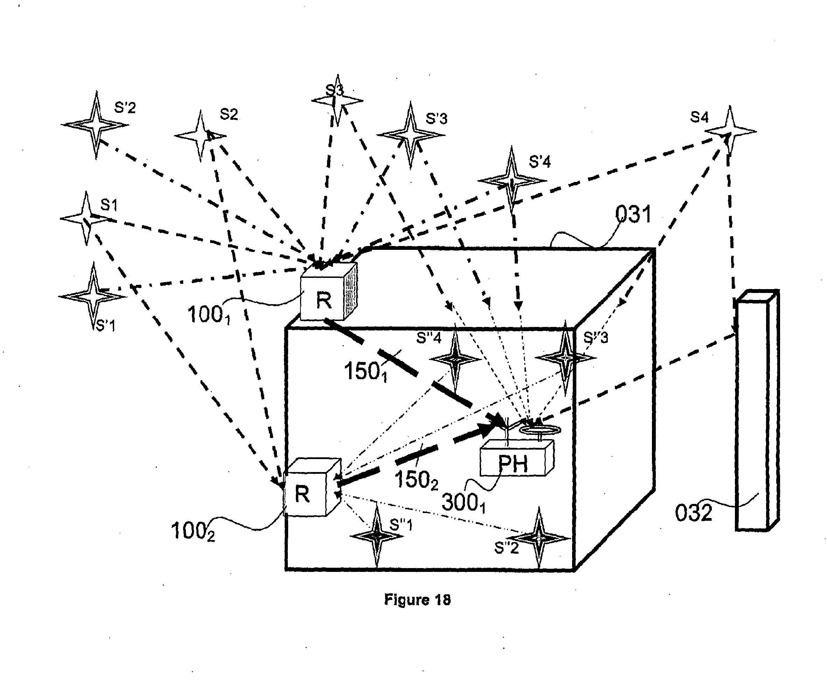

On donne, ci-après, une description détaillée du procédé et dispositif de positionnement hybride aidé par un relais pulsé multi synchrone multi-source, en regard des figures 18 à 23.

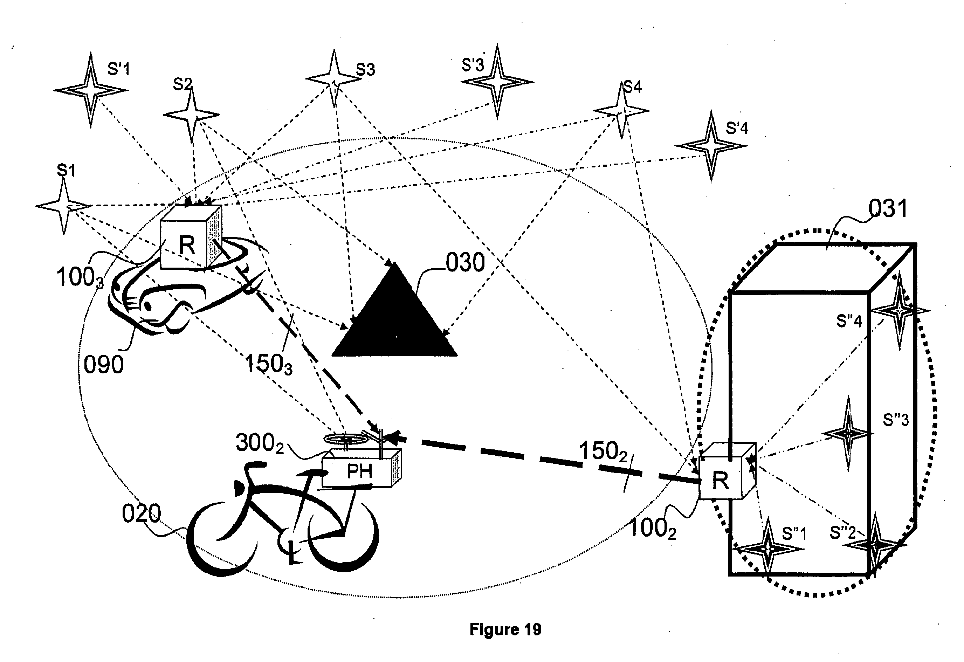

Les figures 18 et 19 donnent deux cas particuliers d'environnement d'applications du dispositif 300 mettant en oeuvre le procédé de positionnement hybride par relais pulsé multi synchrone multi-source. Ces exemples sont donnés à titre indicatif et pour montrer la variété d'applications plutôt qu'à titre limitatif. La figure 18 indice le dispositif en 300₁, alors que la figure 19 indice le dispositif en 300₂ pour les distinguer sans pour autant chercher à les différencier, les figures 18 et 19 montrant des applications semblables dans deux environnements d'utilisation différents.

Le procédé mis en oeuvre par le dispositif 300 lui permet de se positionner lui-même, ou de positionner un équipement mobile dont il est solidaire. Le dispositif 300 est équipé de deux capteurs. L'un des capteurs, dont l'aérien est représenté en ellipse, est capable de recevoir les signaux de positionnement émis depuis les sources inter opérables Si et S'j, par exemple. Le deuxième capteur, dont l'aérien est représenté en brins, est capable de recevoir au moins un signal pulsé multi synchrone multi-source 150x, émis depuis au moins un dispositif 100i mettant en oeuvre le procédé de relais pulsé multi synchrone multi source. Selon une variante, le dispositif 300 peut également être équipé d'un autre capteur et récepteur permettant de recevoir d'autres sources de signaux de positionnement de type S"k.

En figure 18, on voit un dispositif 300₁ à l'intérieur d'un bâtiment 031. Il reçoit les signaux des sources S3, S'3, S4, S'4, interopérables, mais les reçoit très atténués à cause de la structure du bâtiment 031. Il n'est pas capable de la réception des sources S"k, réseau spécifique offrant un service de positionnement à l'intérieur du bâtiment 031. Pour le signal de la source S4, il reçoit en combinaison avec le trajet direct un multi trajet par réflexion sur le bâtiment 032, dont la puissance est beaucoup plus importante que celle du trajet direct. Par ailleurs, il reçoit les signaux 150₁ et 150₂ émis respectivement par les relais 100₁ et 100₂.

Le relais 100₁ reçoit avec une bonne visibilité l'ensemble des sources S1 à S4 et S1 à S'4 et relaie des informations temporelles essentielles de ces sources conformément au procédé de relais pulsé multi synchrone multi-source dans le signal 150₁.

Le relais 100₂ reçoit avec une bonne visibilité l'ensemble des sources S"1 à S"4, d'un réseau de sources cohérentes installées pour fournir un service de positionnement spécifique à l'intérieur du bâtiment, par un capteur situé à l'intérieur du bâtiment 031. Il est aussi équipé pour recevoir les sources S'1 à S'4, d'un service de positionnement global, grâce à un capteur situé à l'extérieur du bâtiment 031, mais ne reçoit que certaines des sources, les S1 et S2 pour des raisons de masquage du bâtiment. Il relaie dans le signal 150₂ grâce à un émetteur configuré pour diffuser à l'intérieur du bâtiment des informations temporelles essentielles des sources qu'il reçoit, sans différencier leur provenance, conformément au procédé de relais pulsé multi synchrone multi-source. Selon une variante, puisqu'il reçoit quatre sources cohérentes S"k, il peut générer également les pulsations d'une horloge virtuelle composite, représentative de la synchronisation desdites sources.

Grâce à des modes de réalisation particuliers du procédé de positionnement hybride, le dispositif 300₁ profite d'une amélioration sensible de sa sensibilité à la réception des signaux faibles S3, S4, S'3 et S'4, grâce à l'hybridation serrée des traitements de réception de ces signaux avec les informations reçues et traitées du signal pulsé multi synchrone multi-source 150₁. Il profite également d'une amélioration de précision sur la mesure de pseudo distance avec S4 car il peut éliminer le multi trajet combiné sur S4. Enfin, il peut profiter d'une très nette amélioration de disponibilité du service de positionnement, à la fois en précision et en intégrité, tout en étant à l'intérieur du bâtiment et bien qu'il ne soit pas équipé pour profiter du service spécifique de positionnement crée par S"k grâce à une hybridation lâche, traitée au niveau du filtrage de positionnement, pour une augmentation très nette du nombre des observables à entrer dans le filtre, grâce aux informations sur des sources extérieures et intérieures portées par le signal 150₂, signal émis par le relais 100₂. Finalement, au moment des transitions de l'intérieur à l'extérieur du bâtiment, le service de positionnement est très continu, sans perte de temps à l'acquisition, sans changement de repère géodésique de positionnement, sans changement d'échelle de temps globale, car le relais 100₁ fournit également les messages de navigation des sources défilantes des systèmes GNSS Si et S'j, par exemple, ainsi que des corrections différentielles qui autorisent un positionnement très précis. Les relais n'ont pas de besoin eux-mêmes d'être précisément positionnés puisqu'ils transfèrent naturellement, avec leur signal, toutes les informations nécessaires pour que le dispositif calcule lui-même sa position, comme expliqué dans le procédé de localisation. Ils n'ont pas davantage besoin d'être synchronisés.

En figure 19, on voit le dispositif 300₂ solidaire d'un mobile 020. Il est en milieu urbain, et est capable de recevoir et traiter les signaux des systèmes GNSS pour un service de positionnement standard sur les sources Si uniquement. Compte tenu de l'environnement, il ne peut recevoir que les sources S1 et S2, à cause du masquage complet de l'obstacle 030. Par ailleurs, il est capable de recevoir et traiter les sources S"k mais n'est pas à ce moment dans la zone de couverture de ces sources. Il vient d'être mis en service après une mise hors tension de longue durée et ne peut pas, en conséquence, calculer son positionnement, et met beaucoup de temps pour acquérir les messages de navigation qui lui permettent d'acquérir plus vite des nouveaux satellites.

Par contre, il est à portée du relais 100₂, solidaire du bâtiment 031 et qui relaie vers l'extérieur grâce à un émetteur diffusant vers l'extérieur le signal pulsé multi synchrone multi-source 150₂ portant des informations venant à la fois des réseaux cohérents de sources Si et S"k. A l'instant de la figure, le relais 100₂ n'est pas en visibilité des sources S1 ni S2, également à cause de l'obstacle 030. Grâce au signal pulsé multi synchrone multi-source 150₂, le dispositif 300₂ qui met en oeuvre le procédé de positionnement aidé par un relais multi synchrone multi-source est capable de localiser le relais 100₂ par le procédé de localisation, et intégré naturellement dans celui mis en oeuvre par les traitements réalisés par un dispositif de type 300. De cette localisation, il peut tirer une valeur approximative de sa propre position, il peut aussi construire des observables relais sur les sources S3 et S4, dont certains marqueurs de temps sont aussi intégrés dans le signal pulsé 150₂. Grâce au procédé de positionnement aidé par le relais pulsé multi synchrone multi-source, et en particulier grâce au filtrage hybride de navigation (hybridation lâche) le dispositif 300₂ est capable d'effectuer une première estimation de sa position.

Le dispositif est aussi à portée d'un autre relais, le dispositif 100₃, solidaire d'un équipement mobile 090. Ce relais 100₃ profite d'une réception des deux systèmes de positionnement globaux inter opérables Si et S'j et est en bonne visibilité des sources. Le signal pulsé multi synchrone multi-source 150₃ qu'il émet porte donc des informations sur les sources S1 et S2 qui viennent en redondance des observables utilisés dans la première estimation de position et vont lui apporter un taux de confiance plus élevé.

Par ailleurs, le signal pulsé multi synchrone multi-source 150₃ apporte des informations sur les sources S3 et S4, qui ne sont pas reçues en direct, bien que dans la zone de couverture. Le récepteur des sources Si inclut dans le dispositif 300₂ peut lancer l'acquisition des signaux de ces sources, sur des zones de recherche temps fréquence restreintes, et avec un niveau de sensibilité amélioré, grâce à l'hybridation serrée avec les canaux de traitement des observables relais initialisés pour le traitement du signal 150_{3.} Bien que le relais.soit mobile, la redondance apportée par le signal 150₃ et en particulier grâce à la réception des sources multiples Si et S'j, la position et la vitesse du mobile 090 qui supporte le relais 100₃ peuvent être estimées et compensées pour réduire encore les indisponibilités de positionnement du mobile 020.

Par ailleurs, grâce à un traitement d'hybridation serrée à partir des informations sur les sources S"k obtenues grâce au signal 150_{2,} si le mobile 020 s'approche et entre dans le bâtiment 031, son estimée de positionnement est immédiatement disponible par le service de positionnement fourni par ces dernières sources.

Dans ce deuxième exemple d'exploitation opérationnelle, on observe encore que les performances de positionnement du dispositif 300₂ sont largement améliorées en disponibilité, précision, intégrité et continuité de service, dans un environnement où des dispositifs relais des signaux de positionnement existent et mettent en oeuvre le procédé de relais pulsé multi synchrone multi-source, et en amenant une forte interopérabilité des services de positionnement.

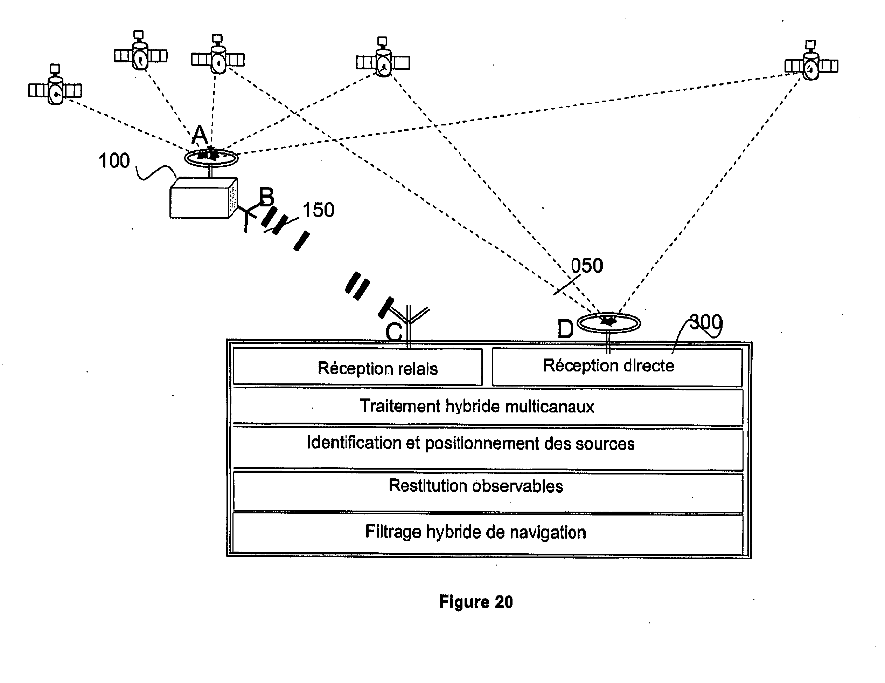

En figure 20, on observe les interfaces du dispositif 300, et on voit un aperçu des étapes du procédé qu'il met en oeuvre.

Le dispositif possède au moins deux moyens de réception différents. L'un, pour une réception directe des signaux de positionnement émis par un ensemble cohérent de sources, illustrées comme des satellites en figure 20, sans que cela soit une restriction, a un aérien repéré en D. L'autre, pour une réception des signaux pulsé multi synchrone multi-source, émis par au moins un dispositif 100 mettant en oeuvre un procédé de relais pulsé multi synchrone multi-source, a un aérien repéré en C. Le dispositif possède aussi un moyen nécessaire à mettre en oeuvre un traitement hybride multi canaux, un moyen d'identification et positionnement des sources, un moyen de restitution des observables et un moyen de filtrage hybride de navigation. Le relais 100, reçoit en figure 20 par son capteur A les mêmes sources que le dispositif 300, mais ceci n'est pas une exigence du fonctionnement du dispositif 300. Ce point est nécessaire seulement, on le verra plus loin, pour la mise en oeuvre de l'hybridation serrée. Par ailleurs, bien que cela n'a pas été représenté en figure 20 vu le peu d'intérêt en regard de l'invention, le dispositif 300 utilise un moyen d'affichage des résultats de son positionnement hybride ou bien un moyen de sortie de ses données à destination d'une application de navigation, ou de guidage, ou de LBS ou toute autre application ayant besoin du positionnement réalisé.

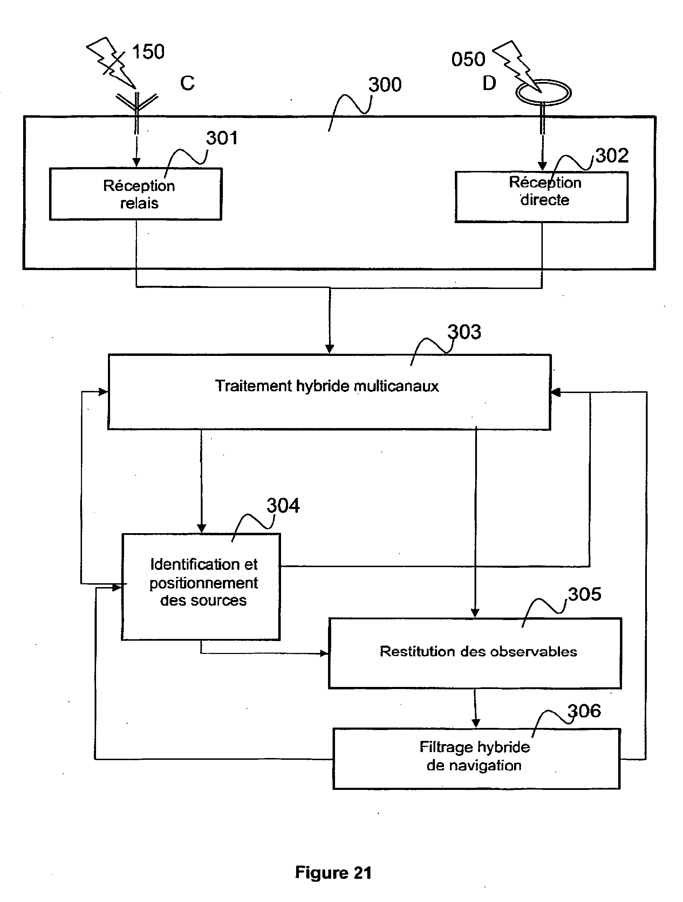

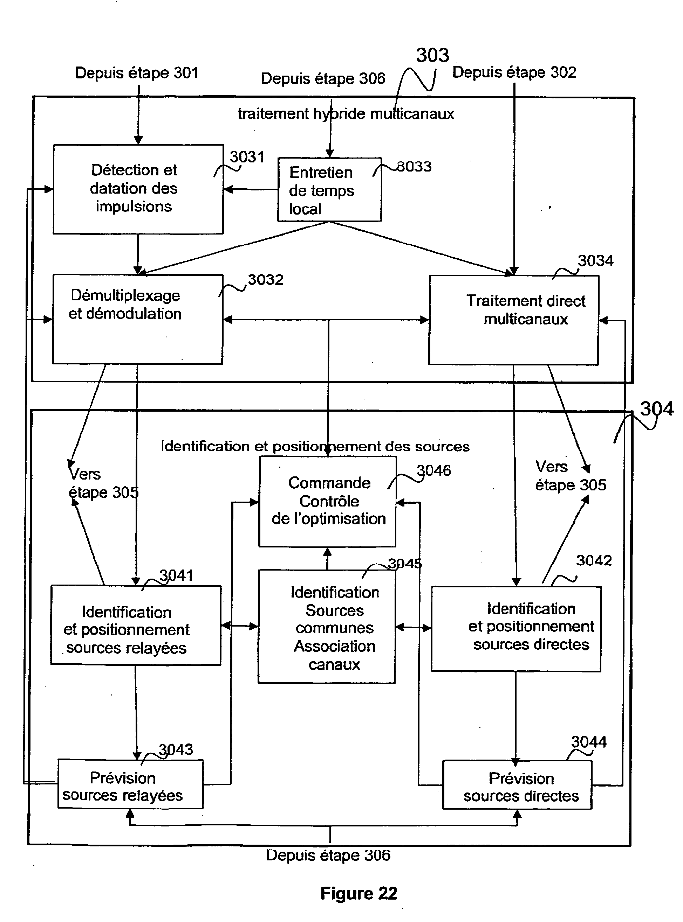

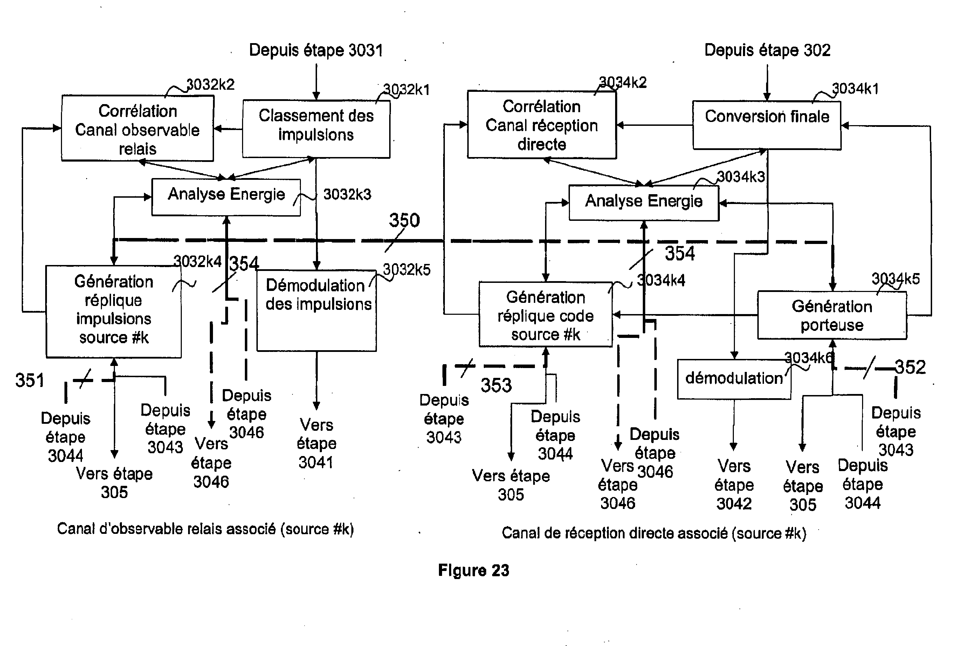

En figure 21, on voit les étapes mises en oeuvre par le procédé de positionnement hybride, aidé par un relais pulsé multi synchrone multi-source. Ces étapes sont montrées dans leur progression minimale. La figure 21 fait état également des bouclages internes qui sont mis en oeuvre dans les variantes du procédé. Les étapes 303 et 304 sont détaillées dans les figures 22 et 23.

On voit en figure 21, et dans le sens haut vers bas, la mise en parallèle des étapes de réception, l'étape de réception relais 301, avec son aérien C, et l'étape de réception directe 302, avec son aérien D, et leur convergence vers l'étape de traitement hybride multicanal 303. Cette étape de traitement hybride multicanal rassemble les traitements pour des raisons de similitude et d'interactions serrées, mais met en parallèle aussi des traitements multicanaux propres à la réception directe, lesdits canaux étant nommés par la suite canaux de réception directe, et des traitements multicanaux propres à la réception du signal relais, lesdits canaux étant nommés canaux d'observables relais. Cette étape de traitement hybride multicanal fournit une double sortie multicanal, c'est-à-dire que chaque canal fournit au moins deux types d'informations. L'une d'entre elles est à destination d'une étape d'identification et de positionnement des sources 304, qui agit ainsi sur l'identification des sources relayées pour les sorties des canaux d'observables relais et sur l'identification des sources reçues en direct, dites sources directes, pour les sorties des canaux de réception directe. Plus à droite en figure 21, l'autre sortie multicanaux de l'étape de traitement hybride multicanal est en entrée d'une étape de restitution des observables 305. Cette étape agit également en parallèle sur les sorties des canaux d'observables relais pour fournir des observables relais à la dernière étape, celle du filtrage hybride de navigation 306, et sur les sorties des canaux de réception directe pour fournir des observables directs à cette dernière même étape.

Selon un mode de réalisation particulier du procédé, des bouclages internes vont renforcer l'efficacité des traitements de chaque étape. Ces différents bouclages sont détaillés dans les figures 22 et 23 qui sont décrites ci-dessous.

En figure 22, on adresse, dans un premier niveau de détail, et selon des modes de réalisation particuliers du procédé, les étapes de traitement hybride multicanal 303 et d'identification et positionnement des sources 304, et de leurs interactions entre elles et avec les autres étapes.

L'étape de traitement hybride multicanal 303 est décomposée à gauche pour le traitement du signal pulsé multi synchrone multi-source qui fait suite à l'étape 301 et à droite pour le traitement des signaux de positionnement en réception directe depuis l'étape 302.

A gauche, le traitement du signal pulsé multi synchrone multi-source se décompose en figure 22 en deux étapes, celle de détection et datation des impulsions élémentaires et trains d'impulsions élémentaires 3031, suivie de celle de démultiplexage et démodulation 3032, permettant de séparer les informations à traiter en canaux d'observables relais. Ces étapes ont été décrites en détail lors de la description du procédé de localisation et peuvent ici recouvrir les mêmes variantes.

A droite, le traitement direct multicanal réalise les traitements des signaux de positionnement sur des canaux parallèles, traitements de l'état de l'art, semblables à ceux décrits dans la description de la figure 6, et en supportant l'acquisition et la poursuite desdits signaux, par une corrélation, dans un but de synchronisation, du signal arrivant sur une réplique générée du code de télémétrie.

Bien que non illustrée sur la figure 22, une échelle de temps local doit être générée par un oscillateur local pour l'étape de réception directe, dans son traitement de conversion en fréquence intermédiaire et surtout dans le traitement des signaux de positionnement pour la génération de la réplique du code de télémétrie et les étapes de génération de porteuse et conversions finales pour réduire l'effet Doppler lié au déplacement due à l'équipement mobile. De même, une échelle de temps local est également nécessaire à l'étape de traitement du signal pulsé multi synchrone multi-source, au minimum pour la datation des impulsions élémentaires reçues. Les deux échelles de temps local peuvent être indépendantes, incluses dans les étapes respectives de traitement.

Selon une variante, le traitement des signaux pulsés multi synchrones multi-source et le traitement direct des signaux de positionnement utilisent la même échelle de temps local et partagent le même oscillateur local pour générer cette échelle de temps local.

Selon une variante, et illustré en figure 22, un retour de l'étape de filtrage hybride de navigation 306, vers le traitement hybride multicanal 303 permet de réaliser un traitement d'entretien du temps local 3033.

Au niveau du traitement hybride multicanal 303, le traitement d'entretien du temps local 3033 permet de réduire l'erreur de désynchronisation du temps local sur l'échelle de temps système pour une linéarisation plus précise des équations de navigation. L'échelle de temps système est préférentiellement celle d'un des systèmes de positionnement traités, et préférentiellement celle d'un système GNSS si les sources correspondantes font parties des sources reçues, soit relayées soit directes, puisque cette dernière est très précisément référencée au temps universel coordonné. Elle peut être également une horloge virtuelle composite, bien que ce dernier cas n'apporte pas les performances optimales. C'est dans tous les cas la référence de temps (origine et unité) qui permet d'écrire dans un référentiel homogène les équations d'état de la navigation de l'équipement mobile à positionner et de son évolution. Le filtrage hybride de navigation 306 résout régulièrement l'inconnue de désynchronisation entre l'échelle de temps local et l'échelle de temps système. Cette sortie peut être utilisée à bon escient dans un traitement d'entretien du temps local à destination de la datation de tout événement en temps local, détecté dans le traitement hybride multicanal, en particulier pour le traitement du signal pulsé multi synchrone multi-source. En figure 22, le temps local entretenu est donc en entrée de chacune des étapes incluses dans le traitement hybride multicanal et permettra directement de restituer ultérieurement des observables dans un référentiel de temps le plus proche possible du référentiel de temps souhaité.

Les étapes 3031, 3032 et 3034 étant analogues aux étapes décrites dans les précédents procédés, elles peuvent, selon une variante, de façon analogue aux méthodes décrites précédemment, intégrer des contrôles d'intégrité dans leurs traitements avec un but de détecter les mêmes anomalies, pour le traitement des canaux d'observables, que celles décrites dans le procédé de localisation d'un équipement mobile à distance, et, pour le traitement des canaux de réception directe, que celles décrites dans le procédé de relais pulsé multi synchrone multi-source. Les sorties de ces variantes sont à destination de toutes les étapes qui utilisent le résultat du traitement hybride mulficanaux 303, à savoir essentiellement l'étape d'identification et positionnement des sources 304 et l'étape de restitution des observables 305. Elles prennent la forme d'une invalidation d'une sortie canal en cas de détection d'anomalie. Cette détection d'anomalie fait appel à un facteur de qualité canal, fonction du niveau de sécurité requis par l'application qui utilise le positionnement.

En figure 22, l'étape d'identification et de positionnement des sources 304 se décompose naturellement sur la gauche en étape d'identification des sources relayées 3041, et sur la droite, en étape d'identification et positionnement des sources directes 3042 et fournissent leurs résultats à l'étape de restitution des observables 305. Les traitements de l'étape 3041 ont déjà été décrits dans le procédé de localisation à distance d'un équipement mobile, et sont analogues ici. Ceux de son homologue 3042 sont essentiellement identiques, et n'ont pas besoin d'être developpésici. Ils comportent selon une variante, comme dans les descriptions précédentes, une étape d'acquisition et de mémorisation des messages qui peut ou non être commune selon la variété des sources reçues.

En particulier, selon une variante, une mise en commun des corrections spatiotemporelles pour des erreurs de principes des systèmes de positionnement reçues pour des sources relayées peuvent être utilisées à bon escient sur les sources directes et inversement. Par exemple les corrections différentielles ou une grille ionosphérique reçue par un signal EGNOS à travers un relais, donc un signal pulsé multi synchrone multi-source sont aussi utilisées par des canaux d'observables directs s'ils sont des sources GNSS, que ce soit en retour vers le traitement hybride multicanaux pour une prévision plus précise du traitement de démultiplexage, une amélioration de sensibilité du traitement direct ou dans la restitution des observables.

Selon une variante, en figure 22, on observe également la mise en oeuvre de traitements de prévisions pour les sources relayées 3043 et pour les sources directes 3044. Ces traitements de prévisions prennent en entrée toutes estimations de position, vitesse et temps, en provenance de l'étape de filtrage hybride de navigation, et concernant toutes les inconnues d'états de l'équipement mobile à positionner, mais aussi de l'équipement relais fournisseur de signal pulsé multi synchrone multi-source. Complétées par les résultats des étapes d'identification et de positionnement des sources 3041 et 3042, ces étapes de prévisions sources relayées et prévision sources directes vont apporter des supports efficaces aux traitements de chacune des étapes 3031, 3032 et 3034 du traitement hybride multicanaux 303, respectivement côté sources relayées et côté source directes.

Selon une variante, une étape d'identification des sources communes 3045 est mise en oeuvre périodiquement. Elle permet d'identifier une source Si, qui est reçue directement sur un canal de réception directe, et qui a été identifiée comme reçue par l'intermédiaire d'un relais, c'est-à-dire par des fragments de son code de télémétrie, ou plus simplement par son échelle de temps source, qui a été démultiplexée sur un canal d'observable relais.

Le rôle de l'étape 3045 est également d'associer par paires les numéros de canaux d'observables relais et de canaux de réception directe qui traitent une même source, et enfin de lancer en présence de tels couples une étape de commande et contrôle de l'optimisation des traitements 3046, pour une hybridation serrée sur les canaux associés.

L'hybridation serrée de deux canaux associés est illustrée en figure 23. Pour réaliser cette illustration, la figure 23 détaille, à un niveau supérieur en comparaison à la figure 22, un mode de réalisation particulier de l'étape de démultiplexage et démodulation d'une part, pour un canal d'observable relais (à gauche de la figure 23), et un mode de réalisation particulier de l'étape de traitement direct sur un canal de réception directe (à droite de la figure 23). La figure choisit évidemment des canaux associés et recevant la même source commune numérotée k. C'est pourquoi toutes les étapes du canal comportent la lettre k dans leur référencement, bien que les numéros affectés aux canaux ne soient pas semblables.

A gauche donc, conformément aux variantes du traitement de démultiplexage décrites plus haut et par conséquent non décrites à nouveau, on trouve :
- une étape de classement des impulsions 3032k1,
- une étape de corrélation du canal observable relais 3032k2,
- une étape d'analyse de l'énergie de signal résultante 3032k3,
- une étape de génération de réplique des impulsions source #k 3032k4 et
- une étape de démodulation des impulsions 3032k5.

A droite donc, conformément aux étapes mises en oeuvre dans l'état de l'art du traitement des signaux de positionnement et en particulier des signaux GNSS, on trouve :
- une étape de conversion finale 3034k1,
- une étape de corrélation canal réception directe 3034k2,
- une étape d'analyse de l'énergie de signal résultante 3034k3,
- une étape de génération de réplique code source #k 3034k4,
- une étape de génération de porteuse 3034k5 et
- une étape de démodulation des impulsions 30342k6.

Le premier rôle de l'étape 3046 (figure 22) est de faire partager les résultats de l'étape de prévision sources relayées aux canaux de réception directs, et réciproquement, les résultats de l'étape de prévisions sources directes aux canaux d'observables relais, si ces canaux en ont besoin pour améliorer leurs propres traitement et obtenir un meilleur rendement en rapport signal sur bruit. C'est le rôle des flux d'interface internes référencés 351, 352 et 353 en figure 23 qui lient respectivement l'étape 3044 de prévision des sources directes vers l'entrée de l'étape 3032k4 de génération de la réplique des impulsions source #k et l'étape 3043 de prévision des sources relayées vers l'entrée de l'étape 3034k5 de génération porteuse, et de l'étape 3034k4 de génération de réplique code source #k.

Pour évaluer ce besoin ou non de prévision, l'étape de commande et contrôle de l'optimisation doit vérifier l'état de traitement de chacun des canaux. C'est pourquoi les étapes d'analyse d'énergie 3032k3 et 3034k3 qui évaluent le rapport signal sur bruit fournissent leurs résultats à l'étape 3046. La connaissance pour l'étape 3046 des qualités de traitement de signal courant n'est pas suffisante. Les optimisations vont dépendre d'autres paramètres, et en particulier :
- le taux d'échec des contrôles de parité ou de codes correcteurs d'erreur dans les traitements de démodulations,
- l'existence et la qualité des prévisions de positionnement des sources ,
- les paramètres d'un modèle statistique de bruit et d'erreur affecté aux observables dudit canal,
- les résultats dudit contrôle d'intégrité canal, et en particulier ladite invalidation ,
- les résultats d'un contrôle d'intégrité position et en particulier une exclusion d'observable.

Pour ce faire, d'autres interfaces internes entre l'étape 3046 sont également nécessaires comme avec les étapes d'identifications et positionnement des sources relayées 3041 et directes 3042, montrées en figure 22, et également avec la restitution d'observables 305.

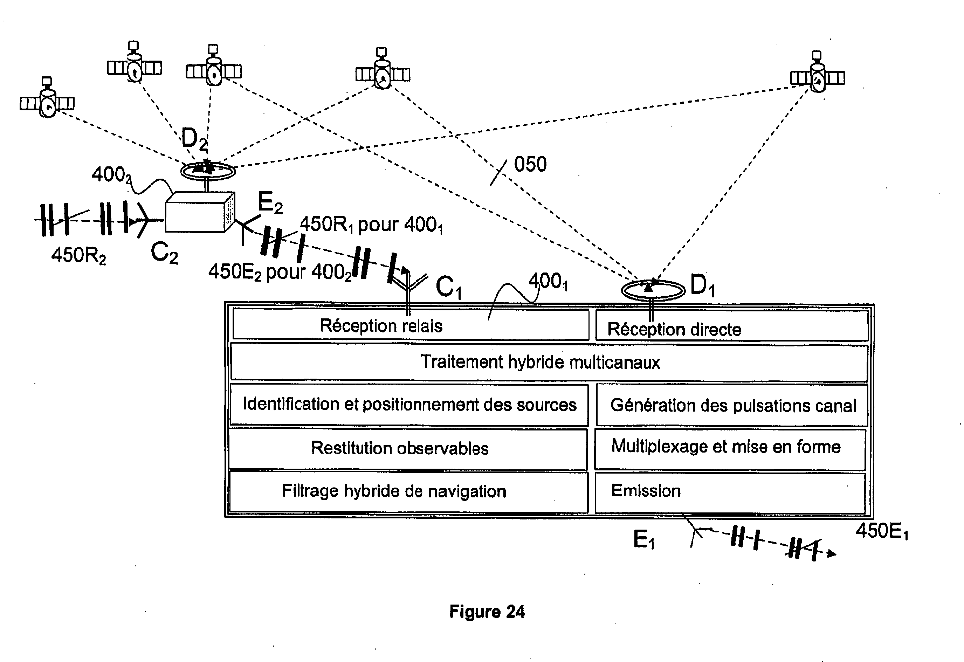

Réciproquement, l'optimisation des traitements, contrôlée et commandée par l'étape 3046 peut passer par toute une série de modifications dans la façon de gérer la corrélation, la vitesse de glissement des générations de répliques pour l'acquisition et ou la poursuite des méthodes pour l'asservissement et les choix des paramètres des boudes de poursuites. C'est pourquoi, en supposant en figure 24 que tous les contrôles et les commandes des traitements séquentiels du signal sont exécutés dans l'étape nommée ici analyse des énergies, une double interface 354 en entrée et sortie est illustrée en figure 24 entre l'étape contrôle et commande des optimisations 3046 et les étapes analyse énergie du canal observables 3032k3 et analyse énergie du canal de réception directe 3034k3. Cette interface concerne en particulier :
- le réglage de la vitesse de balayage de ladite réplique en fonction des différences temporelles entre impulsions relevées sur ledit canal d'observable relais associé,
- le réglage des durées, séquences et synchronisations des opérations d'intégrations cohérentes et d'intégrations non cohérentes en fonction des écarts de réplique relevés avec ledit canal d'observables relais associé,
- le réglage des paramètres de filtrage et ordres de boucle d'asservissement des traitements de poursuite dudit signal de positionnement en fonction des écarts de réplique relevés sur ledit canal d'observables relais associé, et
- le réglage des paramètres utilisés dans les calculs des énergies du signal résultantes de l'opération de désétalement et permettant la gestion globale des modes desdits traitements directs en fonction des écarts relevés sur ledit canal d'observables relais associé.

Selon une variante, pour une réactivité maximale, on décrit en figure 23, une interaction directe 350 entre génération de répliques, à savoir une intervention directe du positionnement de la réplique de code source #k 3034k4 à partir de la génération de la réplique impulsions source #k 3032k4, ou bien sur la génération de porteuse 3034k5, ou réciproquement. Ce mode de réalisation particulier est initialisé par l'étape 3046 qui laisse la main à une intervention directe des canaux associés entre eux jusqu'à ce qu'un événement contrôlé par l'étape 3046 et non contrôlé par les étapes 3032k et 3034k intervienne (par exemple une exclusion suite à une non intégrité d'un observable, détectée par le contrôle d'intégrité implémenté au niveau du filtrage hybride de navigation). Cette mise en oeuvre particulière intervient en particulier lorsque les signaux reçus en direct sont très faibles et que les signaux relayés sont en grande proximité comme on l'avait vu dans l'utilisation opérationnelle montrée en figure 18.

Le sens des dépendances commandées et contrôlées par l'étape 3046 pour l'hybridation serrée dépend évidemment d'une comparaison d'une combinaison de critères évalués sur les canaux d'observables relais et les canaux de réception directe, rendus comparables, et va toujours du canal associé le plus fiable en maître sur le canal associé le plus vulnérable. Les modes de réalisations montrés en figure 23 sont plutôt ressemblants à des modes de traitement implémentés en corrélation temporelle. Ce mode n'est pas restrictif au regard du procédé décrit dans la présente invention et un mode de corrélation fréquentielle est tout aussi adaptée au procédé à la condition d'adapter la génération de réplique au domaine fréquentiel, à savoir que c'est la génération du spectre de fréquence de la réplique qui permet le filtrage adapté qui est maîtrisé en même temps que le choix des échantillons pris sur le signal reçu, en termes de fréquence d'échantillonnage, durée temporelle de la fenêtre de signal reçue et nombre de points de FFT (acronyme de Fast Fourier Transform pour transformée de Fourier rapide).

Finalement, l'étape de restitution des observables 205 utilise simultanément, pour les canaux d'observables relais, les résultats des étapes d'identification et de positionnement des sources relayées 3041, de l'étape démultiplexage et démodulation 3032 pour calculer les observables relais, qui sont représentatifs par exemple des pseudo distance et pseudo vitesses entre sources et relais, comme décrit plus haut dans le procédé de localisation à distance (technique TOA). Par ailleurs, l'étape de restitution des observables 205 utilise simultanément, pour les canaux d'observables directs, les résultats des étapes d'identification et de positionnement des sources directes 3042 et de l'étape de traitement direct des canaux (canal par canal) 3034 pour calculer les observables directs, qui sont représentatifs par exemple des pseudo distances et pseudo vitesses entre sources et équipement à positionner, selon les techniques TOA de l'état de l'art.

Dans un mode de réalisation particulier, le filtrage hybride de navigation peut résoudre séparément les observables relais et les observables directs. Dans le premier cas, il résout la position du relais et une inconnue de temps, qui inclut la désynchronisation du temps local sur l'échelle de temps système et le temps de propagation relais-équipement distant, en l'occurrence équipement mobile à positionner. Dans le deuxième cas, il résout la position de l'équipement mobile et la désynchronisation de l'échelle de temps local à l'échelle de temps système. Dans tous les cas où les redondances sont assez grandes, en particulier en nombre de sources communes et/ou en nombre de relais, les modes communs peuvent être discernés entre erreurs de désynchronisation et temps de propagation spatial entre relais et équipement mobile.

Selon une variante, et particulièrement lorsque les échelles de temps local sont partagées, les différences d'observables entre relais et direct sur une même source permet cette distinction.

Selon une variante, les observables, les équations d'état et le modèle d'évolution du filtrage de navigation sont décrits pour représenter toutes les pseudo distances et les pseudo vitesses entre sources et équipement mobile, en particulier lorsque le relais est en très grande proximité. Dans ce cas une pondération adéquate prend en compte une évaluation des erreurs de principe et peut être évaluée en particulier à partir des résultats de l'hybridation serrée des canaux d'observables relais et des canaux de réception directe associés.

Selon une variante, les contrôles d'intégrité à la fois sur les étapes de restitution d'observables et sur le filtrage de navigation qui ont été décrits dans le procédé de localisation sont complètement transposable ici à la fois pour la chaîne d'observables relais, pour la chaîne d'observables directs et pour la combinaison hybride des deux, pourvu que des modèles statistiques d'erreurs et de bruit raisonnables en regard des événements redoutés attendus soient utilisés avec les seuils adaptés et avec les pondérations adéquates.

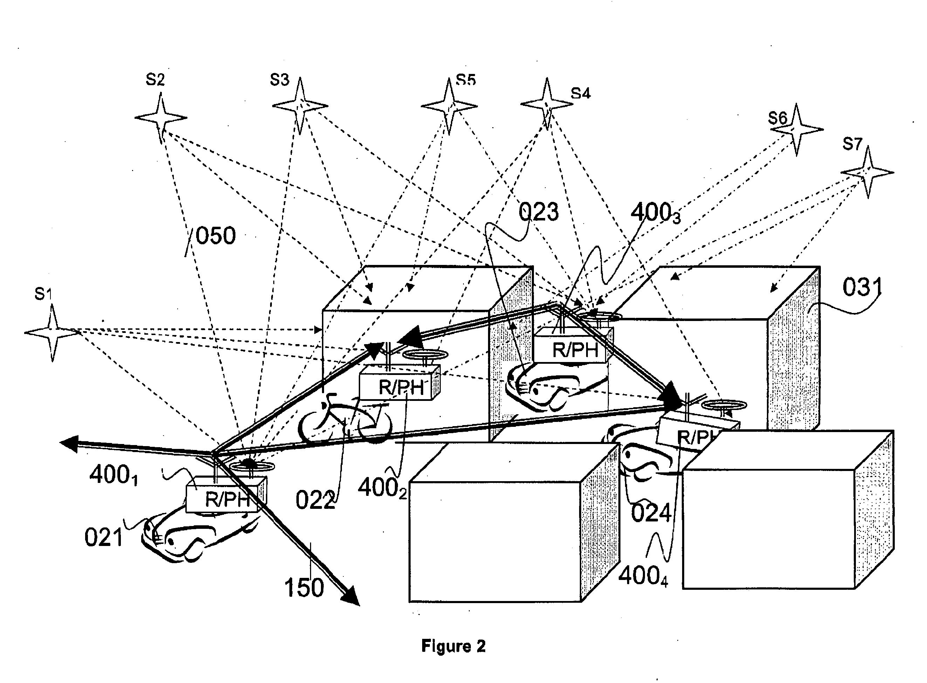

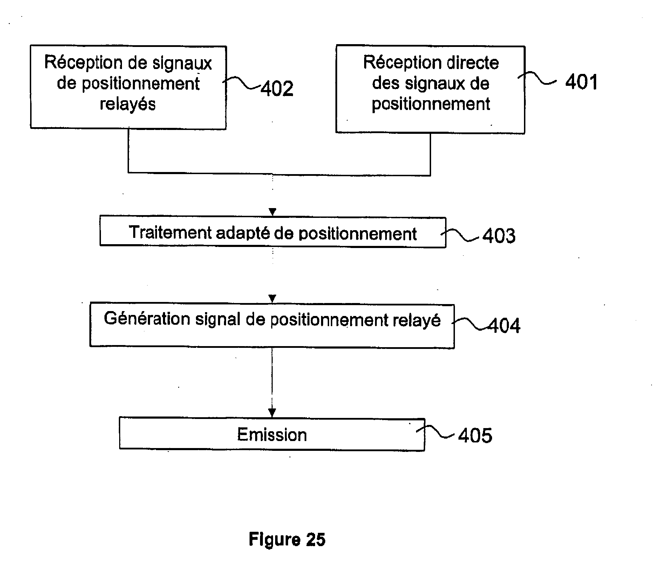

On donne, ci-après, une description détaillée des aspects de la présente invention concernant un équipement mobile, un procédé et un système de positionnement d'un équipement mobile visant à augmenter la couverture et les performances d'un service de positionnement, en regard des figures 24 et 25 et de la figure 2.

En figure 24 on observe les interfaces du dispositif ou équipement mobile 400₁, objet du premier aspect de la présente invention et on voit un aperçu des moyens qu'il intègre dans un mode de réalisation particulier et préférentiel.

L'équipement mobile 400₁ possède au moins deux moyens de réception différents. L'un, pour une réception directe des signaux de positionnement 050 émis par un ensemble cohérent de sources, illustrées comme des satellites GNSS en figure 24, sans que cela soit une restriction, a un aérien repéré en D₁. L'autre a un aérien repéré en C₁, pour une réception des signaux pulsés multi synchrones multi-source 450R₁, appelés aussi signaux de positionnement relayés, émis par un équipement mobile homologue 400₂, en tout point identique à l'équipement mobile 400₁ et mettant en oeuvre le même procédé, objet du second aspect de l'invention. L'équipement mobile a aussi un moyen d'émission équipé d'un aérien E₁ pour diffuser un signal également pulsé multi synchrone multi-source 150E₁.

L'équipement mobile 400₁ possède aussi un moyen de traitement hybride multi canaux, un moyen d'identification et positionnement des sources, un moyen de restitution des observables, un moyen de filtrage hybride de navigation, un moyen de génération des pulsations canal, un moyen de multiplexage et mise en forme temporelle des pulsations, tous ces moyens et les fonctions et étapes qu'ils mettent en oeuvre ayant été décrits en détail plus haut dans ce document.

L'équipement mobile homologue 400₂ reçoit, en figure 24 par son capteur D₂, les mêmes sources que l'équipement mobile 400₁, mais ceci n'est pas une exigence du fonctionnement du dispositif 400₁ ni du dispositif 400₂. Par ailleurs, bien que cela n'ait pas été représenté en figure 24, l'équipement mobile 400₁ utilise un moyen d'affichage des résultats de son positionnement hybride ou bien un moyen de sortie de ses données à destination d'une application de navigation, ou de guidage, ou de LBS ou toute autre application ayant besoin du positionnement réalisé.

En figure 25, on voit un exemple de succession d'étapes du procédé conforme au deuxième aspect de la présente invention, et leur progression.

L'étape de réception directe des signaux de positionnement 401 et l'étape de réception des signaux de positionnement relayés 402 ont déjà été décrites plus haut et sont conformes à l'état de l'art. L'étape d'émission 405, qui consiste à émettre des signaux de positionnement relayés est compatible avec l'étape 402 qui consiste à recevoir des signaux analogues à ceux émis, sans qu'il y ait nécessairement de communication protocolaire.

Selon une variante, ces étapes 402 et 405 consistent à émettre et recevoir des signaux ultra large bande. Selon une variante ces étapes 402 et 405 consistent à émettre et recevoir des signaux qui utilisent une bande de fréquence très large, typiquement 100 MHz, dans les bandes réglementairement allouées aux services de radionavigation par satellite, services de radionavigation aéronautiques ou bien de radiolocalisation.

L'étape qui suit et utilise les résultats des étapes de réception 401 et 402, est une étape de traitement adapté de positionnement 403. Cette étape travaille selon l'état de l'art sur les signaux de positionnement reçus en direct et qui lui viennent de l'étape 401. Pour un mode de réalisation particulier, liée à l'utilisation des signaux GNSS, cet état de l'art est décrit succinctement et partiellement dans la figure 6 (traitement de signal uniquement, hors restitution d'observables et filtrage de navigation). Cette étape travaille selon le procédé de localisation décrit plus haut et dans la figure 16 sur les signaux de positionnement relayés et qui lui viennent de l'étape 402. Selon une variante, et selon un mode préférentiel, cette étape travaille selon le procédé de positionnement hybride décrit plus haut et dans les figures 21 à 23.

L'étape de génération du signal relayé 404, peut être, selon un mode de réalisation particulier, celle représentée par les figures 3 à 13 sous la combinaison des étapes particulières et leurs combinaisons, 102 et 103, l'étape 101 des figures 3 à 13 étant quant à elle partie intégrante de l'étape de traitement adapté de positionnement 403.

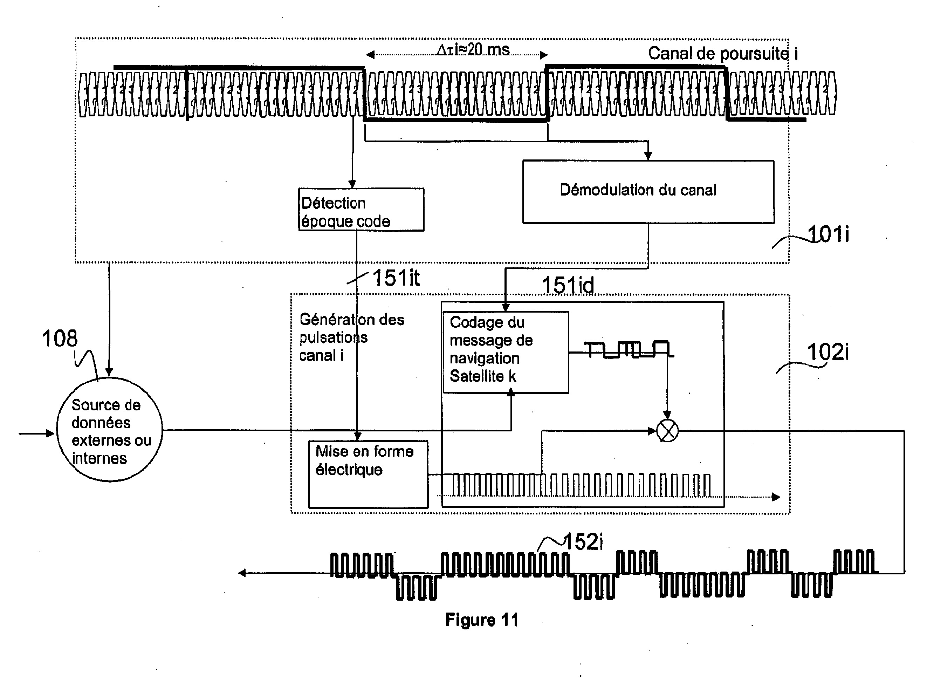

On se réfère à la description détaillée de ces figures 3 à 13 pour en apprécier les variantes, dont les suivantes sont particulièrement intéressantes dans le procédé conforme au deuxième aspect de la présente invention :
- cette étape peut porter en surimpression les messages de navigation et d'autres informations sur le signal pulsé multi synchrone multi-source. Si les signaux de positionnement sont des signaux GNSS, ces messages de navigation contiennent toute information utile pour le positionnement et la synchronisation des sources, et pour certains des données d'intégrité sur les signaux de positionnement d'une pluralité de sources (voir descriptions des figures 7 et 11),
- cette étape peut porter en surimpression ou directement en correction des corrections spatiotemporelles applicables aux signaux de positionnement pour une amélioration de la précision par correction des erreurs de principe (voir description des figures 13).

Selon une variante, l'étape de traitement adapté de positionnement 403 permet de localiser et de calculer la vitesse d'équipements mobiles homologues, dès lors qu'ils émettent un signal de positionnement relayé. Un mode de réalisation particulier de cette variante, utilisant le signal pulsé multi synchrone multi source, a été décrit plus haut dans le document et est représenté en figure 16.

Dans cette variante, un contrôle d'intégrité peut également être mis en oeuvre et évaluer une performance de réception canal et une performance de positionnement en précision et intégrité, appelée aussi facteur de qualité selon un indice de confiance préétabli. Cet indice de confiance peut ici être déterminé à l'avance pour tous les équipements mobiles qui se trouvent en place dans une même zone de couverture, ou bien être négocié entre deux équipements qui, au hasard de leur mobilité, reçoivent mutuellement les signaux de positionnement relayés.

Selon une variante, toutes ces informations calculées par l'équipements mobiles peuvent être partagées par des équipements mobiles homologues par le biais d'une modulation de données internes et externes, sur le signal de positionnement relayé, comme mises en oeuvre par l'étape de génération du signal relayé 404 (voir description figure 4).

Selon une variante, l'étape de traitement adapté de positionnement 403 permet de réaliser un positionnement hybride, de calculer la vitesse, et de calculer le temps sous forme d'une horloge virtuelle composite de l'équipement mobile qui la met en oeuvre comme cela a été décrit plus haut dans le document et représenté dans les figures 21 à 23.

Selon une variante, toutes ces informations calculées par l'équipement mobile peuvent être partagées par des équipements mobiles homologues par le biais d'une modulation de données internes et externes, sur le signal de positionnement relayé, comme mises en oeuvre par l'étape de génération du signal relayé 404 (voir description figure 4).

Selon une variante, ces données calculées ne sont transférées à des équipements mobiles homologues, par le biais du signal pulsé multi synchrone multi-source, que lorsque les évaluations de performance en précision et intégrités sont supérieures à un seuil prédéterminé ou négocié, de façon à ne pas encombrer les transmissions d'informations imprécises, non intègres ou inutilisables.

En figure 2, on observe une utilisation opérationnelle typique du dispositif 400. Dans un milieu urbain dense, où intervient un nombre important de masquages des signaux de positionnement, dus aux immeubles 031, sont dispersés quatre des dispositifs de positionnement en réseau ad hoc référencés en 400₁, 400₂, 400₃ et 400₄ , respectivement solidaires des véhicules 021, 022, 023 et 024. Dans les positions représentées, ils profitent d'une diversité spatiale fonction de leur environnement. Les sources appartiennent toutes à un système cohérent de sources et sont au nombre de 7, visibles en ciel ouvert. Le véhicule 400₁ est en visibilité directe de 6 sources, lui offrant une dilution de précision faible. Il réalise facilement son propre positionnement, car il bénéficie d'une bonne réception des signaux directs de positionnement. Il joue donc également le rôle de relais en diffusant autour de lui un signal pulsé multi synchrone multi source pour transmettre les échelles de temps des sources qu'il reçoit correctement, à savoir 7 sources. Le dispositif 400₃, solidaire du véhicule 023 bien que dans un canyon urbain, reçoit beaucoup de sources positionnées haut dans le ciel mais reçoit mal les signaux des sources à élévation faible S1 et S7. Sa dilution de précision va donc être élevée bien qu'il reçoive 5 sources. Dans ces conditions, le dispositif 400₃ reçoit sur certains slots temporels le signal pulsé multi synchrone multi-source émis par le dispositif 400₁, le traite et l'utilise en observables relais pour une hybridation lâche dans son filtrage hybride de navigation pour améliorer sa dilution de précision, et le retransmet après des contrôles d'intégrité sur les cinq sources vues en commun avec le dispositif 400₁ pour son environnement direct sur les autres slots de temps. Les dispositifs 400₂ et 400₄ sont eux momentanément en position où ils sont en visibilité d'un nombre insuffisant de sources pour réaliser un positionnement. Ils se mettent donc en position d'écoute des signaux pulsés multi synchrone multi-source de leur entourage et travaillent en mode pur de positionnement hybride. Grâce à la proximité des dispositifs analogues émettant dans le réseau ad hoc, ils profitent d'excellentes conditions d'hybridation serrée et vont procéder à une réacquisition immédiate des signaux des sources non visibles, dès lors qu'après un déplacement, ils retrouvent le signal en visibilité directe. Les performances en disponibilité et continuité de service sont alors énormément accrues dans cet environnement difficile pour tous les dispositifs capables de procéder à ce positionnement en réseau. L'accroissement en précision et intégrité est également très net grâce à la réduction de la dilution de précision obtenue même en hybridation lâche, et ce facteur étant un paramètre important des faiblesses de performances en milieu urbain dense, en particulier pour les systèmes globaux de navigation par satellites.

## Revendications

1. Equipement mobile (400), **caractérisé en ce qu'**il comporte :
- un moyen de réception (D) de signaux de positionnement (050) provenant directement d'une pluralité de sources de tels signaux,
- un moyen de réception (C) de signaux de positionnement relayés (450R) provenant d'équipements mobiles homologues (400), chaque signal de positionnement relayé par un équipement mobile homologue comprenant des pulsations synchronisées avec la détection par ledit équipement de marqueurs temporels d'au moins une desdites sources ,
- un moyen de traitement adapté à traiter au moins une partie des signaux reçus par les moyens de réception, pour fournir une position dudit équipement mobile,
- un moyen de génération d'au moins un signal de positionnement relayé (450^{E}) et
- un moyen d'émission (E) de chaque signal de positionnement relayé (450^{E}) généré par le moyen de génération.

2. Equipement mobile selon la revendication 1, **caractérisé en ce qu'**il reçoit directement les signaux de positionnement d'au moins une source de signal de positionnement appartenant à au moins un système global de navigation par satellites.

3. Procédé de positionnement d'un équipement mobile, **caractérisé en ce qu'**il comporte :
- une étape de réception (401) de signaux de positionnement provenant directement d'une pluralité de sources de tels signaux,
- une étape de réception (402) de signaux de positionnement relayés provenant d'équipements mobiles homologues, chaque signal de positionnement relayé par un équipement mobile homologue comprenant des pulsations synchronisées avec la détection par ledit équipement de marqueurs temporels d'au moins une desdites sources,
- une étape de traitement (403) d'au moins une partie des signaux reçus par les moyens de réception, pour fournir une position dudit équipement mobile,
- une étape de génération (404) d'au moins un signal de positionnement relayé et
- une étape d'émission (405) de chaque signal de positionnement relayé généré.

4. Procédé selon la revendication 3, **caractérisé en ce que** lesdits signaux de positionnement relayés (450) comprennent des pulsations synchronisées avec la détection par ledit équipement de marqueurs temporels d'une pluralité desdites sources.

5. Procédé selon l'une quelconque des revendications 3 à 4, **caractérisé en ce que** lesdits signaux de positionnement relayés (450) portent des messages d'informations sur le positionnement ou la synchronisation des sources.

6. Procédé selon l'une quelconque des revendications 3 à 5, **caractérisé en ce que** lesdits signaux de positionnement relayés (450) portent des informations de corrections spatiotemporelles à appliquer aux signaux de positionnement reçus directement par les sources.

7. Procédé selon l'une quelconque des revendications 3 à 6, **caractérisé en ce que** les signaux de positionnement relayés (450) contiennent des informations sur l'intégrité des performances des signaux de positionnement émis par lesdites sources.

8. Procédé selon l'une quelconque des revendications 3 à 7, **caractérisé en ce que** les signaux de positionnement relayés (450) portent des informations sur l'intégrité de la réception locale d'au moins un signal de positionnement émis par au moins une source, calculées au niveau dudit équipement mobile et/ou au niveau d'un équipement mobile homologue.

9. Procédé selon l'une quelconque des revendications 3 à 8, **caractérisé en ce que** les signaux de positionnement relayés (450) portent des informations sur l'intégrité locale du service de positionnement fourni par un ensemble cohérent de sources, calculées au niveau dudit équipement mobile et /ou au niveau d'un équipement mobile homologue.

10. Procédé selon l'une quelconque des revendications 7 à 9, **caractérisé en ce que** les informations sur l'intégrité locale correspondent à un indice de confiance négocié entre équipements mobiles homologues.

11. Procédé selon l'une quelconque des revendications 3 à 10, **caractérisé en ce que** ladite étape de traitement (403) réalise une estimation de la vitesse dudit équipement mobile.

12. Procédé selon l'une quelconque des revendications 3 à 11, **caractérisé en ce que** ladite étape de traitement (403) réalise une estimation d'une horloge virtuelle composite calculée grâce à au moins une partie des informations traitées sur les signaux de positionnement reçus de sources appartenant à un réseau cohérent de sources, qu'ils soient reçus directement des sources ou relayés par des équipements mobiles homologues.

13. Procédé selon l'une quelconque des revendications 3 à 12, **caractérisé en ce que** ladite étape de traitement (403) réalise un positionnement hybride grâce à tous les signaux de positionnement reçus, qu'ils soient reçus directement des sources ou relayés par des équipements mobiles homologues.

14. Procédé selon l'une quelconque des revendications 3 à 13, **caractérisé en ce que** ladite étape de traitement (403) réalise une estimation hybride de la vitesse grâce à tous les signaux de positionnement reçus, qu'ils soient reçus directement des sources ou relayés par des équipements mobiles homologues (400).

15. Procédé selon l'une quelconque des revendications 3 à 14, **caractérisé en ce que** les signaux de positionnement relayés (450) portent les informations de position et/ou vitesse et/ou horloge virtuelle composite dudit équipement mobile, calculées par ladite étape de traitement.

16. Procédé selon l'une quelconque des revendications 3 à 15, **caractérisé en ce que** ladite étape de traitement (403) évalue la performance en précision et intégrité de sa propre estimation de position et/ou de vitesse et/ou d'horloge virtuelle composite calculées, ladite évaluation de performance étant établie selon un indice de confiance négocié entre équipement mobiles homologues.

17. Procédé selon la revendication 16, **caractérisé en ce que** les signaux de positionnement relayés (450) portent les informations de position et/ou vitesse et ou horloge virtuelle composite dudit équipement mobile, calculées par ladite étape de traitement, seulement lorsque ladite évaluation de performance est au dessus d'un seuil négocié avec les équipements mobiles homologues.

18. Procédé selon l'une quelconque des revendications 3 à 17, **caractérisé en ce que** ladite étape de traitement (403) réalise une estimation des positions et/ou vitesses des équipements mobiles homologues sur réception des signaux de positionnement relayés que lesdits équipements mobiles homologues émettent.

19. Procédé selon la revendication 18, **caractérisé en ce que** les signaux de positionnement relayés (450) portent les informations de position des équipements mobiles homologues 400, calculées par ladite étape de traitement (403).

20. Procédé selon l'une quelconque des revendications 18 à 19, **caractérisé en ce que** ladite étape de traitement (403) évalue la performance en précision et intégrité des positions et/ou vitesses des équipements mobiles homologues qu'elle estime, ladite évaluation de performance étant établie selon un indice de confiance négocié entre équipement mobiles homologues.

21. Procédé selon la revendication 20, **caractérisé en ce que** les signaux de positionnement relayés (450) portent les informations de position des équipements mobiles homologues (400), calculées par ladite étape de traitement, seulement lorsque ladite évaluation de performance est au dessus d'un seuil négocié avec les équipements mobiles homologues.

22. Procédé selon l'une quelconque des revendications 3 à 21, **caractérisé en ce que** l'étape d'émission (405) comprend l'émission de la position et/ou de la vitesse calculées lors de l'étape de traitement vers un moyen de stockage et d'analyse de données distant.

23. Procédé selon l'une quelconque des revendications 3 à 22, **caractérisé en ce que** l'étape d'émission (405) utilise la technique Ultra Large bande comme moyen d'émission du signal de positionnement relayé (450).

24. Procédé selon l'une quelconque des revendications 3 à 23, **caractérisé en ce que** l'étape d'émission (405) utilise une bande de fréquence très large, typiquement 100 MHz dans des bandes réglementairement allouées aux services de radionavigation par satellite, services de radionavigation aéronautiques ou bien de radiolocalisation comme moyen d'émission du signal de positionnement relayé (450).

25. Système comportant au moins deux équipements mobiles homologues (400) selon l'une quelconque des revendications 1 à 2 mettant en oeuvre un procédé de positionnement selon l'une quelconque des revendications 3 à 24.

## Claims

1. Mobile device (400), **characterised in that** it comprises:
- a means (D) for receiving positioning signals (050) coming directly from a plurality of sources of signals of this type,
- a means (C) for receiving relayed positioning signals (450R) coming from homologous mobile devices (400), each positioning signal relayed by a homologous mobile device comprising pulses synchronised with the detection by said device of temporal markers from at least one of said sources,
- a processing means capable of processing at least some of the signals received by the receiving means so as to provide a position of said mobile device,
- a means for generating at least one relayed positioning signal (450^{E}), and
- a means (E) for transmitting each relayed positioning signal (450^{E}) generated by the generating means.

2. Mobile device according to claim 1, **characterised in that** it receives the positioning signals directly from at least one positioning signal source belonging to at least one global satellite navigation system.

3. Method for positioning a mobile device, **characterised in that** it comprises:
- a step (401) of receiving positioning signals coming directly from a plurality of sources of these signals,
- a step (402) of receiving relayed positioning signals coming from homologous mobile devices, each positioning signal relayed by a homologous mobile device comprising pulses synchronised with the detection by said device of temporal markers from at least one of said sources,
- a step (403) of processing at least some of the signals received by the receiving means so as to provide a position of said mobile device,
- a step (404) of generating at least one relayed positioning signal, and
- a step (405) of transmitting each relayed positioning signal generated.

4. Method according to claim 3, **characterised in that** said relayed positioning signals (450) comprise pulses synchronised with the detection by said device of temporal markers from a plurality of said sources.

5. Method according to either of claims 3 to 4, **characterised in that** said relayed positioning signals (450) carry information messages relating to the position or synchronisation of the sources.

6. Method according to any one of claims 3 to 5, **characterised in that** said relayed positioning signals (450) carry spatiotemporal correction information to be applied to the positioning signals received directly by way of the sources.

7. Method according to any one of claims 3 to 6, **characterised in that** the relayed positioning signals (450) contain information on the performance integrity of the positioning signals transmitted by said sources.

8. Method according to any one of claims 3 to 7, **characterised in that** the relayed positioning signals (450) carry information, calculated in said mobile device and/or in a homologous mobile device, on the integrity of the local reception of at least one positioning signal transmitted by at least one source.

9. Method according to any one of claims 3 to 8, **characterised in that** the relayed positioning signals (450) carry information, calculated in said mobile device and/or in a homologous mobile device, on the local integrity of the positioning service provided by a coherent set of sources.

10. Method according to any one of claims 7 to 9, **characterised in that** the information on the local integrity corresponds to a confidence index negotiated between homologous mobile devices.

11. Method according to any one of claims 3 to 10, **characterised in that** said processing step (403) produces an estimate of the speed of said mobile device.

12. Method according to any one of claims 3 to 11, **characterised in that** said processing step (403) produces an estimate of a composite virtual clock calculated based on at least part of the processed information on the positioning signals received from sources belonging to a coherent network of sources, whether they are received directly from the sources or relayed by homologous mobile devices.

13. Method according to any one of claims 3 to 12, **characterised in that** said processing step (403) produces a hybrid position based on all the positioning signals received, whether they are received directly from the sources or relayed by homologous mobile devices.

14. Method according to any one of claims 3 to 13, **characterised in that** said treatment step (403) produces a hybrid estimate of the speed based on all of the positioning signals received, whether they are received directly from the sources or relayed by homologous mobile devices (400).

15. Method according to any one of claims 3 to 14, **characterised in that** the relayed positioning signals (450) carry position and/or speed and/or composite virtual clock information, calculated in said processing step, of said mobile device.

16. Method according to any one of claims 3 to 15, **characterised in that** said processing step (403) evaluates the performance in terms of the precision and integrity of its own position and/or speed and/or composite virtual clock estimate, said performance evaluation being established based on a confidence index negotiated between homologous mobile devices.

17. Method according to claim 16, **characterised in that** the relayed positioning signals (450) carry the position and/or speed and/or composite virtual clock information, calculated in said processing step, of said mobile device only when said performance evaluation is above a threshold negotiated with the homologous mobile devices.

18. Method according to any one of claims 3 to 17, **characterised in that** said processing step (403) produces an estimate of the positions and/or speeds of the homologous mobile devices upon receiving relayed positioning signals transmitted by said homologous mobile devices.

19. Method according to claim 18, **characterised in that** the relayed positioning signals (450) carry the position information, calculated in said processing step (403), of the homologous mobile devices 400.

20. Method according to either of claims 18 to 19, **characterised in that** said processing step (403) evaluates the performance in terms of the precision and integrity of the positions and/or speeds which it estimates for the homologous mobile devices, said performance evaluation being established based on a confidence index negotiated between homologous mobile devices.

21. Method according to claim 20, **characterised in that** the relayed positioning signals (450) carry the position information, calculated in said processing step (403), of the homologous mobile devices (400) only when said performance evaluation is above a threshold negotiated with the homologous mobile devices.

22. Method according to any one of claims 3 to 21, **characterised in that** the transmission step (405) comprises transmission of the position and/or the speed calculated in the processing step to a remote storage and data analysis means.

23. Method according to any one of claims 3 to 22, **characterised in that** the transmission step (405) uses ultra-wideband technology as a means of transmitting the relayed positioning signal (450).

24. Method according to any one of claims 3 to 23, **characterised in that** the transmission step (405) uses a very wide frequency band, typically 100 MHz in the bands allocated by regulation to satellite radionavigation services, aeronautical radionavigation services or even radiolocation services, as a means of transmitting the relayed positioning signal (450).

25. System comprising at least two homologous mobile devices (400) according to either of claims 1 to 2 carrying out a positioning method according to any one of claims 3 to 24.

## Patentansprüche

1. Mobiles Gerät (440), **dadurch gekennzeichnet, dass** es umfasst:
- eine Einrichtung zum Empfang (D) von Positionsbestimmungssignalen (050), die direkt von einer Mehrzahl von Quellen solcher Signale stammen,
- eine Einrichtung zum Empfang (C) von übertragenen Positionsbestimmungssignalen (450R), die von homologen mobilen Geräten (400) stammen, wobei jedes von einem homologen mobilen Gerät übertragene Positionsbestimmungssignal Pulse enthält, die synchronisiert sind mit der Erfassung von Zeitmarken wenigstens einer der Quellen durch das Gerät,
- eine Verarbeitungseinrichtung, die dazu ausgelegt ist, wenigstens einen Teil der von den Empfangseinrichtungen empfangenen Signale zu verarbeiten, um eine Position des mobilen Geräts zu liefern,
- eine Einrichtung zur Erzeugung wenigstens eines übertragenen Positionsbestimmungssignals (450^{E}), und
- eine Einrichtung zum Aussenden (E) jedes übertragenen Positionsbestimmungssignals (450 ^{E}), das von der Erzeugungseinrichtung erzeugt worden ist.

2. Mobiles Gerät nach Anspruch 1, **dadurch gekennzeichnet, dass** es direkt die Positionsbestimmungssignale wenigstens einer Positionsbestimmungs-Signalquelle empfängt, die zu wenigstens einem globalen Satelliten-Navigationssystem gehört.

3. Verfahren zur Positionsbestimmung eines mobilen Geräts, **dadurch gekennzeichnet, dass** es umfasst:
- einen Schritt des Empfangs (401) von Positionsbestimmungssignalen, die direkt von einer Mehrzahl von Quellen solcher Signale stammen,
- einen Schritt des Empfangs (402) von übertragenen Positionsbestimmungssignalen, die von homologen mobilen Geräten stammen, wobei jedes von einem homologen mobilen Gerät übertragene Positionsbestimmungssignal Pulse enthält, die synchronisiert sind mit der Erfassung von Zeitmarken wenigstens einer der Quellen durch das Gerät,
- einen Schritt der Verarbeitung (403) wenigstens eines Teils der von den Empfangseinrichtungen empfangenen Signale, um eine Position des mobilen Geräts zu liefern,
- einen Schritt der Erzeugung (404) wenigstens eines übertragenen Positionsbestimmungssignals, und
- einen Schritt des Aussendens (405) jedes erzeugten übertragenen Positionsbestimmungssignals.

4. Verfahren nach Anspruch 3, **dadurch gekennzeichnet, dass** die übertragenen Positionsbestimmungsignale (450) Pulse enthalten, die synchronisiert sind mit der Erfassung von Zeitmarken einer Mehrzahl der Quellen durch das Gerät.

5. Verfahren nach einem der Ansprüche 3 bis 4, **dadurch gekennzeichnet, dass** die übertragenen Positionsbestimmungssignale (450) Informationsnachrichten betreffend die Positionsbestimmung oder die Synchronisierung der Quellen tragen.

6. Verfahren nach einem der Ansprüche 3 bis 5, **dadurch gekennzeichnet, dass** die übertragenen Positionsbestimmungssignale (450) Informationen betreffend raumzeitliche Korrekturen tragen, die auf die direkt von den Quellen empfangenen Positionsbestimmungssignale anzuwenden sind.

7. Verfahren nach einem der Ansprüche 3 bis 6, **dadurch gekennzeichnet, dass** die übertragenen Positionsbestimmungssignale (450) Informationen betreffend die Integrität der Leistungen der von den Quellen ausgesandten Positionsbestimmungssignale enthalten.

8. Verfahren nach einem der Ansprüche 3 bis 7, **dadurch gekennzeichnet, dass** die übertragenen Positionsbestimmungssignale (450) Informationen betreffend die Integrität des lokalen Empfangs wenigstens eines Positionsbestimmungssignals enthalten, das von wenigstens einer Quelle ausgesandt wird, berechnet im Bereich des mobilen Geräts und/oder im Bereich eines homologen mobilen Geräts.

9. Verfahren nach einem der Ansprüche 3 bis 8, **dadurch gekennzeichnet, dass** die übertragenen Positionsbestimmungssignale (450) Informationen betreffend die lokale Integrität des von einer kohärenten Gruppe von Quellen gelieferten Positionsbestimmungsdienstes tragen, berechnet im Bereich des mobilen Geräts und/oder im Bereich eines homologen mobilen Geräts.

10. Verfahren nach einem der Ansprüche 7 bis 9, **dadurch gekennzeichnet, dass** die Informationen betreffend die lokale Integrität einem Zuverlässigkeitsindex entsprechen, der zwischen homologen mobilen Geräten abgestimmt wird.

11. Verfahren nach einem der Ansprüche 3 bis 10, **dadurch gekennzeichnet, dass** der Schritt der Verarbeitung (403) eine Abschätzung der Geschwindigkeit des mobilen Geräts realisiert.

12. Verfahren nach einem der Ansprüche 3 bis 11, **dadurch gekennzeichnet, dass** der Schritt der Verarbeitung (403) eine Abschätzung einer virtuellen Verbunduhr realisiert, berechnet mittels wenigstens eines Teils der verarbeiteten Informationen betreffend die Positionsbestimmungssignale, die von Quellen empfangen werden, welche zu einem kohärenten Netz von Quellen gehören, unabhängig davon, ob sie direkt von den Quellen empfangen werden oder von homologen mobilen Geräten übertragen werden.

13. Verfahren nach einem der Ansprüche 3 bis 12, **dadurch gekennzeichnet, dass** der Schritt der Verarbeitung (403) eine Hybridpositionierung mittels aller empfangener Positionsbestimmungssignale realisiert, unabhängig davon, ob sie direkt von den Quellen empfangen werden oder ob sie von homologen mobilen Geräten übertragen werden.

14. Verfahren nach einem der Ansprüche 3 bis 13, **dadurch gekennzeichnet, dass** der Schritt der Verarbeitung (403) eine Hybridabschätzung der Geschwindigkeit mittels aller empfangener Positionsbestimmungssignale realisiert, unabhängig davon, ob sie direkt von den Quellen empfangen werden oder ob sie von homologen mobilen Geräten (400) übertragen werden.

15. Verfahren nach einem der Ansprüche 3 bis 14, **dadurch gekennzeichnet, dass** die übertragenen Positionsbestimmungssignale (450) Informationen betreffend die Position und/oder die Geschwindigkeit und/oder die virtuelle Verbunduhr des mobilen Geräts tragen, berechnet durch den Schritt der Verarbeitung.

16. Verfahren nach einem der Ansprüche 3 bis 15, **dadurch gekennzeichnet, dass** der Schritt der Verarbeitung (403) die Präzisions- und Integritätsleistung seiner eigenen Abschätzung der berechneten Position und/oder Geschwindigkeit und/oder virtuellen Verbunduhr bewertet, wobei die Leistungsbewertung gemäß einem Zuverlässigkeitsindex erstellt wird, der zwischen homologen mobilen Geräten abgestimmt wird.

17. Verfahren nach Anspruch 16, **dadurch gekennzeichnet, dass** die übertragenen Positionsbestimmungssignale (450) die Informationen betreffend die Position und/oder Geschwindigkeit und/oder virtuelle Verbunduhr des mobilen Geräts, berechnet durch den Schritt der Verarbeitung, nur dann tragen, wenn die Leistungsbewertung oberhalb einer Schwelle ist, die mit den homologen mobilen Geräten abgestimmt ist.

18. Verfahren nach einem der Ansprüche 3 bis 17, **dadurch gekennzeichnet, dass** der Schritt der Verarbeitung (403) eine Abschätzung der Positionen und/oder Geschwindigkeiten der homologen mobilen Geräte bei Empfang von übertragenen Positionsbestimmungssignalen realisiert, die die homologen mobilen Geräte aussenden.

19. Verfahren nach Anspruch 18, **dadurch gekennzeichnet, dass** die übertragenen Positionsbestimmungssignale (550) die Informationen betreffend die Position der homologen mobilen Geräte (400) tragen, die durch den Schritt der Verarbeitung (403) berechnet werden.

20. Verfahren nach einem der Ansprüche 18 bis 19, **dadurch gekennzeichnet, dass** der Schritt der Verarbeitung (403) die Präzisions- und Integritätsleistung der Positionen und/oder Geschwindigkeiten der homologen mobilen Geräte bewertet, die er abschätzt, wobei die Leistungsbewertung gemäß einem Zuverlässigkeitsindex erstellt wird, der zwischen homologen mobilen Geräten abgestimmt wird.

21. Verfahren nach Anspruch 20, **dadurch gekennzeichnet, dass** die übertragenen Positionsbestimmungssignale (450) die Informationen betreffend die Position der homologen mobilen Geräte (400), berechnet durch den Schritt der Verarbeitung, nur dann tragen, wenn die Leistungsbewertung oberhalb einer Schwelle ist, die mit den homologen mobilen Geräten abgestimmt ist.

22. Verfahren nach einem der Ansprüche 3 bis 21, **dadurch gekennzeichnet, dass** der Schritt des Aussendens (405) das Aussenden der Position und/oder der Geschwindigkeit, berechnet während des Schritts der Verarbeitung, hin zu einer entfernten Einrichtung zur Datenspeicherung und -analyse umfasst.

23. Verfahren nach einem der Ansprüche 3 bis 22, **dadurch gekennzeichnet, dass** der Schritt des Aussendens (405) die Ultrabreitbandtechnik als Mittel zur Aussendung des übertragenen Positionsbestimmungssignals (450) verwendet.

24. Verfahren nach einem der Ansprüche 3 bis 23, **dadurch gekennzeichnet, dass** der Schritt des Aussendens (405) als Mittel zur Aussendung des übertragenen Positionsbestimmungssignals (450) ein sehr breites Frequenzband verwendet, typischerweise 100 MHZ in Bändern, die vorschriftsmäßig Satellitenradionavigationsdiensten, Luftfahrtradionavigationsdiensten oder Radiolokalisierungsdiensten zugewiesen sind.

25. System, umfassend wenigstens zwei homologe mobile Geräte (400) nach einem der Ansprüche 1 bis 2, das ein Positionsbestimmungsverfahren nach einem der Ansprüche 3 bis 24 ausführt.
